# EUROPEAN PATENT APPLICATION

(11) **EP 1 564 572 A1**
(43) Date of publication of application: **17.08.2005**
(21) Application number: 03770004.4
(22) Date of filing: 30.10.2003
(51) Int. Cl.: G02B 6/293, G02B 6/42

(54) **OPTICAL MULTIPLEXER/DEMULTIPLEXER AND PRODUCTION METHOD FOR OPTICAL MULTIPLEXER/DEMULTIPLEXER**

(30) Priority: 01.11.2002 JP 2002319771; 20.06.2003 JP 2003176000
(71) Applicant: Omron Corporation, Kyoto-shi, Kyoto 600-8530 (JP)
(72) Inventor: Furusawa, Koichi, Omron Corporation, Shimogyo-ku, Kyoto-shi, Kyoto 600-8530 (JP); Fukuda, Kazuki, Omron Corporation, Shimogyo-ku, Kyoto-shi, Kyoto 600-8530 (JP); Nakanishi, Yoichi, Omron Corporation, Shimogyo-ku, Kyoto-shi, Kyoto 600-8530 (JP); Ohnishi, Masayasu, Omron Corporation, Shimogyo-ku, Kyoto-shi, Kyoto 600-8530 (JP); Tanaka, Hirokazu, Omron Corporation, Shimogyo-ku, Kyoto-shi, Kyoto 600-8530 (JP); Onishi, Tetsuya, Omron Corporation, Shimogyo-ku, Kyoto-shi, Kyoto 600-8530 (JP); Yamamoto, Ryo, Omron Corporation, Shimogyo-ku, Kyoto-shi, Kyoto 600-8530 (JP); Yamase, Nobuki, Omron Corporation, Shimogyo-ku, Kyoto-shi, Kyoto 600-8530 (JP)
(74) Representative: Kilian, Helmut, Dr.
(86) International application number: PCT/JP2003/013899
(87) International publication number: WO 2004/040344

(57) **Abstract**

The present invention provides an optical multiplexer/demultiplexer which can demultiplex a multiplexed optical signal having a number of wavelength bands into respective wavelength regions, or multiplex light having respective wavelength regions in the field of optical communications. That is, light gained by multiplexing light having wavelengths λ1, λ2, λ3 and λ4 is emitted from an optical fiber (9a) and the optical axis thereof is bent by a micro lens (12a) of a micro lens array (14) so that the light is converted to parallel light which is then reflected from a mirror layer (19) so as to enter into a filter layer (17). A filter (17a) transmits only light having wavelength λ1, and light having other wavelengths is reflected and again reflected by the mirror layer (19) so as to enter into the filter layer (17). The optical axis of light that has transmitted through the filter (17a) is bent by a micro lens (12c) so that the light is coupled to an optical fiber (9c). Light having wavelength λ1, λ2, λ3 and λ4 is taken out from the light emitting ends of optical fibers (9c, 9d, 9e and 9f), respectively.

## Description

### Technical Field of the Invention

The present invention relates to a compact optical multiplexer/demultiplexer with multiple channels, and to a manufacturing method for such an optical multiplexer/demultiplexer.

### Background of the Invention

In recent years, optical communications that use optical fiber cables as a signal transmission medium have been developed up to a level where optical communications can be utilized in residential homes, and a communications network has been expanded. In the communication network, a wavelength multiplexing transmission system for multiplexing optical signals having different wavelengths so as to transmit the resulting signal through a single optical fiber is utilized. Together with this, it has been desired to miniaturize optical multiplexers/demultiplexers for multiplexing light having different wavelengths or for demultiplexing light of which the wavelength has been multiplexed into respective wavelengths, and to mass produce such optical multiplexers/demultiplexers at low cost.

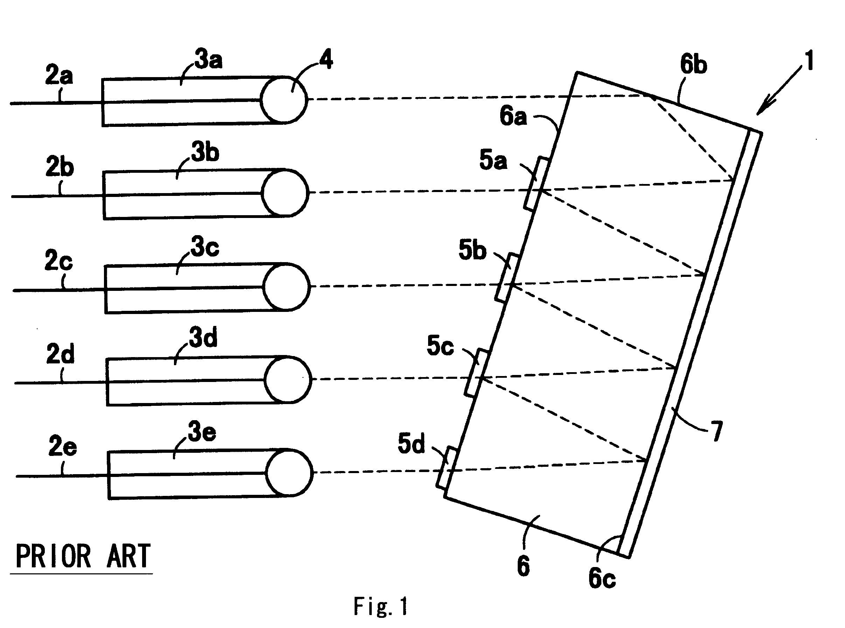

FIG. 1 is a schematic side diagram showing the configuration of an optical demultiplexer 1 according to the prior art (see Japanese Published Unexamined Patent Application S60-184215). Optical demultiplexer 1 shown in FIG. 1 is formed of five collimators 3a, 3b, 3c, 3d and 3e, where ball lenses 4 and optical fibers 2a, 2b, 2c, 2d and 2e are integrated and aligned in parallel, a glass body 6 having two surfaces 6a and 6c that are parallel to each other and a surface 6b that is perpendicular to these, interference film filters 5a, 5b, 5c and 5d which are placed in parallel on surface 6a of glass body 6 and transmit only light in bandwidths of particular wavelengths λ1, λ2, λ3 and λ4, respectively, and a reflective mirror 7 that is made to adhere to surface 6c of glass body 6.

In this optical demultiplexer 1, a light beam (light where wavelengths λ1, λ2, λ3 and λ4 have been multiplexed) that has been emitted from collimator 3a and has entered into glass body 6 is totally reflected from surface 6b of glass body 6, and furthermore, is totally reflected from surface 6c (reflective mirror 7) so as to enter into interference film filter 5a. Light having wavelength λ1 that has transmitted through this interference film filter 5a enters into collimator 3b, and therefore, light having wavelength λ1 can be taken out from the light emitting end of optical fiber 2b. In addition, light having wavelengths λ2, λ3 and λ4 that has been reflected from interference film filter 5a is furthermore totally reflected from reflective mirror 7, and enters into interference film filter 5b, so that light having wavelength λ2 that has transmitted through interference film filter 5b enters into collimator 3c. In the same manner, reflection is repeated by interference film filters 5a, 5b and 5c and reflective mirror 7 while demultiplexing is being carried out, and thereby, light having wavelengths λ1, λ2, λ3 and λ4 that has transmitted through interference film filters 5a, 5b, 5c and 5d can be taken out from the light emitting ends of optical fibers 2b, 2c, 2d and 2e, respectively.

In optical demultiplexer 1 shown in FIG. 1, however, light that has been emitted from collimator 3a must be made to enter diagonally into surface 6a of glass body 6, and therefore, the more the number of wavelengths to be demultiplexed (or the number of optical fibers) increases, the greater the distance between collimator 3a and surface 6a of the glass body becomes, and thus, a problem arises where optical demultiplexer 1 increases in size. In addition, the manufacturing process that includes setting of positions where collimators 3a to 3e and glass body 6 are installed, precise adhesion of a number of interference film filters 5a to 5d to glass body 6 one by one, and the formation of reflective mirror 7 on glass body 6 with high precision is complex, and therefore, efficiency in production cannot be increased, making it difficult to reduce cost.

### Disclosure of the Invention

An object of the present invention is to provide a compact and inexpensive optical multiplexer/demultiplexer of a multiple channel type for demultiplexing light into multiple wavelengths or wavelength bands, or for multiplexing light having multiple wavelengths or wavelength bands, as well as to provide a manufacturing method for the same.

In a first optical multiplexer/demultiplexer according to the present invention, plurality of wavelength selecting elements of which the transmission wavelength bands are different from each other and a light reflecting surface are made to face each other, and thereby, an optical guiding means for guiding light by making light being reflected between the light reflecting surface and the respective wavelength selecting elements and for multiplexing or demultiplexing light having different wavelengths is formed; a transmission means for transmitting light having plurality of wavelengths is coupled to light having plurality of wavelengths or wavelength bands that are guided within the above-described optical guiding means; plurality of light inputting/outputting means are placed on the same side as the above-described transmission means relative to the above-described optical guidingmeans in a manner where the direction of the optical axis becomes approximately perpendicular to the direction in which the above-described wavelength selecting elements are aligned; and a deflection element for converting the direction of the optical axis of light that has transmitted through each of the above-described wavelength selecting elements into one that is parallel to the direction of the optical axis of the respective light inputting/outputting means, or for converting light that is parallel to the direction of the optical axis of each of the light inputting/outputting means into the direction of the optical axis of light that transmits through each of the above-described wavelength selecting elements is provided between each of the light inputting/outputting means and each of the above-described wavelength selecting elements.

Here, an optical fiber or an optical wave guide, for example, can be used as the transmission means. In addition, an optical fiber, an optical wave guide, a light emitting element, such as a semiconductor laser element, a light receiving element, such as a photodiode, or the like is used as the light inputting/outputting means. A filter, a diffraction element, such as a diffraction grating or a CGH element, or the like can be used for the wavelength selecting elements. In addition, the deflection elements may be formed of lenses which are not rotationally symmetrical around their center axes, spherical lenses, aspherical lenses or anamorphic lenses where the centers in the cross sections of transmitting light fluxes are shifted from the optical axes of these, or may be formed of prisms and lenses or mirrors and lenses. Here, in this specification, the direction of the optical axis of light means the direction in which light progresses passing through the center of the cross section of light flux.

In the first optical multiplexer/demultiplexer according to the present invention, the deflection element that is provided between each of the light inputting and outputting means and each of the wavelength selecting elements is used to convert the optical axis of light that transmits through each wavelength selecting element into the optical axis of each light inputting and outputting means, or to convert the optical axis of each light inputting and outputting means into the optical axis of light that passes through each wavelength selecting element, and therefore, the plurality of light inputting and outputting means can be placed on the same side as the transmission means relative to the optical guiding means in a manner where the direction of the optical axis of the light inputting and outputting means becomes approximately perpendicular to the direction in which wavelength selecting elements are aligned. Accordingly, even in the case where plurality of the wavelengths or wavelength bands to be demultiplexed or multiplexed by the optical multiplexer/demultiplexer increases, the optical multiplexer/demultiplexer does not easily increase in size.

In an embodiment of the first optical multiplexer/demultiplexer according to the present invention, an antireflection film is provided in the middle of the light path between the above-described transmission means and the above-described optical guiding means. Accordingly, at the time when the optical multiplexer/demultiplexer is used as a demultiplexer, loss of light that has been emitted from the transmission means due to reflection from the surface of the above-described optical guiding means can be reduced. This antireflection film may be placed in parallel to each of the above-described wavelength selecting elements in a manner where the surface of the antireflection film and the surface of each of the above-described wavelength selecting elements are in the same plane, or may be placed so as to overlap the filter.

A second optical multiplexer/demultiplexer according to the present invention is provided with: an optical guiding means which is made of a light reflecting surface and plurality of wavelength selecting elements which are aligned in a plane that is parallel to the light reflecting surface, and of which the transmission wavelength bands are different from each other, which guides light by making light be reflected between the light reflecting surface and the respective wavelength selecting elements, and which multiplexes or demultiplexes light having different wavelengths; an optical fiber array where a first optical fiber for transmitting light having plurality of wavelengths or wavelength bands and plurality of second optical fibers for transmitting light having particular wavelengths or wavelength bands are aligned in a manner where the optical axis of each optical fiber becomes approximately perpendicular to the plane in which the above-described wavelength selecting elements are aligned; and one or more deflection element for bending the direction of the optical axis of transmitting light, which are placed so as to face the above-described first and second optical fibers, wherein the above-described first optical fiber is coupled to light having plurality of wavelengths that diagonally enters into or is emitted from the above-described optical guiding means via the above-described deflection element, and the above-described second optical fibers are respectively coupled to light having respective wavelengths that diagonally enters into or is emitted from the above-described optical guiding means via the above-described deflection elements.

Here, a filter, a diffraction element, such as a diffraction grating or a CGH element, or the like can be used for the wavelength selecting elements. In addition, the deflection elements may be formed of lenses which are not rotationally symmetrical around their center axes, spherical lenses, aspherical lenses or anamorphic lenses where the center in the cross section of light flux that transmits through these is shifted from the optical axes of these, or may be formed of prisms and lenses or mirrors and lenses.

In the second optical multiplexer/demultiplexer according to the present invention, light having plurality of wavelengths is transmitted through the first optical fiber so as to enter into a deflection element, and the direction of the optical axis of light is bent in the deflection element so that light is diagonally emitted to the optical guiding means, and then, light having respective wavelengths that has transmitted through the wavelength selecting elements while the light is being reflected from the wavelength selecting elements and the light reflecting surface of the above-described optical guiding means is made to enter into each of the above-described deflection elements, and light having different wavelengths that has transmitted through the deflection elements is made to enter into the respective second optical fibers so as to be transmitted, and thereby, demultiplexed light can be taken out.

In addition, when the second optical multiplexer/demultiplexer according to the present invention is used as a multiplexer, light having different wavelengths is transmitted respectively through the above-described second optical fibers so as to enter into the above-described deflection elements, and the light that has transmitted through the deflection elements are made to diagonally enter into the optical guiding means, where the light is multiplexed while being reflected from the light reflecting surface and the wavelength selecting elements, and then, the multiplexed light is transmitted through the above-described deflection elements so as to be bent and made to enter into the first optical fiber, and thereby, the multiplexed light can be taken out from the first optical fiber.

The second optical multiplexer/demultiplexer according to the present invention is provided with an optical fiber array where first and second optical fibers are aligned in parallel, where the optical axis of the first optical fiber, in addition to those of the second optical fibers, are placed parallel to the above-described wavelength selecting elements, and therefore, the optical multiplexer/demultiplexer can further be miniaturized.

The above-described deflection element of the second optical multiplexer/demultiplexer according to an embodiment of the present invention is joined to and integrated with an end of the above-described optical fiber array. In the case where the deflection element has been integrated in advance with the optical fiber array, as described above, the assembly of the optical multiplexer/demultiplexer becomes easy.

In another embodiment of the second optical multiplexer/demultiplexer according to the present invention, the above-described optical guiding means, the above-described deflection element and the above-described optical fiber array are contained within a case so as to be sealed. In the case where the optical multiplexer/demultiplexer is contained within a case and sealed as described above, the wavelength selecting elements, which are, for example, filters, can be protected particularly from humidity, and thus, durability is increased.

A third optical multiplexer/demultiplexer according to the present invention is provided with: an optical guiding means which is made of a light reflecting surface and plurality of wavelength selecting elements which are aligned in a plane that is parallel to the light reflecting surface, and of which the transmission wavelength bands are different from each other, which guides light by making light be reflected between the light reflecting surface and the respective wavelength selecting elements, and which multiplexes or demultiplexes light having different wavelengths; a transmission means for transmitting light having plurality of wavelengths of which the optical axis is placed so as to be approximately perpendicular to the plane in which the above-described wavelength selecting elements are aligned; plurality of light emitting elements for respectively outputting light having particular wavelengths of which the optical axes are placed so as to be approximately perpendicular to the plane in which the above-described wavelength selecting elements are aligned; and one or more deflection element for bending the direction of the optical axis of transmitting light which is placed so as to face the above-described transmission means and the above-described light emitting elements, wherein the above-described transmission means is coupled to light having plurality of wavelengths that is diagonally emitted from the above-described optical guiding means via the above-described deflection element, and the above-described light emitting elements emit light having respective wavelengths via the above-described deflection element so that light diagonally enters into the above-described optical guiding means.

Here, an optical fiber or an optical wave guide, for example, can be used as the transmission means. A filter, a diffraction element, such as a diffraction grating or a CGH element, or the like can be used for the wavelength selecting elements. In addition, the deflection elements may be formed of lenses which are not rotationally symmetrical around their center axes or rectilinear lenses where the center in the cross section of light flux that transmits through these is shifted from the optical axes of these, or may be formed of prisms and lenses or mirrors and lenses.

In the third optical multiplexer/demultiplexer according to the present invention, light having different wavelengths is emitted from the light emitting element so as to enter into the above-described deflection element and the light that has transmitted through this deflection element and that has been bent is made to diagonally enter into the optical guiding means where the light is reflected from the light reflecting surface and the wavelength selecting elements while the light is multiplexed and this multiplexed light is made to transmit through the above-described deflection element so as to be bent and be made to enter the transmission means and the multiplexed light can be taken out from the transmission means.

In the third optical multiplexer/demultiplexer according to the present invention, the transmission means and the respective light emitting elements can be aligned in parallel, and therefore, the optical axis of the transmission means in addition to the light emitting elements can be placed perpendicular to the above-described wavelength selecting elements and thus, the optical multiplexer/demultiplexer can miniaturized.

A fourth optical multiplexer/demultiplexer according to the present invention is provided with: an optical guiding means which is made of a light reflecting surface and plurality of wavelength selecting elements which are aligned in a plane that is parallel to the light reflecting surface, and of which the transmission wavelengths are different from each other, which guides light by making light be reflected between the light reflecting surface and the respective wavelength selecting elements, and which multiplexes or demultiplexes light having different wavelengths; a transmission means for transmitting light having plurality of wavelengths of which the optical axis is placed so as to be approximately perpendicular to the plane in which the above-described wavelength selecting elements are aligned; plurality of light receiving elements of which the optical axes are placed so as to be approximately perpendicular to the plane in which the above-described wavelength selecting elements are aligned; and one or more deflection element for bending the direction of the optical axis of transmitting light which is placed so as to face the above-described transmission means and the above-described light receiving element, wherein the above-described transmission means is coupled to light having plurality of wavelengths that diagonally enters into the above-described optical guiding means via the above-described deflection element and the above-described light receiving elements respectively receive light having respective wavelengths that is diagonally emitted from the above-described optical guiding means via the above-described deflection element.

Here, an optical fiber or an optical wave guide, for example, can be used as the transmission means. A filter, a diffraction element, such as a diffraction grating or a CGH element, or the like can be used for the wavelength selecting elements. In addition, the deflection elements may be formed of lenses which are not rotationally symmetrical around their center axes or rectilinear lenses where the center in the cross section of light flux that transmits through these is shifted from the optical axes of these, or may be formed of prisms and lenses or mirrors and lenses.

In the fourth optical multiplexer/demultiplexer according to the present invention, light having plurality of wavelengths is transmitted through the above-described transmission means so as to enter into the above-described deflection element and the light is bent by the deflection element so as to be diagonally emitted toward the optical guiding means, and then, light having each wavelength that has transmitted through the wavelength selecting elements is demultiplexed while the light is made to be reflected from the wavelength selecting elements and the light reflecting surface of the above-described optical guiding means so that the light having each wavelength enters into the deflection element so as to be bent and the light that has transmitted through the deflection element is received by the respective light receiving elements so as to be transmitted, and thereby, the demultiplexed light can be taken out.

In the fourth optical multiplexer/demultiplexer according to the present invention, the above-described transmission means and the light receiving elements can be aligned in parallel, and therefore, the optical axis of the transmission means in addition to the above-described light receiving elements can be placed so as to be perpendicular to the above-described wavelength selecting elements, and thus, the optical multiplexer/demultiplexer can be miniaturized.

A fifth optical multiplexer/demultiplexer according to the present invention is provided with: an optical guiding means which is made of a light reflecting surface and plurality of wavelength selecting elements which are aligned in a plane that is parallel to the light reflecting surface, and of which the transmission wavelengths are different from each other, which guides light by making light be reflected between the light reflecting surface and the respective wavelength selecting elements and which multiplexes or demultiplexes light having different wavelengths; plurality of light inputting means of which the optical axes are placed so as to be approximately perpendicular to the plane in which the above-described wavelength selecting elements are aligned; a first transmission means for transmitting light having plurality of wavelengths which is placed in the direction in which the above-described wavelength selecting elements are aligned together with the above-described light inputting means in a manner where the optical axis becomes approximately perpendicular to the plane in which the above-described wavelength selecting elements are aligned; plurality of light outputtingmeans of which the optical axes are placed so as to be approximately perpendicular to the plane in which the above-described wavelength selecting elements are aligned; a second transmission means for transmitting light having plurality of wavelengths which is placed in the direction in which the above-described wavelength selecting elements are aligned together with the above-described light outputting means in a manner where the optical axis becomes approximately perpendicular to the plane in which the above-described wavelength selecting elements are aligned and becomes approximately parallel to the direction in which the above-described light inputting means and the above-described first transmission means are aligned; one or more first deflection element for bending the direction of the optical axis of transmitting light which is placed so as to face the above-described light inputting means and the above-described first transmissionmeans; and one or more second deflection element for bending the direction of the optical axis of transmitting light which is placed so as to face the above-described light outputting means and the above-described second transmission means, wherein the above-described light inputting means emits light having each wavelength from among light having plurality of wavelengths via the above-described deflection element so that the light diagonally enters into the above-described optical guiding means and the above-described first transmission means is coupled to the above-described light having plurality of wavelengths that is diagonally emitted from the above-described optical guiding means via the above-described deflection element, and the above-described second transmission means is coupled to another light having plurality of wavelengths that diagonally enters into the above-described optical guiding means via the above-described second deflection element and the above-described light outputting means receives light having each wavelength from among the above-described other light having plurality of wavelengths that is diagonally emitted from the above-described optical guiding means via the above-described second deflection element.

Here, an optical fiber or an optical wave guide, for example, can be used as the transmission means. An optical fiber, a semiconductor laser element, or the like, can be used as the light inputting means. An optical fiber, a photodiode, or the like, can be used as the light outputting means. A filter, a diffraction element, such as a diffraction grating or a CGH element, or the like can be used for the wavelength selecting elements. In addition, the deflection elements may be formed of lenses which are not rotationally symmetrical around their center axes or rectilinear lenses where the center in the cross section of light flux that transmits through these is shifted from the optical axes of these, or may be formed of prisms and lenses or mirrors and lenses.

In the fifth optical multiplexer/demultiplexer according to the present invention, light that has been emitted from the above-described respective light inputting means is bent by the first deflection element so as to diagonally enter the optical guiding means and light having plurality of wavelengths that has been multiplexed by the optical guiding means is diagonally emitted from the optical guiding means, and then, light having plurality of wavelengths that has been emitted from the optical guiding means is bent by the first deflection element so as to be coupled to the first transmission means so that the multiplexed light having plurality of wavelengths can be transmitted through the first transmission means. In addition, light having plurality of wavelengths that has been transmitted through the second transmission means is emitted from the second transmission means and this light is bent by the second deflection element so as to diagonally enter into the optical guiding means, and then, light having each wavelength that has been demultiplexed by the optical guiding means is diagonally emitted from the optical guiding means and light having each wavelength that has been emitted from the optical guiding means is bent by the second deflection element so as to be received by the respective light outputting means.

In the fifth optical multiplexer/demultiplexer according to the present invention, the light inputting means, the light outputting means and the first and second transmission means can be aligned in parallel and therefore, the respective optical axes of the light inputting means, the light outputting means and the first and second transmission means can be placed so as to be perpendicular to the above-described wavelength selecting elements, and thus, the optical multiplexer/demultiplexer can be miniaturized. In addition, in this optical multiplexer/demultiplexer the same wavelength selecting elements can be used on both the multiplexing side and on the demultiplexing side, and therefore, the structure of the optical multiplexer/demultiplexer can be simplified and the manufacturing process thereof can also be simplified.

In an embodiment of the fifth optical multiplexer/demultiplexer according to the present invention, the above-described light having plurality of wavelengths and the above-described other light having plurality of wavelengths are light having plurality of same wavelengths, and the lengths of the light paths of the above-described light having plurality of wavelengths between the above-described second transmission means and the above-described light outputting means becomes shorter sequentially in the order from longest to shortest of the lengths of light paths between the above-described first transmission means and the above-described light inputting means. In such an embodiment, when the first transmission means, which is one optical transmission means, and the second means, which is the other optical transmission means, are connected, and thereby, the two optical multiplexers/demultiplexers are connected in a manner where the second transmission means, which is one optical transmission means, and the first transmission means, which is the other optical transmission means, are connected, the length of the light path (transmission distance) between the two optical multiplexers/demultiplexers is equalized, irrespective of the wavelength of light, and therefore, it becomes difficult for dispersion to be caused in the insertion loss due to a difference in the wavelength.

A sixth optical multiplexer/demultiplexer according to the present invention is provided with: an optical guiding means which is made of a light reflecting surface, plurality of first wavelength selecting elements which are aligned in a plane that is parallel to the light reflecting surface, and of which the transmission wavelengths are different from each other and plurality of second wavelength selecting elements which are aligned in a plane that is parallel to the light reflecting surface, and of which the transmission wavelengths are different from each other, which guides light by making the light be reflected between the light reflecting surface and the respective first wavelength selecting elements and multiplexes light having different wavelengths and which guides light by making the light be reflected between the light reflecting surface and the respective second wavelength selecting elements and demultiplexes light having different wavelengths; a transmission means for transmitting light having plurality of wavelengths; plurality of light inputting means which are placed in the direction in which the above-described first wavelength selecting elements are aligned in a manner wherein the optical axes become approximately perpendicular to the plane where the above-described first wavelength selecting elements are aligned; plurality of light inputting means which are placed in the direction in which the above-described second wavelength selecting elements are aligned in a manner wherein the optical axes become approximately perpendicular to the plane where the above-described second wavelength selecting elements are aligned; one or more first deflection element for bending the direction of the optical axis of transmitting light which is placed so as to face the above-described light inputting means; one or more second deflection element for bending the direction of the optical axis of transmitting light which is placed so as to face the above-described light outputting means; and a light branching means which guides light having plurality of wavelengths that has been multiplexed between the light reflecting surface of the above-described optical guiding means and the first wavelength selecting elements to the above-described transmission means so that the light is coupled to the above-described transmission means and which guides another light having plurality of wavelengths that has been transmitted through the above-described transmission means in between the light reflecting surface of the above-described optical guiding means and the second wavelength selecting elements, wherein the above-described light inputting means respectively emit light having each wavelength from among light having plurality of wavelengths via the above-described first deflection element so that the light diagonally enters into the first wavelength selecting elements of the above-described optical guiding means, and the above-described light outputting means respectively receive light having each wavelength from among another light having plurality of wavelengths that has been diagonally emitted from the second wavelength selecting elements of the above-described optical guiding means via the above-described second deflection element.

Here, an optical fiber or an optical wave guide, for example, can be used as the transmission means. An optical fiber, a semiconductor laser element, or the like, can be used as the light inputting means. An optical fiber, a photodiode, or the like, can be used as the light outputting means. A filter, a diffraction element, such as a diffraction grating or a CGH element, or the like can be used for the wavelength selecting elements. In addition, the deflection elements may be formed of lenses which are not rotationally symmetrical around their center axes or rectilinear lenses where the center in the cross section of light flux that transmits through these is shifted from the optical axes of these, or may be formed of prisms and lenses or mirrors and lenses.

In the sixth optical multiplexer/demultiplexer according to the present invention, light that has been emitted from the above-described respective light inputting means is bent by the first deflection element so as to diagonally enter into the optical guiding means, the first wavelength selecting element emits light having plurality of wavelengths that has been multiplexed by the optical guiding means diagonally from the optical guiding means, and the light having plurality of wavelengths that has been emitted from the optical guiding means is bent by the first deflection element so as to be coupled to the transmission means, and thus, the multiplexed light having plurality of wavelengths can be transmitted through the transmission means. In addition, light having plurality of wavelengths that has been transmitted through the transmission means is emitted from the transmission means, this light is bent by the second deflection element so as to diagonally enter into the optical guiding means, and the second wavelength selecting element emits light having each wavelength that has been demultiplexed by the optical guiding means diagonally from the optical guiding means, and thus, the light having each wavelength that has been emitted from the optical guiding means can be bent by the second deflection element so as to be received by the respective light outputting means.

In the sixth optical multiplexer/demultiplexer according to the present invention, the light inputting means, the light outputting means and the transmission means can be aligned in parallel, and therefore, the respective optical axes of the light inputting means, the light outputting means and the transmission means can be placed perpendicular to the above-described wavelength selecting elements, and the optical multiplexer/demultiplexer can be miniaturized. In addition, this optical multiplexer/demultiplexer can transmit and receive an optical signal through a single transmission means, and therefore, work at the time when the two optical multiplexers/demultiplexers are connected is simplified.

In an embodiment of the sixth optical multiplexer/demultiplexer according to the present invention, the above-described light branching means is provided with: a filter for multiplexing and demultiplexing the above-described light having plurality of wavelengths that is sent from the above-described transmission means and the above-described other light having plurality of wavelengths that is sent from the above-described transmission means; and at least one light transferring means of a light transferring means such as an optical fiber, a core, a prism or a mirror for guiding light having plurality of wavelengths that has been multiplexed between the light reflecting surface of the above-described optical guiding means and the first wavelength selecting elements to the above-described transmission means, and a light transferring means such as an optical fiber, a core, a prism or a mirror for guiding the above-described other light having plurality of wavelengths that has been separated by the above-described filter to the second wavelength selecting elements of the optical guiding means. In such an embodiment, an optical signal that is transmitted and received through a transmission means is separated by a filter, and after that, at least one of the separated optical signals can be guided to a desired place by using an optical transmission means, such as an optical fiber, a core, a prism or a mirror, and therefore, it becomes easily possible to use a single transmission means.

In another embodiment of the sixth optical multiplexer/demultiplexer according to the present invention, the above-described transmission means may be formed of an optical fiber, the above-described light inputting means may be formed of light emitting elements and the above-described light outputtingmeans maybe formed of light receiving elements. In such an embodiment, a transponder into which a light emitting element and a light receiving element are built in can be manufactured.

A seventh optical multiplexer/demultiplexer according to the present invention is provided with: an optical guiding means which is made of a light reflecting surface and plurality of first wavelength selecting elements which are aligned in a plane that is parallel to the light reflecting surface, and of which the transmission wavelengths are different from each other, which guides light by making light be reflected between the light reflecting surface and the respective first wavelength selecting elements and which multiplexes light having different wavelengths; an optical guiding plate which is placed so as to face the surface of the above-described optical guiding means on the side opposite the light reflecting surface and so as to become approximately parallel to the above-described first wavelength selecting elements; a transmission means for transmitting light having plurality of wavelengths; plurality of light emitting elements which are placed on the above-described optical guiding plate in the direction in which the above-described first wavelength selecting elements are aligned in a manner where the optical axes of the light emitting elements are directed in the direction approximately perpendicular to the above-described optical guiding plate; a light receiving element which is placed on the above-described optical guiding plate in a manner where the optical axis of the light receiving element is directed in the direction approximately perpendicular to the above-described optical guiding plate; one or more deflection element for bending the direction of the optical axis of transmitting light which is placed so as to face the above-described light emitting elements; plurality of second wavelength selecting elements which are provided between the above-described light receiving element and the above-described optical guiding plate and of which the transmission wavelengths are different from each other; and a light branching means which guides light having plurality of wavelengths that has been multiplexed between the light reflecting surface of the above-described optical guiding means and the wavelength selecting elements to the above-described transmission means so that the light is coupled to the above-described transmission means and which guides another light having plurality of wavelengths that has been transmitted through the above-described transmission means to the above-described optical guiding plate, wherein the above-described light emitting elements respectively emit light of each wavelength from among light having plurality of wavelengths via the above-described first deflection element so that the light diagonally enters into the first wavelength selecting elements of the above-described optical guiding means, and the above-described light outputting means respectively receive light having each wavelength from among another light having plurality of wavelengths that has been guided within the above-described optical guiding plate via the above-described second deflection element.

Here, an optical fiber or an optical wave guide, for example, can be used as the transmission means. A filter, a diffraction element, such as a diffraction grating or a CGH element, or the like can be used for the wavelength selecting elements. In addition, the deflection elements may be formed of lenses which are not rotationally symmetrical around their center axes or rectilinear lenses where the center in the cross section of light flux that transmits through these is shifted from the optical axes of these, or may be formed of prisms and lenses or mirrors and lenses.

In the seventh optical multiplexer/demultiplexer according to the present invention, light that has been emitted from the light emitting element is bent by the deflection element so as to diagonally enter into the optical guiding means, the first wavelength selecting element emits light having plurality of wavelengths that has been multiplexed by the optical guiding means diagonally from the optical guiding means, and the light having plurality of the wavelengths that has been emitted from the optical guiding means is coupled to the transmission means, and thus, the multiplexed light having plurality of the wavelengths can be transmitted through the transmission means. In addition, light having plurality of wavelengths that has been transmitted through the transmission means is outputted from the transmission means, this light is separated by the light branching means so as to be guided into the optical guiding plate, and light having each wavelength is demultiplexed by the second wavelength selecting element so as to be emitted from the optical guiding plate, and thus, the light having each wavelength that has been emitted from the optical guiding plate can be received by the light receiving element.

In the seventh optical multiplexer/demultiplexer according to the present invention, the light inputting means and the light outputting means can be aligned on the optical guiding plate perpendicular to the optical guiding plate, and in addition, this optical multiplexer/demultiplexer guides light to the light receiving element by using the optical guiding plate, and therefore, the optical multiplexer/demultiplexer can be miniaturized.

The above-described optical guiding means in embodiments of the first to seventh optical multiplexers/demultiplexers according to the present invention has the above-described respective wavelength selecting elements formed on the front surface of a transparent substrate and the above-described light reflecting surface formed on the rear surface of the above-described transparent substrate. In such an embodiment, the substrate that is used in the above-described optical guiding means is made of only one layer (one piece), and therefore, the optical guiding means can be made thin and the optical multiplexer/demultiplexer can be miniaturized.

The above-described optical guiding means in other embodiments of the first to seventh optical multiplexers/demultiplexers according to the present invention has a transparent second substrate where the above-described plurality of wavelength selecting elements are aligned on the front surface joined to a transparent first substrate where the above-described light reflecting surface is formed on the rear surface. In such an embodiment, the first substrate and the second substrate are separately manufactured and joined by making the two adhere to each other with a transparent adhesive or the like, and therefore, the manufacture of the optical guiding means of the optical multiplexer/demultiplexer becomes easy.

The above-described optical guiding means in still other embodiments of the first to seventh optical multiplexers/demultiplexers according to the present invention has plurality of transparent second substrates where the above-describedwavelength selecting elements are individually formed on the respective front surfaces aligned on and joined to a transparent first substrate where the above-described light reflecting surface is formed on the rear surface. As described, in such an embodiment, in the case where second substrates on the surfaces of which wavelength selecting elements for respectively transmitting particular wavelengths or wavelength bands are formed are aligned for the transmission wavelengths and joined to the first substrate by making them adhere to the first substrate with a transparent adhesive or the like, the manufacturing process for the optical guiding means of the optical multiplexer/demultiplexer becomes easy.

The above-described optical guiding means in yet other embodiments of the first to seventh optical multiplexers/demultiplexers according to the present invention has the above-described plurality of wavelength selecting elements formed between a pair of transparent substrates that overlap and has the above-described light reflecting surface formed on the rear surface of the substrate that is located on the rear surface side of the above-described substrates. In such an embodiment, the thicknesses of the two transparent substrates are adjusted, and thereby, the intervals between the first optical fiber and the second optical fibers, the intervals between the second optical fibers, the intervals between the transmission means and the light emitting elements, the intervals between the light emitting elements, the intervals between the transmission means and the light receiving elements, and the intervals between the light receiving elements can be adjusted, and therefore, the light path within the optical guiding means of the optical multiplexer/demultiplexer can be designed with precision.

In still yet other embodiments of the first to seventh optical multiplexers/demultiplexers according to the present invention, the surface of the above-described optical guiding means, on which the above-described wavelength selecting elements are formed, and the above-described deflection element are made to face each other with a spacer intervening between the above-described optical guiding means and the above-described deflection element. In such an embodiment, the distance between the deflection element and the light reflecting surface can be maintained constant only by making a spacer having a constant thickness intervene between the two, and therefore, time and labor for adjusting the intervals between the deflection element and the transmission means, as well as between the deflection element and the light inputting/outputting means can be saved, making the manufacture of the optical multiplexer/demultiplexer easy. In addition, in the case where the spacer is formed so as to be integrated with the above-described deflection element, the positional precision of the wavelength selecting elements and the deflection element in the direction of the height can further be increased.

In other embodiments of the first to seventh optical multiplexers/demultiplexers according to the present invention, the surfaces of the above-described respective wavelength selecting elements are coated with a protective layer. Change in the properties of the wavelength selecting elements of the filter or the like due to humidity, scratching and adhesion of dirt can be prevented by means of coating with the protective layer.

An eighth optical multiplexer/demultiplexer according to the present invention is provided with: an optical guiding means which is made of a light reflecting surface that is formed between a pair of transparent substrates and plurality of wavelength selecting elements which are aligned on the outer surfaces of the two transparent substrates and of which the transmission wavelengths are different from each other, and which guides light within the respective transparent substrates by making light be reflected between the light reflecting surface and the respective wavelength selecting elements; a transmission means for transmitting light having plurality of wavelengths or wavelength bands which is placed in a manner where the optical axis becomes approximately perpendicular to the plane in which the above-described wavelength selecting elements on one transparent substrate of the above-described pair of transparent substrates are aligned; plurality of first light inputting/outputting means which are placed on the same side as the above-described transmission means relative to the above-described optical guiding means in a manner where the optical axis becomes approximately perpendicular to the plane in which the above-described wavelength selecting elements on the above-described one transparent substrate are aligned; plurality of second light inputting/outputting means which are placed on the side opposite the above-described transmission means relative to the above-described optical guiding means in a manner where the optical axis becomes approximately perpendicular to the plane in which the above-described wavelength selecting elements on the other transparent substrate are aligned; one or more first deflection element for bending the direction of the optical axis of transmitting light which is placed so as to face the above-described transmission means and the above-described first light inputting/outputting means; and one or more second deflection element for bending the direction of the optical axis of transmitting light which is placed so as to face the above-described second light inputting/outputting means, wherein the above-described transmission means is coupled to light having plurality of wavelengths within the two transparent substrates of the above-described optical guiding means via the above-described first deflection element, the above-described first light inputting/outputting means is coupled to light that transmits the respective wavelength selecting elements which are aligned on one surface of the above-described optical guiding means via the above-described first deflection element, and the above-described second light inputting/outputting means is coupled to light that transmits the respective wavelength selecting elements which are aligned on the other surface of the above-described optical guiding means via the above-described second deflection element.

Here, an optical fiber or an optical wave guide, for example, can be used as the transmission means. An optical fiber, an optical transmission path, a semiconductor laser element, a photodiode, or the like, can be used as the light inputting/outputting means. A filter, a diffraction element, such as a diffraction grating or a CGH element, or the like can be used for the wavelength selecting elements. In addition, the deflection elements may be formed of lenses which are not rotationally symmetrical around their center axes or rectilinear lenses where the center in the cross section of light flux that transmits through these is shifted from the optical axes of these, or may be formed of prisms and lenses or mirrors and lenses.

In the eighth optical multiplexer/demultiplexer according to the present invention, the optical multiplexer/demultiplexer is provided with a structure where two optical multiplexers/demultiplexers according to the present invention are placed so as to face each other in a manner where they share the light reflecting surface. This optical multiplexer/demultiplexer can be provided as a compact optical multiplexer/demultiplexer even in the case where plurality of the wavelengths or wavelength bands of light to be demultiplexed or multiplexed increases.

A ninth optical multiplexer/demultiplexer according to the present invention is provided with: an optical guiding means which is made of a light reflecting surface that is formed between a pair of transparent substrates and plurality of wavelength selecting elements which are aligned on the outer surfaces of the two transparent substrates and of which the transmission wavelengths are different from each other, and which guides light within the respective transparent substrates by making light be reflected between the light reflecting surface and the respective wavelength selecting elements; a first optical fiber array where a first optical fiber for transmitting light having plurality of wavelengths or wavelength bands and plurality of second optical fibers for transmitting light having particular wavelengths or wavelength bands are aligned and which is placed in a manner where the optical axis of each optical fiber becomes approximately perpendicular to the plane in which the above-described wavelength selecting elements on one transparent substrate of the above-described pair of transparent substrates are aligned; a second optical fiber array where plurality of third optical fibers for transmitting light having particular wavelengths or wavelength bands are aligned and which is placed in a manner where the optical axis of each optical fiber becomes approximately perpendicular to the plane in which the above-described wavelength selecting elements on the other transparent substrate are aligned; one or more first deflection element for bending the direction of the optical axis of transmitting light which is placed so as to face the above-described first optical fiber and the above-described second optical fibers; and one or more second deflection element for bending the direction of the optical axis of transmitting light which is placed so as to face the above-described third optical fibers, wherein the above-described first optical fiber is coupled to light having plurality of wavelengths within the two transparent substrates of the above-described optical guiding means via the above-described first deflection element, the above-described second optical fibers are coupled to light that transmits the respective wavelength selecting elements which are aligned on one surface of the above-described optical guiding means via the above-described first deflection element, and the above-described third optical fibers are coupled to light that transmits the respective wavelength selecting elements which are aligned on the other surface of the above-described optical guiding means via the above-described second deflection element.

Here, a filter, a diffraction element, such as a diffraction grating or a CGH element, or the like can be used for the wavelength selecting elements. In addition, the deflection elements may be formed of lenses which are not rotationally symmetrical around their center axes or rectilinear lenses where the center in the cross section of light flux that transmits through these is shifted from the optical axes of these, or may be formed of prisms and lenses or mirrors and lenses.

In the ninth optical multiplexer/demultiplexer according to the present invention, the optical multiplexer/demultiplexer is provided with a structure where two optical multiplexers/demultiplexers according to the present invention are placed so as to face each other in a manner where they share the light reflecting surface, and optical signals can be put into or taken out from the optical fibers on both sides. Such an optical multiplexer/demultiplexer can be provided as a compact optical multiplexer/demultiplexer even in the case where plurality of the wavelengths or wavelength bands of light to be demultiplexed or multiplexed increases.

The above-described deflection elements in embodiments of the first to ninth optical multiplexers/demultiplexers according to the present invention are formed of lenses which are not rotationally symmetrical around their center axes. In the case where such a deflection element is used, the direction of the optical axis of light can be bent only by the lenses, and in addition, the region where the lenses are provided can be made to agree with the light flux that enters, and thus, the region where the lenses are installed can be made small.

In addition, the above-described deflection elements in other embodiments of the first to ninth optical multiplexers/demultiplexers according to the present invention are formed of spherical lenses, aspherical lenses or anamorphic lenses where the centers in the cross sections of transmitting light fluxes are shifted from their optical axes. In the case where such a deflection element is used, light can be bent by using inexpensive lenses.

The above-described deflection elements in still other embodiments of the first to ninth optical multiplexers/demultiplexers according to the present invention maybe formed of prisms and lenses. In such a deflection element, inexpensive lenses, such as spherical lenses, aspherical lenses or anamorphic lenses, can be used as the lenses. Here, in the case where these prisms are formed on one surface of a transparent substrate and the lenses are provided on the other surface of the transparent substrate so as to face the prisms, it becomes unnecessary to position the lenses and prisms, and plurality of the parts can be reduced. In addition, these prisms may be formed on and integrated with a surface of the optical guiding means and the lenses may be placed so as to face the prisms. In this case, plurality of the parts can be reduced by integrating the prisms with the optical guiding means.

In yet other embodiments of the first to ninth optical multiplexers/demultiplexers according to the present invention, filters or diffraction elements may be used as the above-described wavelength selecting elements. Multilayer reflective films or the like are desirable as the filters and diffraction gratings, CGH elements, or the like, can be used as the diffraction elements.

A first manufacturing method for an optical multiplexer/demultiplexer according to the present invention is a manufacturing method for an optical multiplexer/demultiplexer that comprises an optical guiding means which is made of a light reflecting surface and plurality of wavelength selecting elements which are aligned in a plane that is parallel to the light reflecting surface, and of which the transmission wavelengths are different from each other, which guides light by making the light be reflected between the light reflecting surface and the respective wavelength selecting elements, and which multiplexes or demultiplexes light having plurality of wavelengths, wherein the above-described optical guiding means is fabricated according to: the step of forming a wavelength selecting element layer by aligning the above-described plurality of wavelength selecting elements in thin film form of which the transmission wavelength bands are different from each other on a transparent substrate where the above-described light reflecting surface is formed on the rear surface; and the step of joining another transparent substrate to the surface of the above-described wavelength selecting element layer so as to place the above-described wavelength selecting element layer in between the above-described substrates that make up a pair.

A second manufacturing method for an optical multiplexer/demultiplexer according to the present invention is a manufacturing method for an optical multiplexer/demultiplexer that comprises an optical guiding means which is made of a light reflecting surface and plurality of wavelength selecting elements which are aligned in a plane that is parallel to the light reflecting surface, and of which the transmission wavelengths are different from each other, which guides light by making the light be reflected between the light reflecting surface and the respective wavelength selecting elements, and which multiplexes or demultiplexes light having plurality of wavelengths, wherein plurality of optical guiding means are fabricated by cutting a pair of parent substrates that have been layered after placing a wavelength selecting element layer that has been formed by aligning the above-described plurality of wavelength selecting elements in thin film form of which the transmission wavelength bands are different from each other in between the above-described parent substrates in an integrating manner.

A third manufacturing method for an optical multiplexer/demultiplexer according to the present invention is a manufacturing method for an optical multiplexer/demultiplexer that comprises an optical guiding means which is made of a light reflecting surface and plurality of wavelength selecting elements which are aligned in a plane that is parallel to the light reflecting surface, and of which the transmission wavelengths are different from each other, which guides light by making the light be reflected between the light reflecting surface and the respective wavelength selecting elements, and which multiplexes or demultiplexes light having plurality of wavelengths, wherein the above-described optical guiding means is fabricated according to the step of forming a wavelength selecting element layer by aligning the above-described plurality of wavelength selecting elements in thin film form of which the transmission wavelength bands are different from each other on a transparent substrate where the above-described light reflecting surface is formed on the rear surface.

A fourth manufacturing method for an optical multiplexer/demultiplexer according to the present invention is a manufacturing method for an optical multiplexer/demultiplexer that comprises an optical guiding means which is made of a light reflecting surface and plurality of wavelength selecting elements which are aligned in a plane that is parallel to the light reflecting surface, and of which the transmission wavelengths are different from each other, which guides light by making the light be reflected between the light reflecting surface and the respective wavelength selecting elements, and which multiplexes or demultiplexes light having plurality of wavelengths, wherein the above-described optical guiding means is fabricated according to: the step of forming a wavelength selecting element layer by aligning the above-described plurality of wavelength selecting elements in thin film form of which the transmission wavelength bands are different from each other on a transparent second substrate; and the step of joining the above-described second substrate to a transparent first substrate where the above-described light reflecting surface is formed on the rear surface.

A fifth manufacturing method for an optical multiplexer/demultiplexer according to the present invention is a manufacturing method for an optical multiplexer/demultiplexer that comprises an optical guiding means which is made of a light reflecting surface and plurality of wavelength selecting elements which are aligned in a plane that is parallel to the light reflecting surface, and of which the transmission wavelengths are different from each other, which guides light by making the light be reflected between the light reflecting surface and the respective wavelength selecting elements, and which multiplexes or demultiplexes light having plurality of wavelengths, wherein the above-described optical guiding means is fabricated according to: the step of forming the above-described plurality of wavelength selecting elements in thin film form of which the transmission wavelength bands are different from each other on plurality of transparent second substrates, respectively; and the step of aligning and joining the above-described plurality of second substrates having the wavelength selecting elements of which the transmission wavelength bands are different from each other on and to a transparent first substrate where the above-described light reflecting surface is formed on the rear surface.

In accordance with the first to fifth manufacturing methods for an optical multiplexer/demultiplexer according to the present invention, an optical multiplexer/demultiplexer that is provided with an optical guiding means having any of the above-described structures can be manufactured. In addition, in accordance with the second manufacturing method, plurality of optical guiding means can be efficiently produced from the parent substrates by cutting the parent substrates.

In accordance with an embodiment of the fifth manufacturing method for an optical multiplexer/demultiplexer according to the present invention, the above-described wavelength selecting elements of which the transmission wavelength bands are different from each other may be formed on plurality of parent substrates, and the above-described second substrates, on which the wavelength selecting elements are formed, may be formed by cutting the respective parent substrates in the above-described step of forming the wavelength selecting elements on the second substrates.

In accordance with another embodiment of the fifth manufacturing method for an optical multiplexer/demultiplexer according to the present invention, the above-described wavelength selecting elements of which the transmission wavelength bands are different from each other may be formed on plurality of parent substrates, and these parent substrates may be aligned so as to be cut in a collective manner, and thereby, pairs of second substrates, where the wavelength selecting elements of which the transmission wavelength bands are different from each other are formed, may be formed in the above-described step of forming the wavelength selecting elements on the second substrates. In this embodiment, it becomes possible tomass produce optical guidingmeans of optical multiplexers/demultiplexers.

A sixth manufacturing method for an optical multiplexer/demultiplexer is a manufacturing method for an optical multiplexer/demultiplexer that comprises an optical guiding means for guiding light by making the light be reflected between a light reflecting surface and plurality of wavelength selecting elements of which the transmission wavelengths are different from each other and for multiplexing/demultiplexing light having plurality of wavelengths, wherein the respective wavelength selecting elements are placed between a first substrate where the light reflecting surface is formed on the rear surface and a second substrate where plurality of prisms that become deflection elements are formed on the front surface, provided with: the step of layering plurality of plates and of processing the end surfaces of the layered plates so that the end surfaces become of plane form that incline relative to the direction in which the plates are layered; the step of realigning the above-described plates and thereby of forming an inverted pattern of the above-described plurality of prisms from an array of the inclining end surfaces; and the step of forming the above-described prisms on the front surface of the above-described second substrate by using the above-described realigned plates as at least a portion of a die.

In accordance with the sixth manufacturing method for an optical multiplexer/demultiplexer, dies for fabricating prisms can be manufactured easily and with high precision.

Here, the above-described components of this invention can be arbitrarily combined, as long as the combination is possible.

### Brief Description of the Drawings

FIG. 1 is a schematic diagram showing the structure of an optical multiplexer/demultiplexer according to the prior art;
FIG. 2 is an exploded perspective diagram showing the structure of an optical multiplexer/demultiplexer according to the first embodiment of the present invention;
FIG. 3 is a schematic cross sectional diagramof the optical multiplexer/demultiplexer according to the first embodiment along the plane that passes the cores of the respective optical fiber arrays;
FIG. 4 is a side diagram of the optical multiplexer/demultiplexer according to the first embodiment;
FIG. 5 is a diagram showing the lower surface of a micro lens array;
FIG. 6 is a diagram illustrating a light path of light which is emitted from an optical fiber and enters into another optical fiber;
FIG. 7 (a) is a plan diagram showing the form of a micro lens, and FIG. 7(b) is a frontal diagram thereof;
FIG. 8 is a graph showing the characteristics of respective filters and the characteristics of dummy films and an AR coating layer, where the lateral axis indicates the wavelength of light and the longitudinal axis indicates transmittance of light;
FIG. 9(a) to FIG. 9(e) are diagrams illustrating a manufacturing process for a filter layer;
FIG. 10(f) and FIG. 10(g) are diagrams illustrating the process that follows FIG. 9(e);
FIG. 11 is a diagram illustrating a manufacturing method for a filter layer;
FIG. 12 (a) to FIG. 12 (d) are diagrams illustrating another manufacturing process for a filter layer;
FIG. 13(e) to FIG. 13(g) are diagrams illustrating the process that follows FIG. 12(d);
FIG. 14 is a schematic cross sectional diagram illustrating the demultiplexing operation of the optical multiplexer/demultiplexer according to the first embodiment;
FIG. 15 is a schematic cross sectional diagram illustrating the multiplexing operation of the optical multiplexer/demultiplexer according to the first embodiment;
FIG. 16 is a schematic cross sectional diagram showing the state where an optical multiplexer/demultiplexer according to the present invention is contained in a casing;
FIG. 17 is a schematic cross sectional diagram of a portion of an optical multiplexer/demultiplexer according to the second embodiment of the present invention;
FIG. 18 is a schematic cross sectional diagram of a portion of a modification of the second embodiment of the present invention;
FIG. 19 is a schematic cross sectional diagram of a portion of an optical multiplexer/demultiplexer according to the third embodiment of the present invention;
FIG. 20 is a schematic cross sectional diagram of a portion of an optical multiplexer/demultiplexer according to the fourth embodiment of the present invention;
FIG. 21(a) to FIG. 21(e) are diagrams illustrating a manufacturing method for a filter layer that is used in the fourth embodiment;
FIG. 22 is a schematic cross sectional diagram of a portion of an optical multiplexer/demultiplexer according to the fifth embodiment of the present invention;
FIG. 23 is a schematic cross sectional diagram of a portion of a modification of the fifth embodiment of the present invention;
FIG. 24(a) to FIG. 24(d) are diagrams illustrating a manufacturing method for a filter layer that is used in an optical multiplexer/demultiplexer according to the fifth embodiment;
FIG. 25 is a schematic cross sectional diagram of a portion of an optical multiplexer/demultiplexer according to the sixth embodiment of the present invention;
FIG. 26 is a schematic cross sectional diagram of an optical multiplexer/demultiplexer according to the seventh embodiment of the present invention;
FIG. 27 is an exploded perspective diagram of an optical multiplexer/demultiplexer according to the eight embodiment of the present invention;
FIG. 28 is a cross sectional diagram of the optical multiplexer/demultiplexer according to the eighth embodiment of the present invention;
FIG. 29 is a perspective diagram of a prism block that is used in the optical multiplexer/demultiplexer according to the eighth embodiment;
FIG. 30 is a schematic diagram illustrating a manufacturing method for a block for multiplexing/demultiplexing;
FIG. 31(a) and FIG. 31(b) are schematic diagrams illustrating another manufacturing method for a block for multiplexing/demultiplexing;
FIG. 32(a), FIG. 32(b) and FIG. 32(c) are schematic diagrams illustrating still another manufacturing method for a block for multiplexing/demultiplexing;
FIG. 33 is a schematic diagram illustrating yet another manufacturing method for a block for multiplexing/demultiplexing;
FIG. 34 is a schematic diagram illustrating still yet another manufacturing method for a block for multiplexing/demultiplexing;
FIG. 35 is a schematic diagram illustrating another manufacturing method for a block for multiplexing/demultiplexing;
FIG. 36(a), FIG. 36(b) and FIG. 36(c) are perspective diagrams illustrating a manufacturing process for a prism pattern forming partial die for forming a prism block;
FIG. 37 (d) and FIG. 37 (e) are perspective diagrams showing the process that follows FIG. 36(c);
FIG. 38(a) and FIG. 38(b) are perspective diagrams illustrating a manufacturing method for a forming block;
FIG. 39 is a perspective diagram of a partial die;
FIG. 40 is a cross sectional diagram showing a die for forming a prism block;
FIG. 41(a) and FIG. 41(b) are perspective diagrams illustrating an assembling process for a block for multiplexing/demultiplexing;
FIG. 42 is a perspective diagram showing another form of a prism block;
FIG. 43 is a schematic cross sectional diagramof an optical multiplexer/demultiplexer according to the ninth embodiment of the present invention;
FIG. 44(a) is a perspective diagram of a micro lens array that is used in the optical multiplexer/demultiplexer according to the ninth embodiment as viewed from the rear surface side, and FIG. 44(b) is a perspective diagram of this micro lens array as viewed from the front surface side;
FIG. 45 is a diagram illustrating working effects of the optical multiplexer/demultiplexer according to the ninth embodiment;
FIG. 46 is a schematic cross sectional diagram of an optical multiplexer/demultiplexer according to the tenth embodiment of the present invention;
FIG. 47 is an exploded perspective diagram of an optical multiplexer/demultiplexer according to the eleventh embodiment of the present invention;
FIG. 48 is a cross sectional diagram illustrating the working effects of the optical multiplexer/demultiplexer according to the eleventh embodiment;
FIG. 49 is a cross sectional diagram showing another cross section illustrating the working effects of the optical multiplexer/demultiplexer according to the eleventh embodiment;
FIG. 50 is a perspective diagram illustrating the working effects of the optical multiplexer/demultiplexer according to the eleventh embodiment;
FIG. 51 is a schematic diagram showing the linked state of optical multiplexers/demultiplexers according to the eleventh embodiment;
FIG. 52(a) is a diagram illustrating working effects in the linked state of the optical multiplexers/demultiplexers according to the eleventh embodiment, and FIG. 52(b) is a diagram illustrating working effects in a different linked state of the optical multiplexers/demultiplexers according to the eleventh embodiment;
FIG. 53 is an exploded perspective diagram showing a modification of the eleventh embodiment of the present invention;
FIG. 54 is an exploded perspective diagram showing another modification of the eleventh embodiment of the present invention;
FIG. 55(a) is a perspective diagram of a micro lens array that is used in the optical multiplexer/demultiplexer according to the modification of FIG. 54 as viewed from the rear surface side, and FIG. 55(b) is a perspective diagram of this micro lens array as viewed from the front surface side;
FIG. 56 is a schematic cross sectional diagramof an optical multiplexer/demultiplexer according to the twelfth embodiment of the present invention;
FIG. 57 is a schematic diagram showing the linked state of optical multiplexers/demultiplexers according to the twelfth embodiment;
FIG. 58 is a schematic cross sectional diagram showing a modification of the twelfth embodiment of the present invention;
FIG. 59 is a schematic cross sectional diagram showing another modification of the twelfth embodiment of the present invention;
FIG. 60 is a schematic cross sectional diagram showing an optical multiplexer/demultiplexer according to the thirteenth embodiment of the present invention;
FIG. 61 is a schematic cross sectional diagram showing a modification of the thirteenth embodiment of the present invention;
FIG. 62 is a schematic cross sectional diagram showing an optical multiplexer/demultiplexer according to the fourteenth embodiment of the present invention; and
FIG. 63 is a schematic cross sectional diagram showing a modification of the fourteenth embodiment of the present invention.

### Best Mode for Carrying Out the Invention

In the following, the preferred embodiments for carrying out the present invention are described in detail, in reference to the drawings.

### (First Embodiment)

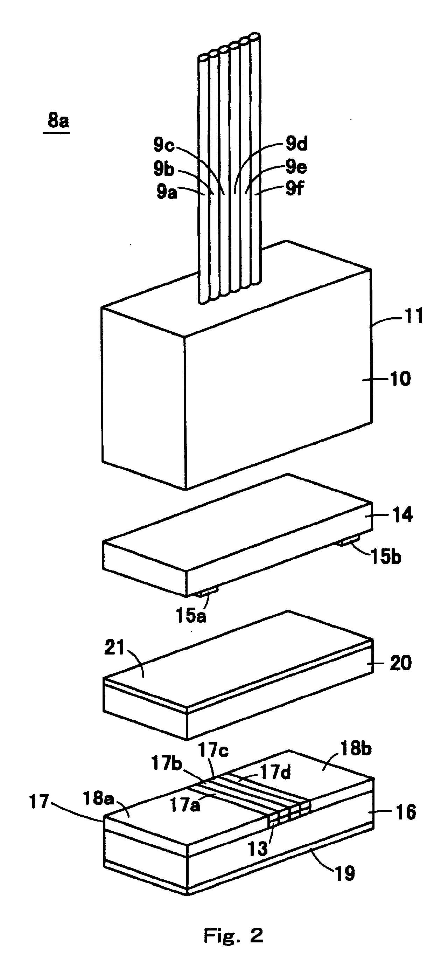

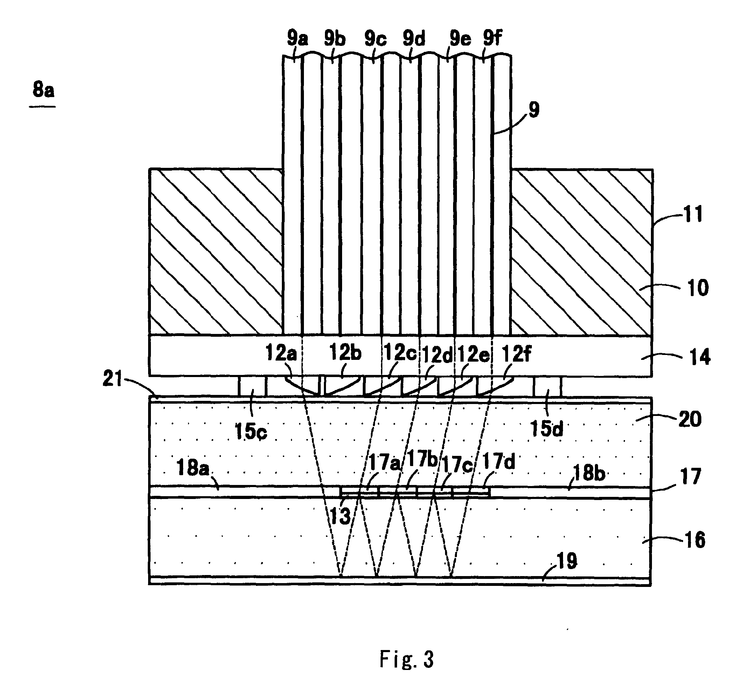

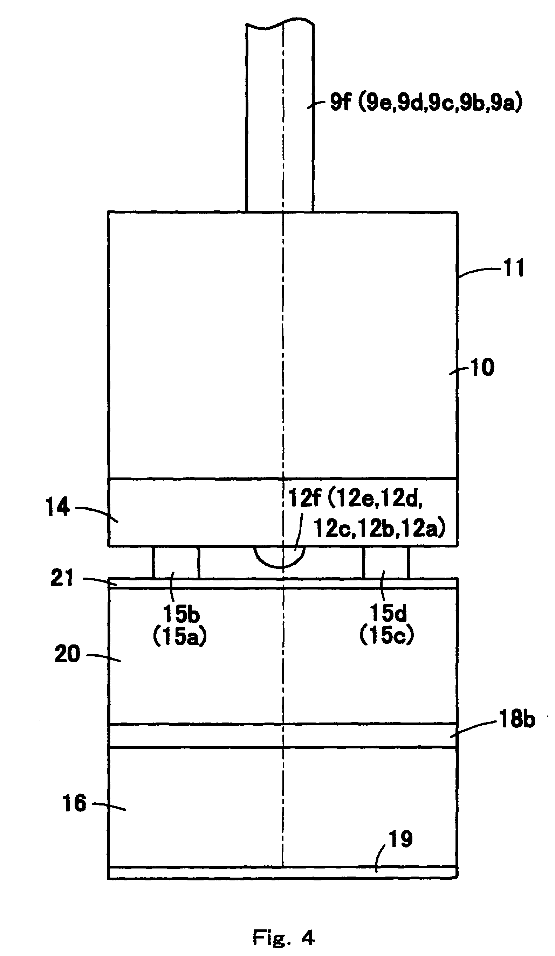

FIG. 2 is a schematic exploded perspective diagram showing the structure of an optical multiplexer/demultiplexer 8a according to the first embodiment of the present invention. FIG. 3 is a schematic cross sectional diagram along the plane that passes through cores 9 of optical fibers 9a to 9f of optical multiplexer/demultiplexer 8a shown in FIG. 2, and shows the state of demultiplexing or multiplexing. In addition, FIG. 4 is a schematic side diagram of optical multiplexer/demultiplexer 8a shown in FIG. 2. First, the configuration of optical multiplexer/demultiplexer 8a according to the present invention shown in FIG. 2 to FIG. 4 is described.

Optical multiplexer/demultiplexer 8a according to the present invention is formed of an optical fiber array 11, a micro lens array 14, a transparent cover member 20, such as a glass plate, spacers 15a , 15b, 15c and 15d, a filter layer 17, an optical guiding block 16 and a mirror layer 19. Here, optical fiber array 11 is gained by aligning optical fibers 9a, 9b, 9c, 9d, 9e and 9f in parallel with a constant pitch and without any intervals, and by attaching a connector 10 to the ends of the optical fibers. Micro lens array 14 is provided with a number of (six in the drawings) micro lenses 12a, 12b, 12c, 12d, 12e and 12f on the lower surface thereof. Cover member 20 has an AR coating layer (antireflection film) 21 formed on the surface. Spacers 15a, 15b, 15c and 15d are members for maintaining the distance between micro lenses 12a to 12f and AR coating layer 21 constant. Filter layer 17 is made of peeling films 13, filters 17a, 17b, 17c and 17d, and dummy films 18a and 18b. Mirror layer 19 is a layer made of a dielectric multilayer film or a metal deposition film having high reflectance.

Micro lens array 14, AR coating layer 21, filter layer 17 and mirror layer 19 are placed so as to be parallel to each other. In addition, micro lenses 12a to 12f are installed so as to be as proximate to AR coating layer 21 as possible. Optical fibers 9a to 9f within connector 10 are placed perpendicular to micro lens array 14.

Any type of optical fiber, for example, ones where cores 9 are coated with clads of plastic or glass, ones where clads around cores 9 are coated with plastic layer, or ones where such said optical fibers are further coated with plastic layer or the like, may be used as optical fibers 9a to 9f of optical fiber array 11.

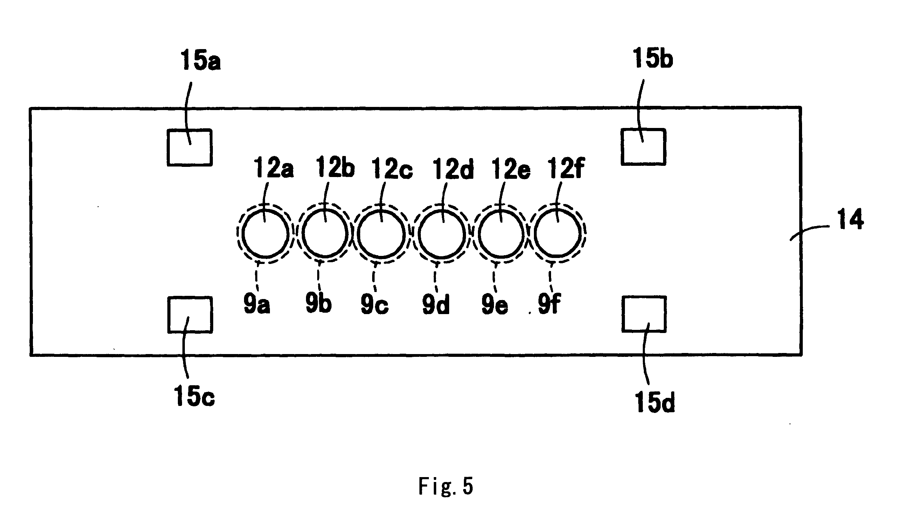

Next, the structure and functions of micro lens array 14 are described. FIG. 5 is a diagram showing the lower surface of micro lens array 14. A number of (six in FIG. 5) micro lenses 12a to 12f of which the sizes are approximately the same as the cross sections of optical fibers 9a to 9f are formed with almost no intervals on the lower surface of micro lens array 14. When the demultiplexing operation or multiplexing operation of optical multiplexer/demultiplexer 8a is taken into consideration, light that has been emitted from the end surfaces of optical fibers 9a to 9f must enter entirely into micro lenses 12a to 12f. The thickness of micro lens array 14 may be determined as follows, in order to satisfy this condition.

Light propagates inside cores 9 of optical fibers 9a to 9f while repeating reflection from the interface between the cores and the clads. In order to make light propagate through the inside of cores 9 without transmission from cores 9 to the clads in the above-described manner, the incident angle to the interface between the cores and the clads (incident angle that is measured relative to the normal line that is perpendicular to the interface) must be an angle that is no smaller than the total reflection angle. The incident angle to the interface between the cores and the clads is limited in such a manner, and therefore, the direction of emission of light from the ends of the cores and the degree to which light spreads are automatically determined. Accordingly, in the case where the thickness of micro lens array 14 is designed so that light that has come out from the ends of the cores enters into micro lenses 12a to 12f when the cross section of light having the above-described constant spreading angle is enlarged to a size that is approximately the same as those of micro lenses 12a to 12f, or before the cross section of light having the above-described constant spreading angle is enlarged to a size that is approximately the same as those of micro lenses 12a to 12f, all of the light that is emitted from optical fibers 9a to 9f can be made to enter into micro lenses 12a to 12f.

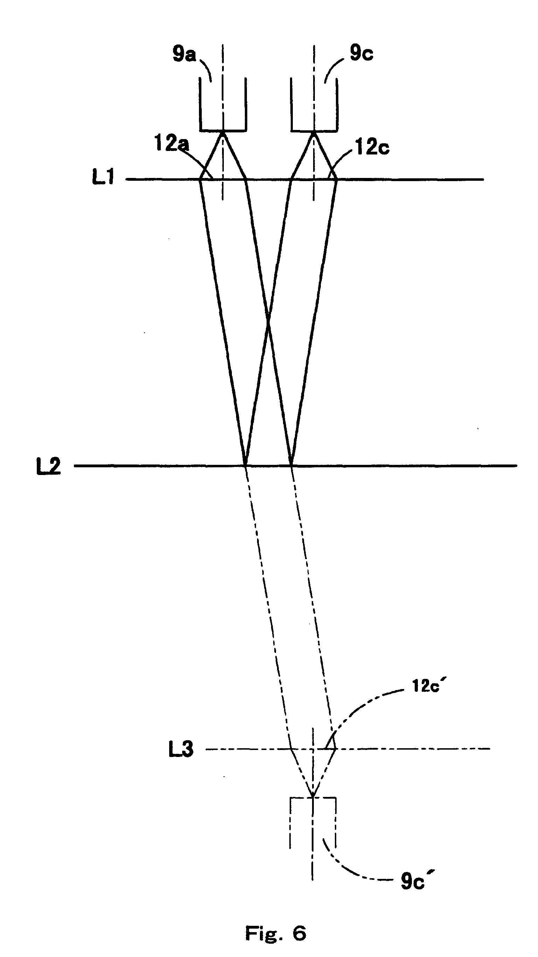

In addition, micro lenses 12a to 12f are placed and designed so that the center axes thereof almost coincide with the optical axes of optical fibers 9a to 9f, and furthermore, it is desirable for these to be designed so as to have forms that satisfy the following requirements. FIG. 6 is a conceptual diagram showing the light path within optical multiplexer/demultiplexer 8a, where L1 indicates the main plane of micro lenses 12a to 12f, L2 indicates the surface of mirror layer 19 (hereinafter referred to as mirror surface L2), and L3 indicates a mirror image of lens main plane L1 relative to mirror surface L2. As shown in FIG. 6, it is desirable for micro lens 12a to be a lens in a form which allows light that has been emitted from optical fiber 9a to enter into lens main plane L1 (micro lens 12a), and after that, emit as parallel light of which the direction of the optical axis has been bent. It is desirable for the degree in bending of the direction of the optical axis of light, that is, the incident angle to mirror surface L2, to be the optimal angle, which is less than 10°, for the below described reasons. Here, a lens for bending the direction of the optical axis of light (where the direction in which the light beam that passes through the center of the cross section of light flux progresses is referred to as the direction of the optical axis of light) after passing through the lens relative to the direction of the optical axis of light before entering into the lens is referred to as an inclination lens in the following.

In addition, it is desirable for micro lens 12c to have a form where the direction of the optical axis of light is bent so as to be efficiently coupled to optical fiber 9c when this light enters diagonally from below after the emission light of the above-described micro lens 12a is reflected from mirror surface L2. In this optical multiplexer/demultiplexer 8a, light enters into micro lenses 12c to 12f at the same incident angle, and light is emitted with the same angle of emergence, and therefore, micro lenses 12c to 12f may all be made to have the same form by using collimator lenses, or may be made to have forms that are different from each other so as to have optimal focal distances by using a condenser lens. Here, in the present embodiment, micro lens 12b is not utilized and therefore, may be omitted. However the micro lens array of the present embodiment shown in Fig.2 to Fig.5 have the micro lens 12b because of common use of the micro lens array with the second embodiment and the like. Micro lens 12b may be made to have the same form as micro lens 12c.

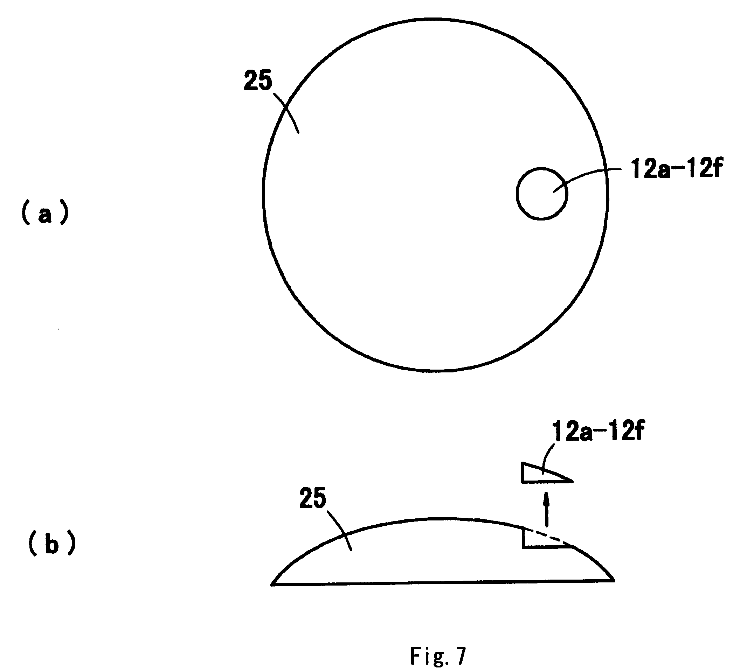

Micro lenses 12a to 12f which satisfy the above requirements are gained by cutting out circular portions from aspherical lens 25 in positions outside of the optical axis of aspherical lens 25, as shown in the top diagram and frontal diagram of FIG. 7(a) and FIG. 7(b).

In addition, micro lens array 14 having the above-described micro lenses 12a to 12f on the surface can be easily formed according to a stamper method or the like, where stampers which have inverted patterns of micro lenses 12a to 12f on the surfaces are pressed against a resin that has not yet been cured, such as an ultraviolet curing resin, which is then irradiated with ultraviolet rays, so that the resin is cured. In addition, in the case where the inverted patterns of spacers 15a, 15b, 15c and 15d are also formed on these stampers, micro lenses 12a to 12f and spacers 15a, 15b, 15c and 15d can be formed at the same time. In the case where micro lenses 12a to 12f and spacers 15a to 15d can be formed at the same time, the manufacturing process can be simplified, in comparison with the case where spacers 15a to 15d which have been individually prepared are made to adhere to micro lens array 14, and the positional precision between micro lenses 12a to 12f and filters 17a to 17d can be increased.

In optical multiplexer/demultiplexer 8a according to the present invention, the respective components are formed and placed so that a parallel light flux which has been emitted from optical fiber 9a, transmitted through micro lens 12a (the region of main plane L1 that is below optical fiber 9a) and has been reflected from mirror surface L2 enters into micro lens 12c (the region of main plane L1 that is below optical fiber 9c), as shown in FIG. 6. In the case where, for example, the arrangement of micro lenses 12a to 12f has been determined by the arrangement of optical fibers 9a to 9f, and in addition, the form of micro lens 12a determines the incident angle to mirror surface L2, the position of mirror surface L2 is set so that parallel light that has been emitted from micro lens 12a enters entirely into mirror image L3 (mirror image 12c' of micro lens 12c) of lens main surface L1 relative to mirror surface L2 so as to be collected and coupled to mirror image 9c' of optical fiber 9c relative to mirror surface L2, as shown in FIG. 6. Adjustment of the interval between micro lens array 14 and mirror layer 19 can be carried out by adjusting the thickness of optical guiding block 16 and the thickness of cover member 20.

In addition, in the case where arrangement of micro lenses 12a to 12f is determined by the arrangement of optical fibers 9a to 9f, and in addition, the thicknesses of optical guiding block 16 and cover member 20 have been determined, micro lens 12a may be designed so that the angle of bending of micro lens 12a becomes an appropriate angle.

Here, in order to align optical fiber array 11 and micro lens array 14, an adhesive that has not yet been cured is applied between optical fiber array 11 and micro lens array 14, and after that, respective optical fibers 9a, 9b, 9c, 9d, 9e and 9f are irradiated with light in the condition where the adhesive has not yet been cured, and the mutual positions thereof are adjusted while the intensity of light that has transmitted through respective micro lenses 12a, 12b, 12c, 12d, 12e and 12f is being measured, and then, the adhesive may be cured when the optimal positions are gained.

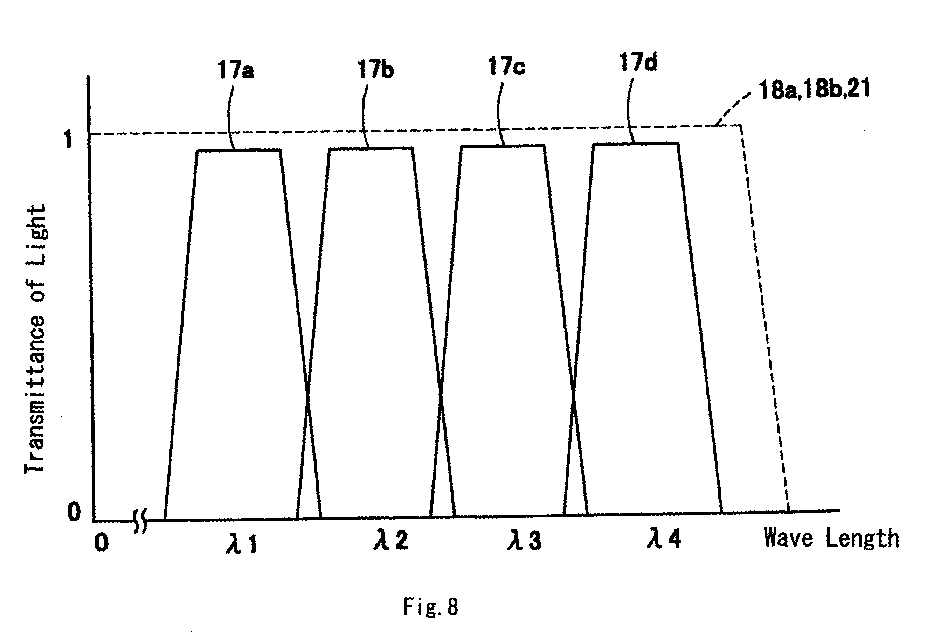

Next, filter layer 17 is described. FIG. 8 is a graph showing the characteristics of the transmission wavelengths of filters 17a to 17d, dummy films 18a and 18b, and AR coating layer 21, where the lateral axis indicates the wavelength and the longitudinal axis indicates transmittance of light. Filters 17a, 17b, 17c and 17d are dielectric multilayer films which, as shown by the solid lines in FIG. 8, transmit light having wavelength bands of which the centers are wavelengths λ1, λ2, λ3 and λ4, respectively, and reflect light having wavelength bands other than these. In addition, dummy films (spacers) 18a, 18b and AR coating layer 21 are, for example, members using thin film glass, quartz, transparent resin films or the like, and as shown by the broken line in FIG. 8, transmit light having all wavelength bands.

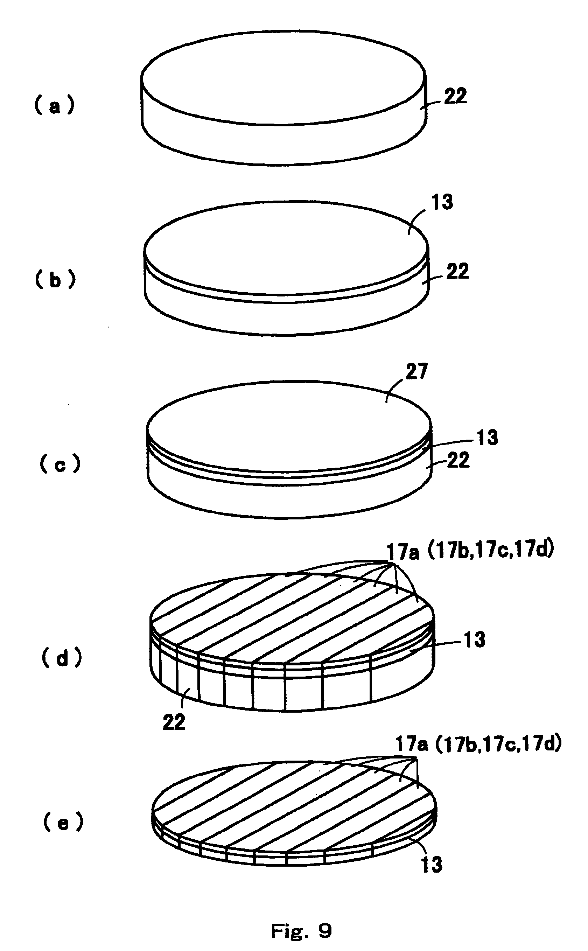

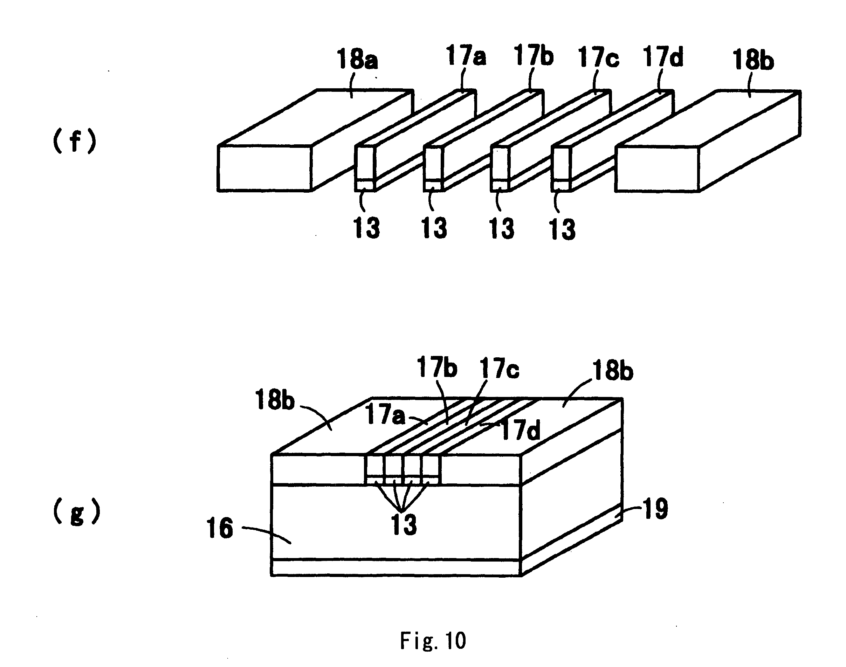

Here, a manufacturing method for filter layer 17 of optical multiplexer/demultiplexer 8a according to the present invention is described in reference to FIG. 9 and FIG. 10. First, a peeling film 13 which is made of a transparent substance and is very thin is grown, as shown in FIG. 9 (b), by using a spin coater on the surface of a substrate 22, such as glass, shown in FIG. 9(a). The substance of this peeling film 30 may be a substance such as polyimide, which is transparent and easily peels from substrate 22 when placed under certain conditions, for example, when heat is applied, when contacted with water or when irradiated with ultraviolet rays, after the formation of a thin film.

A filter thin film (dielectric multilayer film) 27 having particular characteristics for each substrate 22 is formed on the surface of peeling film 13, as shown in FIG. 9(c). Such substrates 22 on which peeling films 13 and filter thin films 27 are formed are prepared so that the number of types is the same as that of the types of required filters 17a to 17d. In addition, dummy films 18a and 18b are formed of transparent thin glass plates, crystal, transparent resin films or the like, so as to have the same thickness as the total thickness of peeling film 13 and filter thin film 27.

Next, as shown in FIG. 9(d), filter thin film 27 and peeling film 13 on substrate 22 are cut in width into filters 17a, 17b, 17c and 17d which are utilized in optical multiplexer/demultiplexer 8a. Here, it is not necessary to thoroughly cut substrate 22, rather, it is sufficient to cut only filter thin film 27 and peeling film 13. After filter thin film 27 and peeling film 13 have been cut, peeling film 13 is peeled from substrate 22, as shown in FIG. 9(e), by applying heat, making it make contact with water, irradiating it with ultraviolet rays or the like.

Next, a transparent adhesive is applied to the surface of the parent substrate of optical guiding block 16, and filters 17a, 17b, 17c and 17d, as well as dummy films 18a and 18b, where peeling films 13 provided on the rear surfaces are positioned one by one in the order shown in FIG. 10(f) and made to adhere to the front surface of the parent surface of optical guiding block 16. In this case, filter layer 17 may be made to adhere to the parent substrate of optical guiding block 16 by pressing the top surface with a flat plate. Alternatively, filter layer 17 and optical guiding block 16 may be made to adhere to each other by pressing the parent substrate of optical guiding block 16, to the front surface of which a transparent adhesive has been applied, against the rear surfaces of filters 17a to 17d and dummy films 18a and 18b, which have been aligned on a flat support. After this, mirror layer 19 may be formed by pasting a sheet where a metal thin film has been formed, or by depositing a metal material on the rear surface of the parent substrate of optical guiding block 16. Alternatively, filters 17a to 17b and dummy films 18a and 18b may be made to adhere to the front surface of the parent substrate of optical guiding block 16 after mirror layer 19 has been formed in advance on the rear surface.

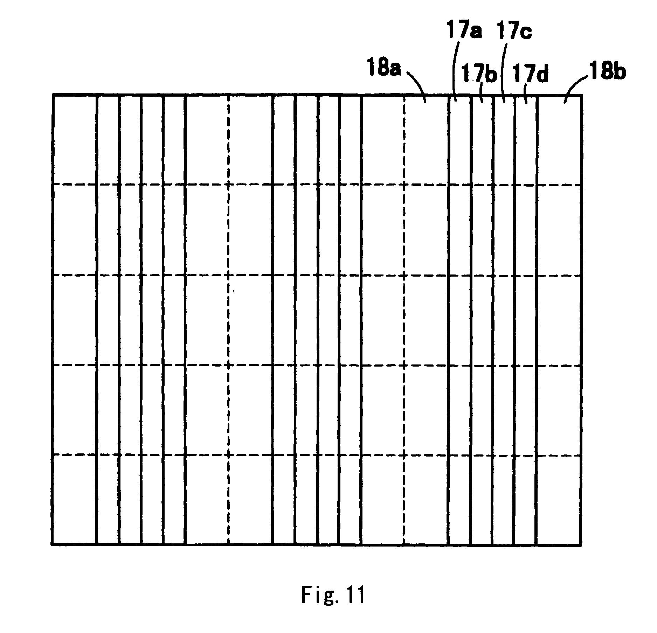

Next, the parent substrate of optical guiding block 16 where filter layer 17 and mirror layer 19 have been formed on the front surface and on the rear surface is cut into the individual forms of optical guiding blocks 16, as shown in FIG. 10(g) by cutting it along the broken lines of FIG. 11, and thus, optical guiding blocks 16 where filter layers 17 and mirror layers 19 have been formed can be efficiently mass produced. Subsequently, cover member 20, on which AR coating layer 21 has been formed, is joined to filter layer 17 on the front surface of optical guiding block 16.

Alternatively, filter layer 17 on the parent substrate and the parent substrate of cover member 20 on the front surface of which AR coating layer 21 has been formed may be made to adhere to each other with a transparent adhesive, and after that, cutting may be carried out as shown in FIG. 11, so that optical multiplexers/demultiplexers 8a can be manufactured more efficiently. In addition, in the case where filter layer 17 is covered with cover member 20 before cutting in this manner, filter layer 17 can be prevented frombecoming stained or damaged at the time of cutting, and thus, the yield can be lowered.

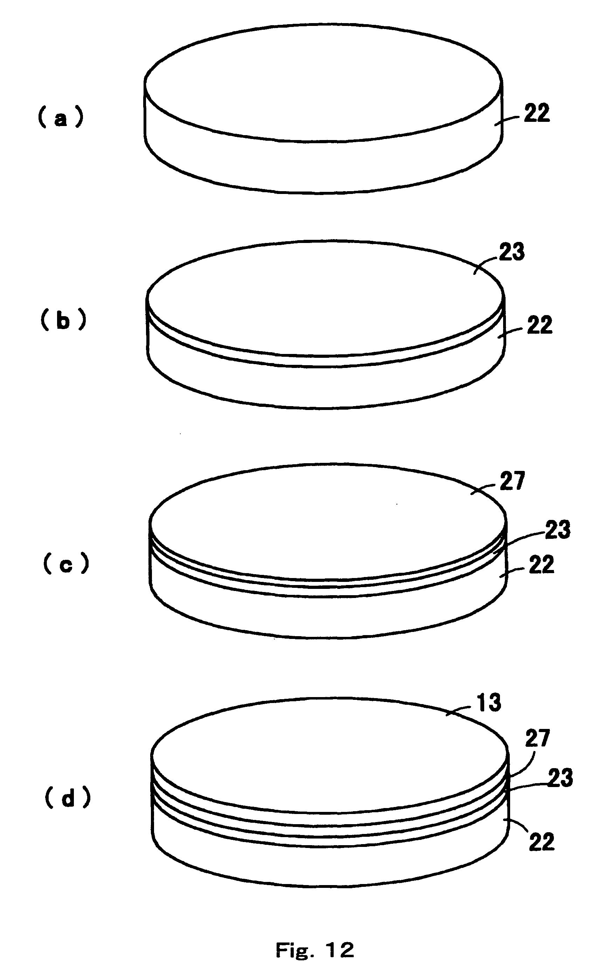

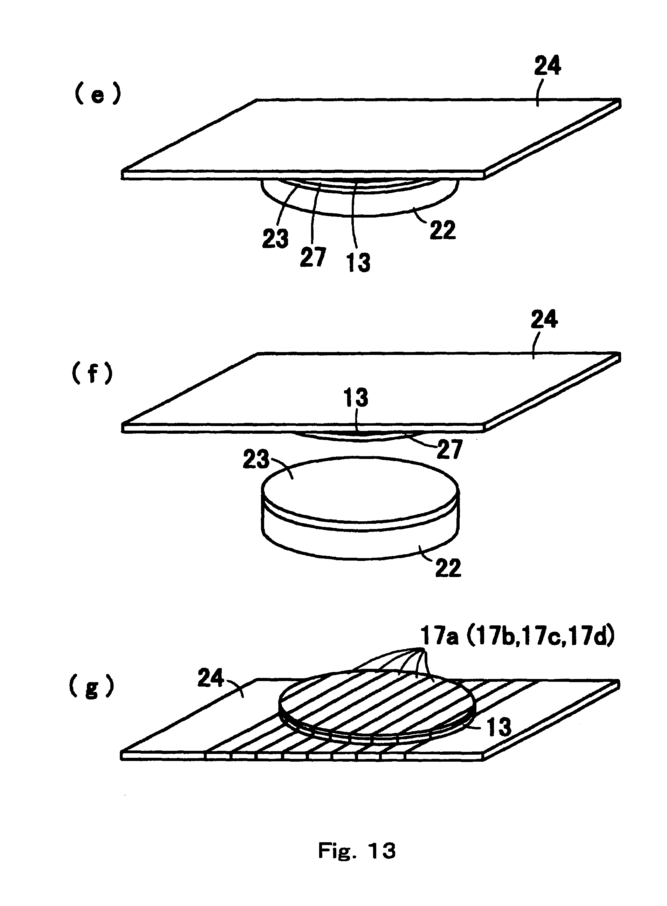

Alternatively, filter layer 17 may be manufactured in accordance with the following method that is described in reference to FIG. 12 and FIG. 13. First, a peeling film 23 is formed, as shown in FIG. 12(b), by using a spin coater on the surface of substrate 22 shown in FIG. 12(a). This peeling film 23 may be made of a substance of which the properties change as a result of application of heat, contact with water, irradiation with ultraviolet rays or the like, such as polyimide, so as to easily peel from substrate 22 or filter thin film 27.

A filter thin film 27 made of a dielectric multilayer film having particular properties for each substrate 22 is grown on the surface of peeling film 23, as shown in FIG. 12(c). Such substrates 22 on which filter thin films 27 have been grown are prepared, of which the number of types is the same as that of required filters. Peeling film 13 is further grown on the surface of filter thin film 27, as shown in FIG. 12(d).

Next, as shown in FIG. 13(e), a dicing tape 24 is made to adhere to the surface of upper peeling film 13, and peeling film 23 on the substrate 22 side is peeled from filter thin film 27 by means of application of heat, irradiation with ultraviolet rays or the like, as shown in FIG. 13 (f). At this time, only substrate 22 may be peeled while lower peeling film 23 stays adhered to filter thin film 27. In such a case, filter thin film 27 is covered with peeling films 13 and 23 on both sides, and therefore, filter thin film 27 is prevented from being damaged, and becomes easy to handle.

Next, the surface of dicing tape 24 on which filter thin film 27 has been formed is turned upward and cut in width into filters 17a, 17b, 17c and 17d, as shown in FIG. 13(g). After that, dicing tape 24 is peeled frompeeling film 13 by irradiating it with ultraviolet rays or the like, and then, respective filters 17a to 17d are aligned on optical guiding block 16, and peeling film 13 is made to adhere to optical guiding block 16 with a transparent adhesive. In addition, dummy films 18a and 18b, which have been grown so as to have a thickness that is the same as the total thickness of peeling film 13 and filter thin film 27, are also made to adhere to the surface of optical guiding block 16 with a transparent adhesive. After this, cutting may be carried out, so as to form individual filter layers 17, in the same manner as in the above-described manufacturing process.

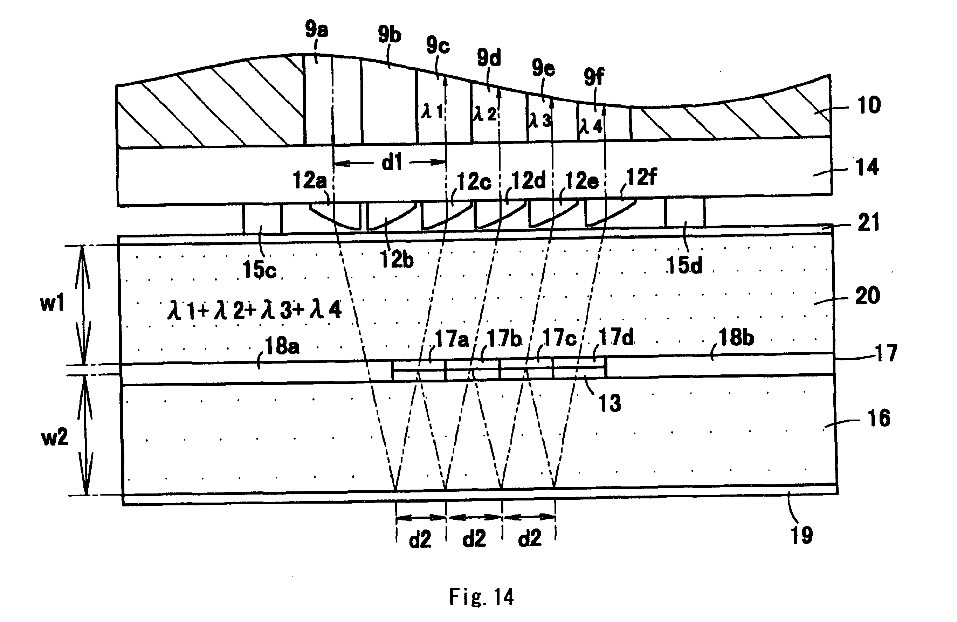

Next, demultiplexing of light in optical multiplexer/demultiplexer 8a according to the present invention is described. FIG. 14 is an enlarged cross sectional diagram of a portion of FIG. 3, and illustrates the manner of demultiplexing in optical multiplexer/demultiplexer 8a according to the present invention. When light where wavelengths λ1, λ2, λ3 and λ4 are multiplexed is emitted from optical fiber 9a, light from optical fiber 9a that has entered into micro lens 12a becomes parallel light of which the direction of the optical axis has been entirely by micro lens 12a, as described above, and then transmits through AR coating layer 21 and cover member 20 so as to enter into the portion of filter layer 17 where dummy film 18a is placed.

Light that has transmitted through dummy film 18a further transmits optical guiding block 16 so as to be reflected from the surface of mirror layer 19, and then again transmits through optical guiding block 16 so as to reach filter layer 17. Filter 17a is placed in this portion of filter layer 17, and therefore, light having wavelength λ1 transmits through filter 17a so as to enter into micro lens 12c, where the direction of the optical axis is bent, and is coupled to optical fiber 9c. Accordingly, only light having wavelength λ1 is taken out from the light emitting end of optical fiber 9c.

Meanwhile, light (having wavelengths λ2, λ3 and λ4) that has been reflected from filter 17a is again reflected from the surface of mirror layer 19 so as to enter into filter layer 17. Filter 17b is placed in this portion of filter layer 17, and therefore, light having wavelength λ2 that has transmitted through filter 17b enters into micro lens 12d, where the direction of the optical axis is bent, and coupled to optical fiber 9d. Accordingly, light having wavelength λ2 is taken out from the light emitting end of optical fiber 9d.

In the same manner, light (having wavelengths λ3 and λ4) that has been reflected from filter 17b is further reflected from the surface of mirror layer 19 so as to enter into filter layer 17. Filter 17c is placed in this portion of filter layer 17, and therefore, light having wavelength λ3 that has transmitted through filter 17c enters into micro lens 12e, where the direction of the optical axis is bent, and is coupled to optical fiber 9e. Accordingly, light having wavelength λ3 is taken out from the light emitting end of optical fiber 9e.

In the same manner, light (having wavelength λ4) that has been reflected from filter 17c is further reflected from the surface of mirror layer 19 so as to enter into filter layer 17. Filter 17d is placed in this portion of filter layer 17, and therefore, light having wavelength λ4 that has transmitted through filter 17d enters into micro lens 12f, where the direction of the optical axis is bent, and is coupled to optical fiber 9f. Accordingly, light having wavelength λ4 is taken out from the light emitting end of optical fiber 9f.

As described above, light multiplexer/demultiplexer 8a according to the present invention can demultiplex light that has been multiplexed. Contrarily, in the case where light having wavelengths λ1 to λ4 that has propagated through optical fibers 9c to 9f is multiplexed and taken out from optical fiber 9a, optical multiplexer/demultiplexer 8a can be utilized as a multiplexer.

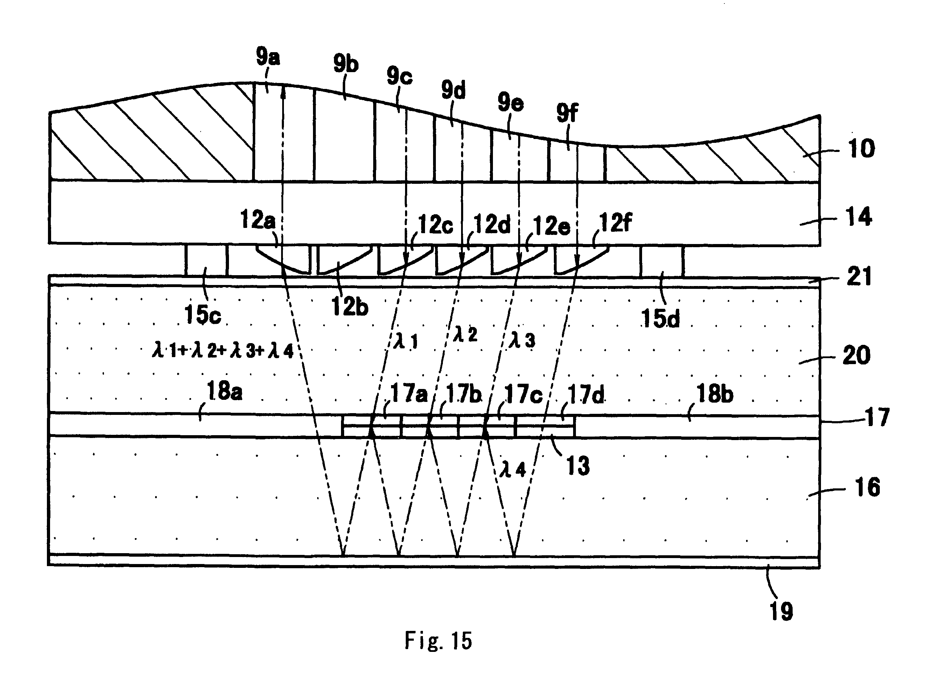

FIG. 15 illustrates the multiplexing operation of optical multiplexer/demultiplexer 8a according to the present invention. Light having wavelengths λ1, λ2, λ3 and λ4 propagates through optical fibers 9c, 9d, 9e and 9f, respectively, and is emitted from the end surfaces of optical fibers 9c, 9d, 9e and 9f. At this time, light having wavelength λ4 that has been emitted from optical fiber 9f is converted to parallel light after having transmitted through micro lens 12f, where the direction of the optical axis is bent, and transmits through cover member 20, filter 17d and optical guiding block 16 so as to be reflected frommirror layer 19. Light having wavelength λ4 that has been reflected from mirror layer 19 enters into filter 17c and is reflected from filter 17c.

Meanwhile, light having wavelength λ3 that has been emitted from optical fiber 9e is converted into parallel light after having transmitted through micro lens 12e, where the direction of the optical axis is bent, and transmits through cover member 20 and filter 17c. Thus, light having wavelength λ4 that has been reflected from filter 17c and light having wavelength λ3 that has transmitted through filter 17c propagate in the same direction within optical guiding block 16, and are reflected from mirror layer 19. Light having wavelengths λ3 and λ4 that has been reflected from mirror layer 19 enters into filter 17b and is reflected from filter 17b.

In addition, light having wavelength λ2 that has been emitted from optical fiber 9d is converted into parallel light after having transmitted through micro lens 12d, where the direction of the optical axis is bent, and transmits through cover member 20 and filter 17b. Thus, light having wavelengths λ3 and λ4 that has been reflected from filter 17b and light having wavelength λ2 that has transmitted through filter 17b propagate in the same direction within optical guiding block 16 so as to be reflected from mirror layer 19. Light having wavelengths λ2, λ3 and λ4 that has been reflected from mirror layer 19 enters into filter 17a and is reflected from filter 17a.

In addition, light having wavelength λ1 that has been emitted from optical fiber 9c is converted into parallel light after having transmitted through micro lens 12c, where the direction of the optical axis is bent, and transmits through cover member 20 and filter 17a. Thus, light having wavelengths λ2, λ3 and λ4 that has been reflected from filter 17a and light having wavelength λ1 that has transmitted through filter 17a propagate in the same direction within optical guiding block 16 so as to be reflected from mirror layer 19. Light having wavelengths λ1, λ2, λ3 and λ4 that has been reflected from mirror layer 19 transmits through optical guiding block 16, dummy film 18a and cover member 20 so as to enter into micro lens 12a.

The direction of the optical axis of parallel light having wavelengths λ1, λ2, λ3 and λ4 that has entered into micro lens 12a is bent by micro lens 12a so as to become parallel to the direction of the optical axis of optical fiber 9a, and at the same time, the light is condensed so as to be coupled to optical fiber 9a, and then, propagates within optical fiber 9a. In this manner, optical multiplexer/demultiplexer 8a according to the present invention can multiplex light having respective wavelengths.

Here, in the above description, light that has transmitted through respective filters 17b, 17c and 17d enters into micro lenses 12d, 12e and 12f, respectively, and in order to make this occur, thickness w2 of optical guiding block 16 may be adjusted so that the intervals between adjacent micro lenses 12c, 12d, 12e and 12f coincide with intervals d2 of light that is reflected from mirror layer 19 in the lens portions, in accordance with the deflection angles of light of which the direction of the optical axis has been bent.

In addition, in this case, interval d1 between micro lens 12a and micro lens 12c can be adjusted by thickness w1 of cover member 20. Thus, the thickness of cover member 20 is thick enough to be adjustable so as to design with precision the light path in optical multiplexer/demultiplexer 8a according to the present invention, and therefore, optical multiplexer/demultiplexer 8a where loss of light is small can be provided. In addition, in the case where micro lens array 14 is designed so that interval d1 between micro lens 12a and micro lens 12c becomes two times greater than interval d2 of the portions where light is reflected from mirror layer 19 when thickness w2 of optical guiding block 16 and thickness w1 of cover member 20 are the same, the respective intervals between optical fibers 9a, 9b, 9c, 9d, 9e and 9f of optical fiber array 1 become equal intervals, and optical guiding block 16 and cover member 20 can be formed of the same material, and thus, the cost for procurement of materials and processing can be reduced.

Here, it is described that micro lens 12a may be designed so that the incident angle of light that has transmitted through micro lens 12a to mirror layer 19 becomes an appropriate angle that is no greater than 10°, and the reason for this is as follows. The incident angle to mirror layer 19 becomes the incident angle to filter layer 17 without change, where when this angle becomes too great, a difference in the transmittance (wavelength dependent loss) due to the difference in the incident angle of P deflection and S deflection becomes greater, and properties of light having wavelength λ1 that has transmitted through filter 17a and light having wavelength λ1 before transmitting through filter 17a become different from each other. That is, reproducibility of light becomes poor. Accordingly, although the incident angle to mirror layer 19 must not be too large, in the case where the incident angle to mirror layer 19 is too small, light fails to enter into micro lens 12c, optical multiplexer/demultiplexer 8a becomes large in size and attenuation of light becomes great, unless the thicknesses of optical guiding block 16 and cover member 20 are increased so as to increase the length of the light path. As a result of calculation and experiments taking the above into consideration, it has been found that it is desirable to set the incident angle to mirror layer 19 at the optimal angle, which is no greater than 10°.

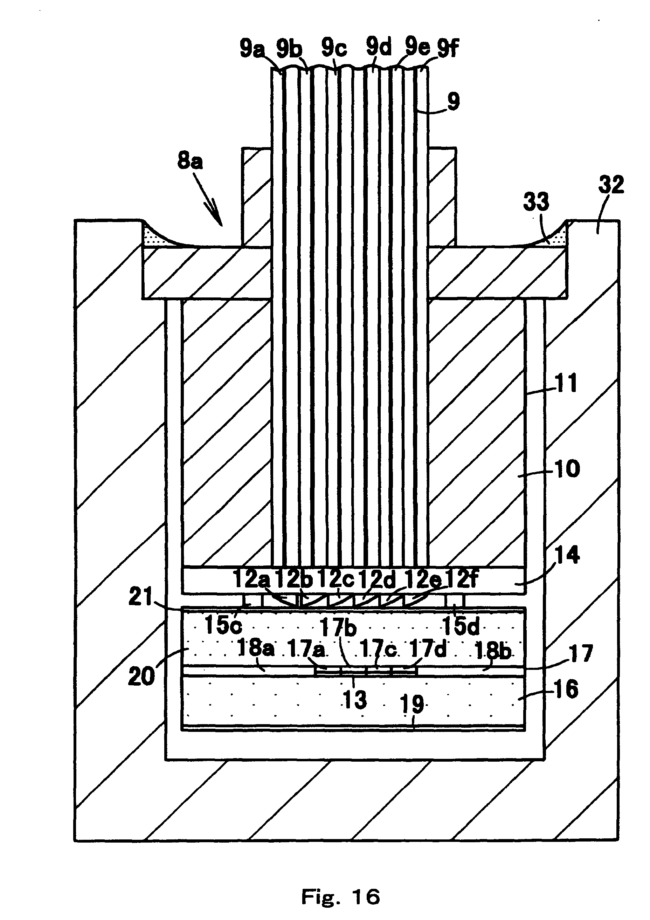

Optical multiplexer/demultiplexer 8a according to the present invention may be contained in a casing 32, as shown in the schematic cross sectional diagram of FIG. 16, where the inlet is sealed with an adhesive 33 when being utilized.

Optical multiplexer/demultiplexer 8a according to the present invention is provided with micro lens array 14, in a manner where the direction of the optical axis of light can be bent by micro lenses 12a to 12f. Accordingly, the light emitting end surface of optical fiber array 11, where optical fiber 9a for propagating multiplexed light and optical fibers 9c to 9f for propagating light of each wavelength after demultiplexing are aligned in parallel and filter layer 17 or mirror layer 19 can be placed so as to be parallel to each other, and thus, a compact optical multiplexer/demultiplexer 8a can be provided even in the case where the number of wavelengths to be demultiplexed is increased.

In addition, optical multiplexer/demultiplexer 8a according to the present invention can be designed so that demultiplexed light enters with precision into micro lenses 12c to 12f, by adjusting the thicknesses of cover member 20 and optical guiding block 16.

### (Second Embodiment)

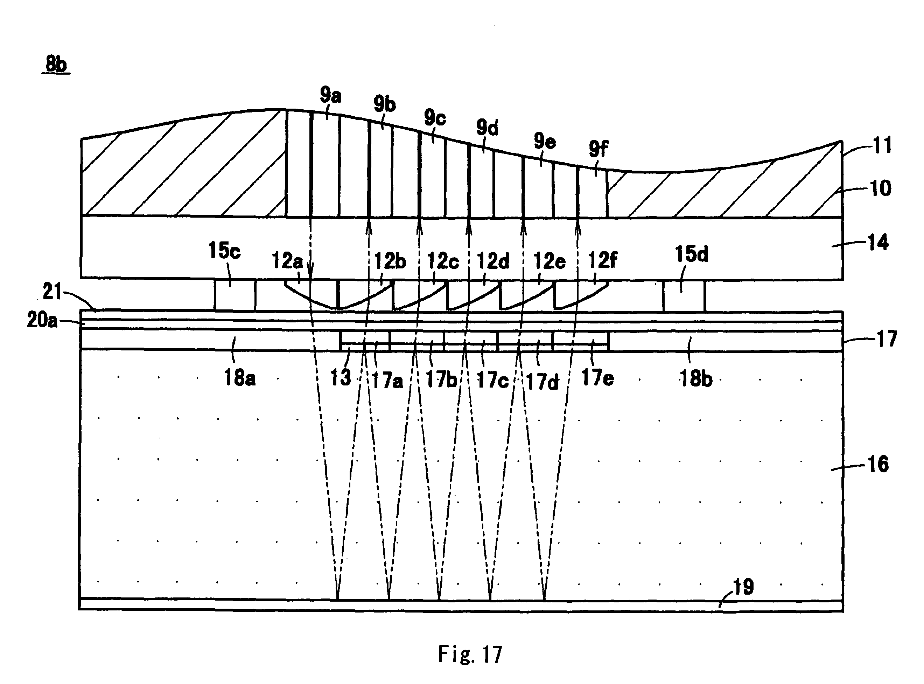

FIG. 17 is a schematic cross sectional diagram of a portion of an optical multiplexer/demultiplexer 8b according to the second embodiment of the present invention, and is a diagram that corresponds to FIG. 14 which is described in the first embodiment. Filters 17a, 17b, 17c, 17d and 17e are dielectric multilayer films for respectively transmitting light having wavelengths λ1, λ2, λ3, λ4 and λ5. Filter layer 17 is formed of a region made of filters 17a to 17e and peeling films 13, and of dummy films (spacers) 18a and 18b. Filter layer 17 can be manufactured in accordance with the manufacturing process that is described in the first embodiment. Descriptions of the components of optical multiplexer/demultiplexer 8b shown in FIG. 17 which have the same configuration as those described in the first embodiment are omitted.

In optical multiplexer/demultiplexer 8b according to the present embodiment, the surface of filter layer 17 is covered with a film 20a which is transparent and very thin glass or the like, so as to protect filters 17a to 17e from humidity or the like. An AR coating layer 21 is formed on the surface of film 20a.

Respective filters 17a to 17e must be placed on the light path of light that has been reflected from mirror layer 19 when this light enters into corresponding micro lenses 12b to 12f, and therefore, it is necessary to design the arrangement of respective filters 17a to 17e using the thickness of optical guiding block 16 and the incident angle of light to mirror layer 19 in the case where the thickness of cover member 20 on filter layer 17 is great, as shown in the first embodiment.

In the case where filter layer 17 is covered with a very thin film 20a like in the present embodiment, however, filters 17a to 17e and micro lenses 12b to 12e can be put in proximity to each other, in comparison with those of optical multiplexer/demultiplexer 8a of the first embodiment. Accordingly, even in a case where filters 17a to 17e are placed in the same positions as micro lenses 12b to 12f in such a manner that dummy film 18a is formed in a position that faces micro lens 12a, and filters 17a, 17b, 17c, 17d and 17e are formed in positions that face micro lenses 12b, 12c, 12d, 12e and 12f, light that has been reflected from mirror layer 19 can be made to enter into respective filters 17a to 17e. As described above, according to the present embodiment, the design of the arrangement of filter layer 17 is not complicated, unlike that of optical multiplexer/demultiplexer 8a shown in the first embodiment.

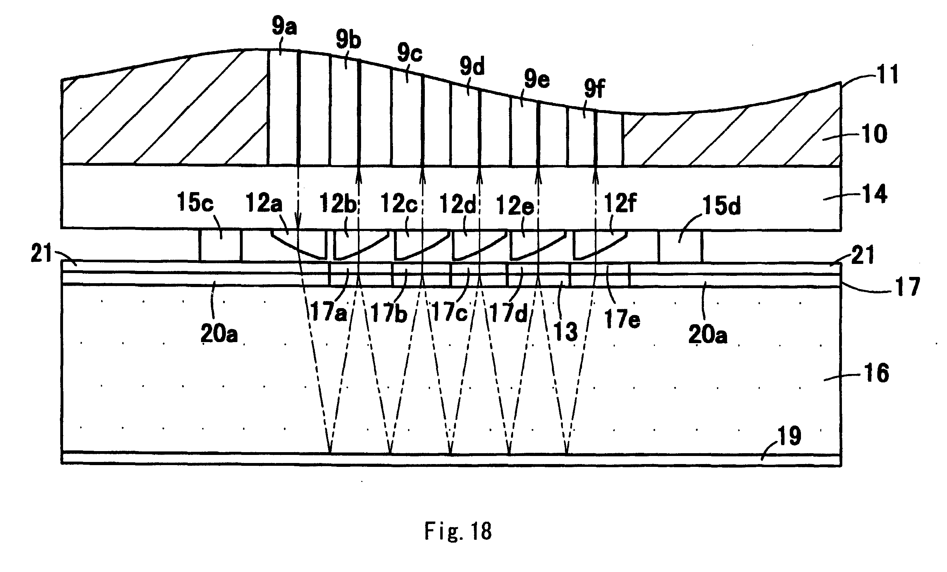

In addition, as shown in FIG. 18, the surfaces of filters 17a to 17e may not necessarily be covered with film 20a or AR coating layer 21. Here, in order for the surface of filter layer 17 to be flat, the total thickness of film 20a and AR coating layer 21 must be equal to the total thickness of peeling film 13 and filters 17a to 17e.

### (Third Embodiment)

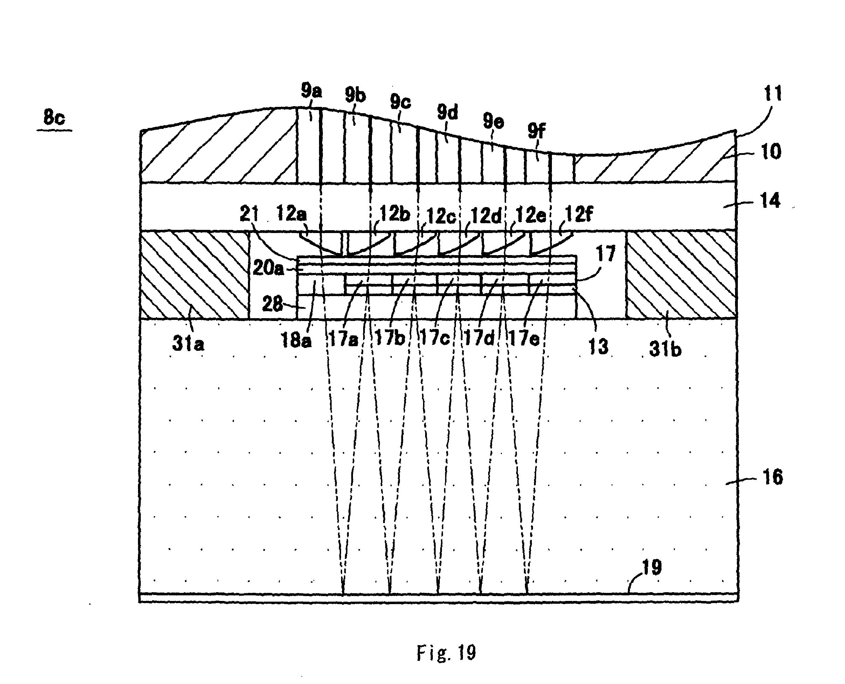

FIG. 19 is a schematic cross sectional diagram of a portion of an optical multiplexer/demultiplexer 8c according to the third embodiment of the present invention, and is a diagram that corresponds to FIG. 14 which is described in the first embodiment. The descriptions of the components of optical multiplexer/demultiplexer 8c shown in FIG. 19 which have the same configuration as those described in the first embodiment are omitted. Filter layer 17 is formed of filters 17a to 17e, peeling films 13 and dummy film 18a. Filter layer 17 can be manufactured in accordance with the manufacturing method that is described in the first embodiment. Filters 17a, 17b, 17c, 17d and 17e are dielectric multilayer films for respectively transmitting light having wavelengths λ1, λ2, λ3, λ4 and λ5. So that the height of micro lens array 14 can be adjusted, spacer blocks 31a and 31b are sandwiched between optical guiding block 16 and micro lens array 14.

In optical multiplexer/demultiplexer 8c according to the present embodiment, a transparent adhesive is applied to a transparent plate 28, such as a glass plate, and filter layer 17 is formed on top of this. A film 20a on the surface of which an AR coating layer 21 is provided is further made to adhere to the top of filter layer 17 with a transparent adhesive. As described above, transparent plate 28 on the surface of which filter layer 17 or the like is formed, and spacer blocks 31a and 31b are made to adhere to the surface of optical guiding block 16, and furthermore, micro lens array 14 or the like is made to adhere to the top thereof, and thus, optical multiplexer/demultiplexer 8c is completed.

### (Fourth Embodiment)

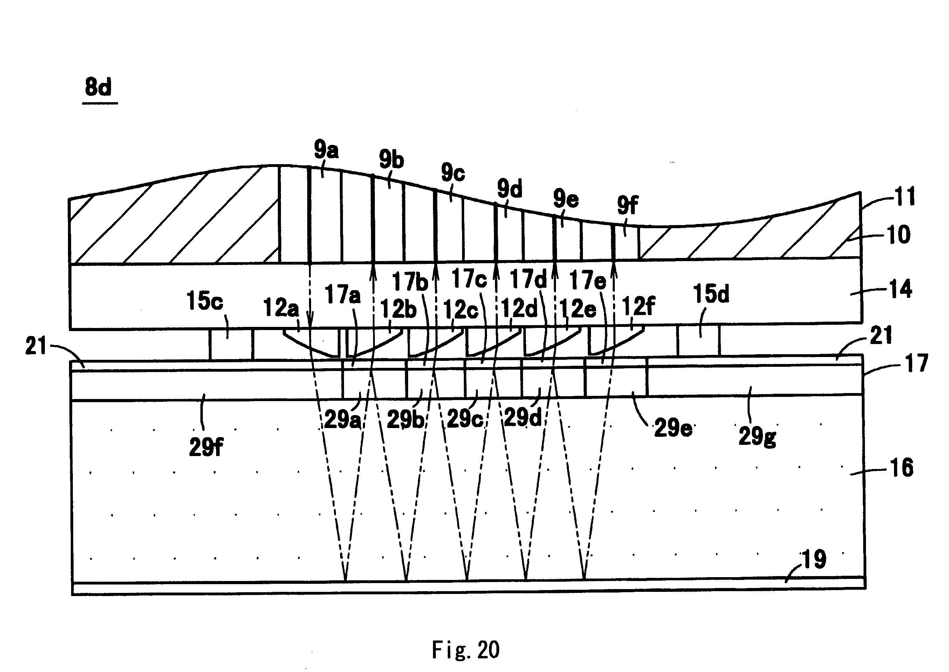

FIG. 20 is a schematic cross sectional diagram of a portion of an optical multiplexer/demultiplexer 8d according to the fourth embodiment of the present invention, and is a diagram that corresponds to FIG. 14 which is described in the first embodiment. In the present optical multiplexer/demultiplexer 8d, the descriptions of the components which have the same configuration as those described in the first embodiment are omitted. Filter layer 17 of optical multiplexer/demultiplexer 8d according to the present embodiment is formed of filter blocks 29a, 29b, 29c, 29d, 29e, 29f and 29g, where filters 17a, 17b, 17c, 17d and 17e, as well as an AR coating layer 21, are formed on the surfaces of transparent blocks, such as glass. Filters 17a, 17b, 17c, 17d and 17e are dielectric multilayer films for respectively transmitting light having wavelength bands of λ1, λ2, λ3, λ4 and λ5, and for reflecting light having other wavelength bands.

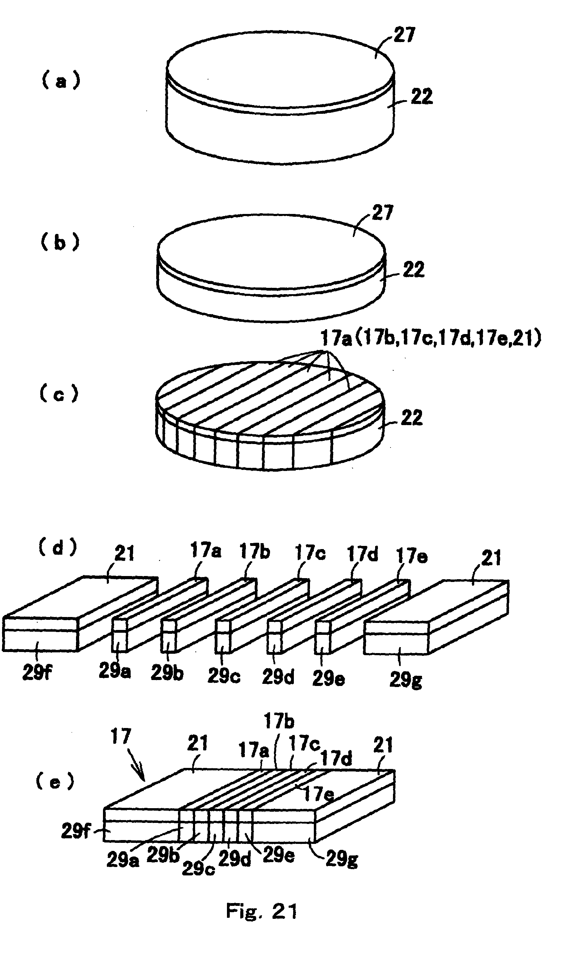

Next, a manufacturing method for filter layer 17 according to the present embodiment is described in reference to FIG. 21 (a) to FIG. 21 (e). First, as shown in FIG. 21 (a), a filter thin film 27 having particular filter characteristics is formed on the surface of a transparent substrate 22, such as glass. Substrates 22 on the surface of which filter thin films 27 are formed are prepared, where the number of types of substrates 22 is the same as the number of types of filters 17a, 17b, 17c, 17d and 17e. In addition, substrates 22 on the surfaces of which AR coating layers 21 having the same thickness as filter thin films 27 are formed are also prepared.

Next, as shown in FIG. 21(b), the rear surface of substrate 22 is polished, so as to reduce the thickness of substrate 22 as much as possible, and is cut in width into filters 17a, 17b, 17c, 17d and 17e or AR coating layers 21, which are utilized in optical multiplexer/demultiplexer 8d, as shown in FIG. 21(c). Substrate 22 that has been cut into stripe forms on the surfaces of which filters 17a to 17e or AR coating layers 21 are formed become filter blocks 29a to 29g.

Next, filter blocks 29a to 29e with filters 17a to 17e and filter blocks 29f and 29g with AR coatings 21 are aligned in order shown in FIG. 21(d), and the sides are made to adhere to each other, and the rear surface thereof is polished so as to be flat, and thus, filter layer 17, as shown in FIG. 21(e), is completed. This filter layer 17 is made to adhere to the upper surface of optical guiding block 16 with a transparent adhesive.

### (Fifth Embodiment)

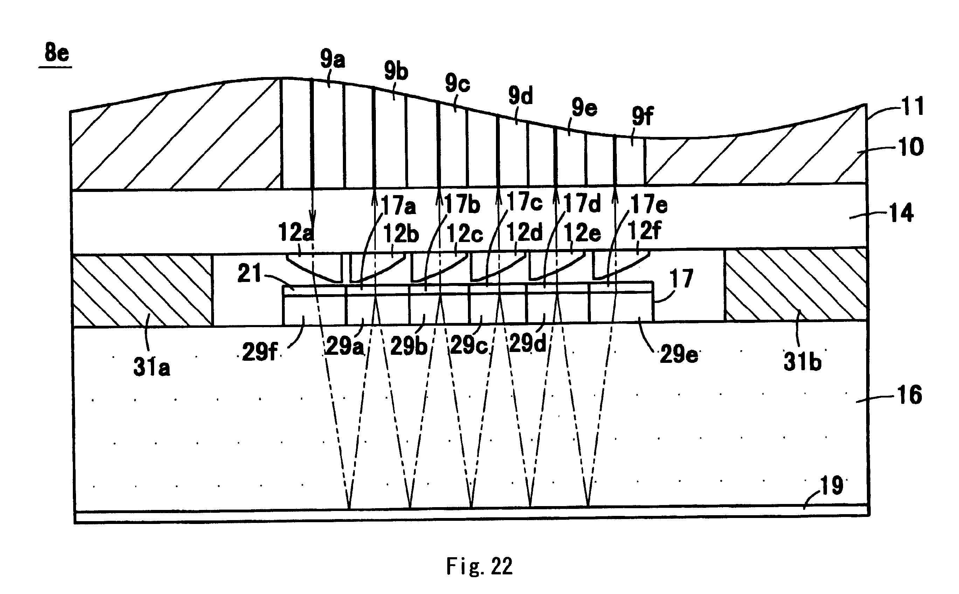

FIG. 22 is a schematic cross sectional diagram of a portion of an optical multiplexer/demultiplexer 8e according to the fifth embodiment of the present invention, and is a diagram that corresponds to FIG. 14 of the first embodiment and FIG. 20 which is described in the fourth embodiment. The descriptions of the components of this optical multiplexer/demultiplexer 8e which have the same configuration as those described in the first or fourth embodiment are omitted. Filters 17a, 17b, 17c , 17d and 17e are dielectric multilayer films for respectively transmitting light having wavelengths λ1, λ2, λ3, λ4 and λ5, and for reflecting light having other wavelength bands. Filter layer 17 is formed of filter blocks 29a to 29f where these filters 17a to 17e, as well as AR coating layers 21, are formed on the surfaces of transparent blocks, such as glass.

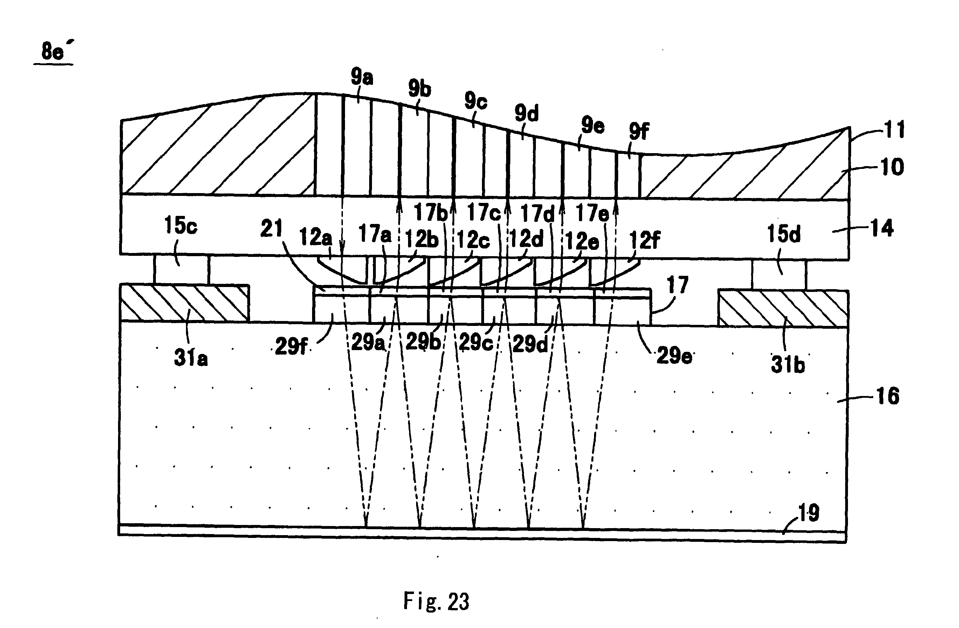

As shown in FIG. 22, filter layer 17 (filter blocks 29a to 29f) of optical multiplexer/demultiplexer 8e according to the present embodiment is placed only below micro lenses 12a to 12f. Only spacer blocks 31a and 31b which are completely separated from micro lens array 14, as shown in FIG. 22, may be used as the spacers for determining the interval between micro lenses 12a to 12f and filter layer 17. However, in the case where, as in optical multiplexer/demultiplexer 8e' shown in FIG. 23, spacers 15a, 15b, 15c and 15d which are formed so as to be integrated with micro lens array 14, and spacer blocks 31a and 31b for adjusting the height by being added to these spacers 15a to 15b may be used, micro lens array 14 that is described in the first embodiment can also be utilized in this embodiment. Here, in this embodiment, spacers 15a and 15c are joined to spacer block 31a, and spacers 15b and 15d are joined to spacer block 31b.

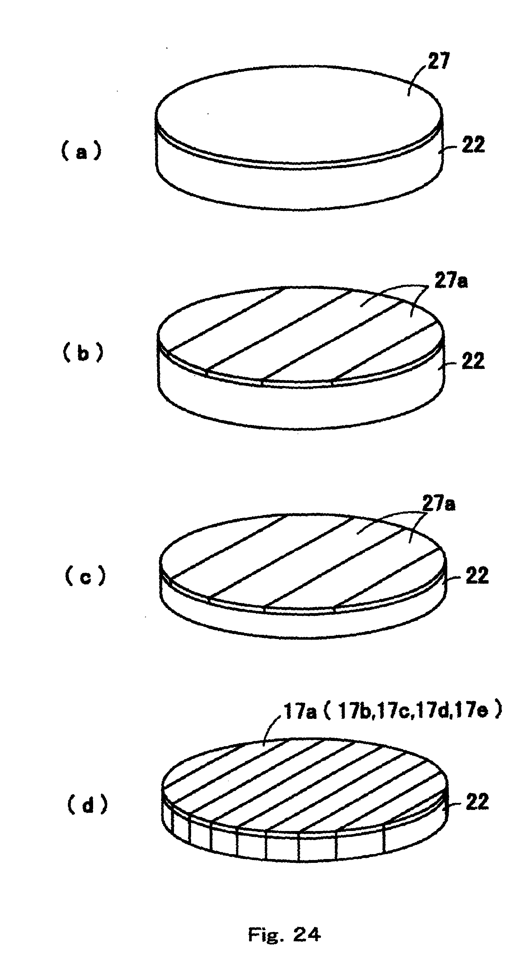

Filter layer 17 of the present embodiment can be manufactured in accordance with the manufacturing method for filter layer 17 that is described in reference to FIG. 21(a) in the fourth embodiment. However, tensile stress occurs in filter thin film 27 that is formed on the upper surface of substrate 22 shown in FIG. 21 in the direction toward its center, and therefore, the glass substrate may be warped or cracked due to this tensile stress when the rear surface of substrate 22 is polished. In order to solve this problem, as shown in FIG. 24(a), filter thin film 27 is cut with a dicing blade, as shown in FIG. 24(b), after the formation of filter thin film 27 on the surface of substrate 22, and after that, as shown in FIG. 24(c), the rear surface of substrate 22 may be polished to a desired thickness. As described above, in the case where filter thin film 27 is cut before polishing substrate 22, the areas of individual filter thin films 27a become small, releasing stress, and therefore, substrate 22 is not warped or cracked, even when substrate 22 becomes thin as a result of polishing. Here, filter thin film 27a may not necessarily be cut into widths of filters 17a to 17e, but rather, may be cut so as to have widths that are several times greater than the widths of filters, and which sufficiently relieve the above-described stress.

Finally, as shown in FIG. 24(d), filter thin film 27a and substrate 22 are completely cut into widths of filters 17a to 17e which are utilized in optical multiplexer/demultiplexer 8e. The process after this is the same as that described in the fourth embodiment.

### (Sixth Embodiment)

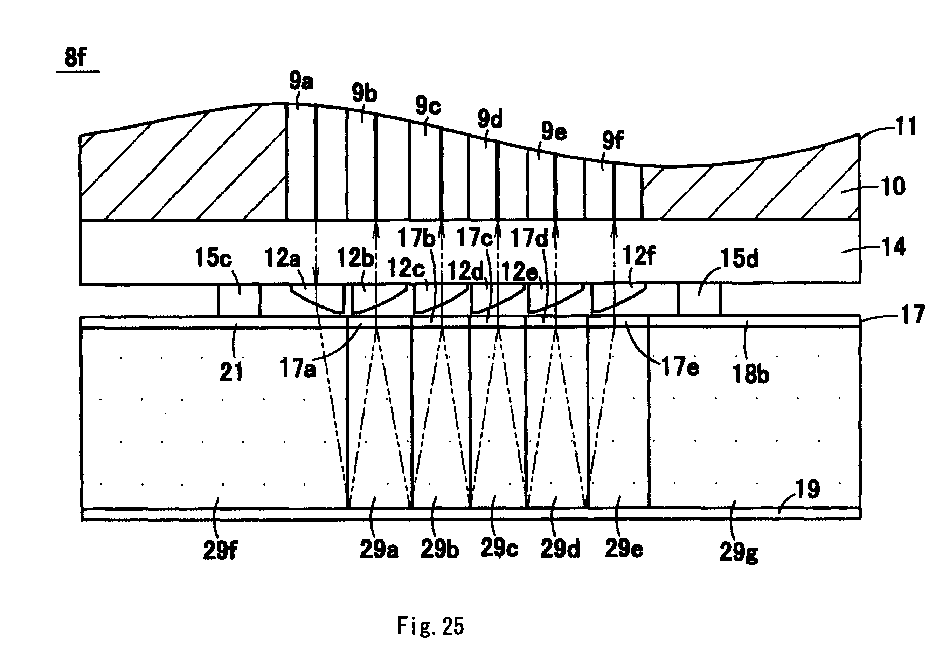

FIG. 25 is a schematic cross sectional diagram of a portion of an optical multiplexer/demultiplexer 8f according to the sixth embodiment of the present invention, and is a diagram that corresponds to FIG. 14 which is described in the first embodiment. This optical multiplexer/demultiplexer 8f is formed of an optical fiber array 11, a micro lens array 14 on the lower surface of which micro lenses 12a to 12f and spacers 15a, 15b, 15c and 15d are provided, filter layer 17 and mirror layer 19.

Filter layer 17 is formed of filter blocks 29a, 29b, 29c, 29d, 29e, 29f and 29g, where filters 17a, 17b, 17c, 17d and 17e, and AR coating layer 21, as well as dummy film 18b, are formed on the surfaces of transparent blocks, such as glass. Filters 17a, 17b, 17c, 17d and 17e are dielectric multilayer films for respectively transmitting light having wavelengths λ1, λ2, λ3, λ4 and λ5, and for reflecting light having other wavelength bands. In optical multiplexer/demultiplexer 8f according to the present embodiment, filter layer 17 is manufactured in accordance with the manufacturing method that is described in the fourth and fifth embodiments (FIG. 21 and FIG. 24), and mirror layer 19 is formed on the rear surface of this filter layer 17.

### (Seventh Embodiment)

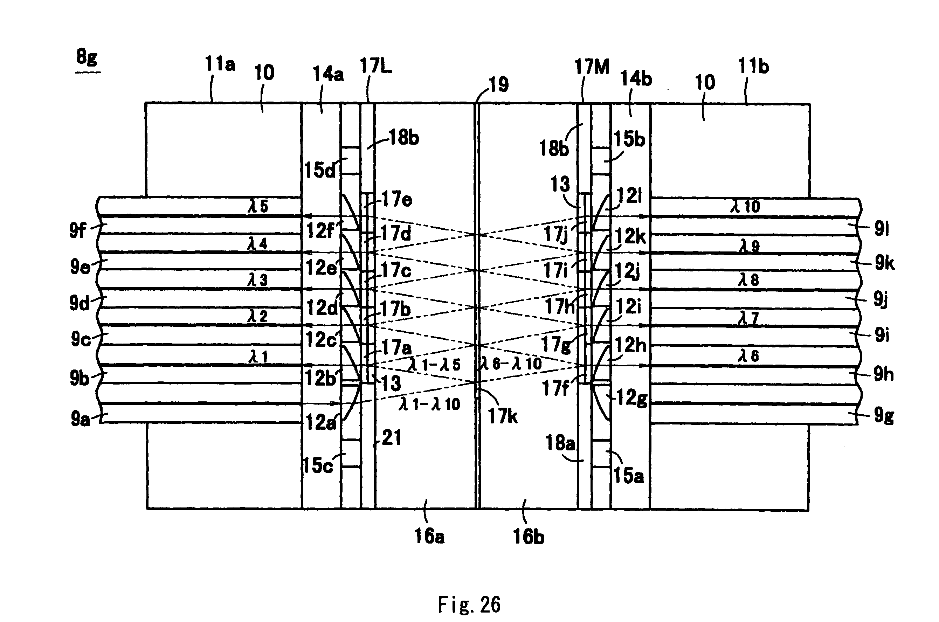

FIG. 26 is a schematic cross sectional diagram of an optical multiplexer/demultiplexer 8g according to the seventh embodiment of the present invention, and illustrates the structure thereof and the manner in which an optical signal is demultiplexed. This optical multiplexer/demultiplexer 8g has a form where two optical multiplexers/demultiplexers, each of which is described in the first embodiment, are placed and integrated symmetrically with mirror layer 19 placed in between.

Optical multiplexer/demultiplexer 8g according to the present embodiment is formed of an optical fiber array 11a, a micro lens array 14a, a filter layer 17L, an optical guiding block 16a, a mirror layer 19, an optical guiding block 16b, a filter layer 17M, a micro lens array 14b and an optical fiber array 11b. Here, optical fiber array 11a is made of optical fibers 9a, 9b, 9c, 9d, 9e and 9f and connector 10. In addition, micro lens array 14a is provided with micro lenses 12a, 12b, 12c, 12d, 12e and 12f and spacers 15a, 15b, 15c and 15d on the lower surface. Micro lens array 14b is provided with micro lenses 12g, 12h, 12i, 12j, 12k and 121 and spacers 15a, 15b, 15c and 15d on the lower surface. Optical fiber array 11b is made of optical fibers 9g, 9h, 9i, 9j, 9k and 9l and connector 10.

Filter layer 17L is formed of an AR coating layer (antireflection film) 21, filters 17a, 17b, 17c, 27d and 17e for respectively transmitting light having wavelengths λ1, λ2, λ3, λ4 and λ5, peeling films 13 and dummy film (spacer) 18b. From among the above, AR coating layer 21 faces micro lens 12a, and filters 17a to 17e face micro lenses 12b to 12f, respectively. In addition, filter layer 17M is formed of filters 17f, 17g, 17h, 17i and 17j for respective light having wavelengths λ6, λ7, λ8, λ9 and λ10 and dummy films (spacers) 18a and 18b. From among the above, dummy film 18a faces micro lens 12g, and filters 17f to 17j face micro lenses 12h to 121, respectively. Mirror layer 19 is formed of a substance layer having a high reflectance, such as a metal film, and both surfaces thereof are reflective surfaces. In addition, a filter 17k for transmitting light having wavelengths λ6, λ7, λ8, λ9 and λ10 is provided in an opening that is provided in a portion of mirror layer 19.

Next, the operation of demultiplexing light in this optical multiplexer/demultiplexer 8g is described. Light having wavelengths λ1 to λ10 from optical fiber 9a that has entered into micro lens 12a transmits through micro lens 12a, and thereby, the light path thereof is bent so that the light becomes parallel light, and then, transmits through AR coating layer 21 and optical guiding block 16a so as to enter into filter 17k of mirror layer 19.

Light having wavelengths λ1 to λ5 is reflected from this filter 17k. The reflected light that is light having wavelengths λ1 to λ5 is repeatedly reflected between filter layer 17L and mirror layer 19, while light having wavelengths λ1, λ2, λ3, λ4 and λ5 sequentially transmits through respective filters 17a, 17b, 17c, 17d and 17e, so as to be demultiplexed, and thus, light having wavelengths λ1, λ2, λ3, λ4 and λ5 can respectively be taken out from optical fibers 9b, 9c, 9d, 9e and 9f.

In addition, light having wavelengths λ6 to λ10 that has transmitted through filter 17k of mirror layer 19 transmits through optical guiding block 16b, so as to enter into filter layer 17M. Here, in the same manner as in the above, light having wavelengths λ6 to λ10 is repeatedly reflected between filter layer 17M and mirror layer 19, while light having wavelengths λ6, λ7, λ8, λ9 and λ10 sequentially transmits through respective filters 17f, 17g, 17h, 17i and 17j, so as to be demultiplexed, and thus, light having wavelengths λ6, λ7, λ8, λ9 and λ10 can respectively be taken out from optical fibers 9h, 9i, 9j, 9k and 91.

Mirror layer 19 is shared in optical multiplexer/demultiplexer 8g according to the present invention, which can thus be made compact and demultiplex light into many wavelengths.

Here, although optical fibers 9g and 12g are not needed, they are provided in this embodiment, taking into consideration a case where they are used in other embodiments.

### (Eighth Embodiment)

Although in any of the first to seventh embodiments, lenses made of portions of an aspherical lens (that is, inclination lens) which can bend the direction of the optical axis of light that enters into and is emitted from optical fibers 9a to 9f are used as micro lenses 12a to 12f of micro lens array 14, such lenses have forms which are not rotationally symmetric around the axes, and are categorized as special lenses of which the processing or formation is difficult, and thus, cost is easily increased. The eighth embodiment is provided taking this problem into consideration, and the direction of the optical axis of light is bent by using a prism.

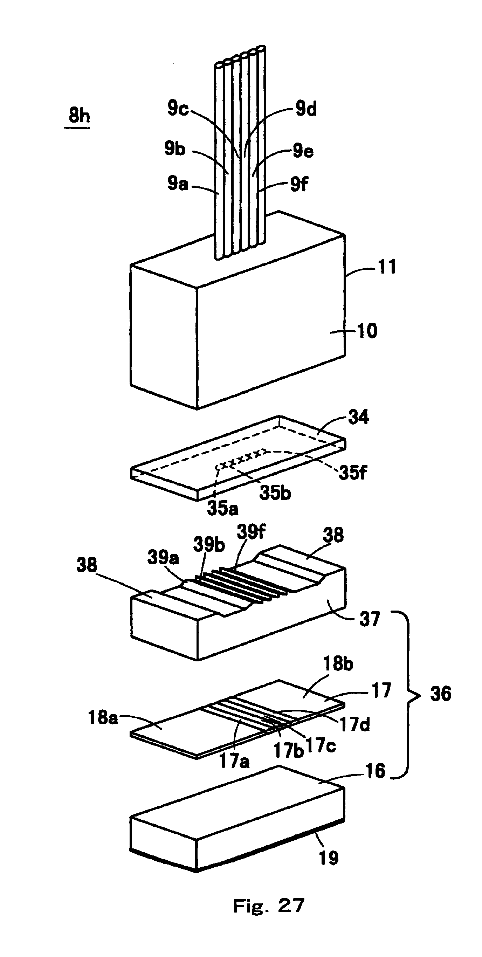

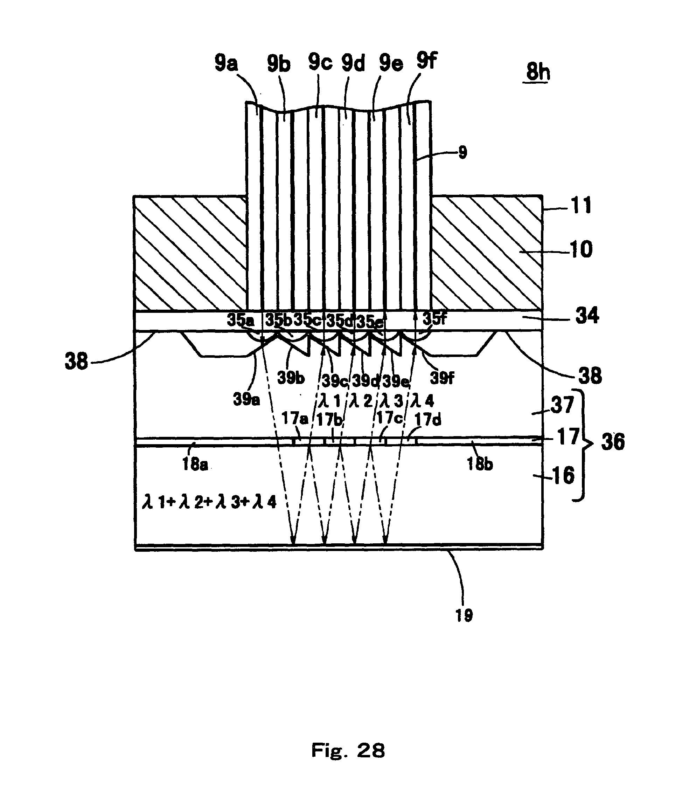

FIG. 27 is an exploded perspective diagram of an optical multiplexer/demultiplexer 8h according to the eighth embodiment of the present invention, and FIG. 28 is a schematic cross sectional diagram thereof. In this optical multiplexer/demultiplexer 8h, end portions of a number of optical fibers 9a, 9b, 9c, 9d, 9e and 9f, which are put together in a line, are inserted into connector 10, and thereby, the end portions of respective optical fibers 9a to 9f are supported in parallel by connector 10 made of plastic. The end surfaces of respective optical fibers 9a to 9f are aligned and exposed from the lower surface of optical fiber array 11. Micro lens array 34 in panel form is made to adhere to the lower surface of this connector 10. A number of micro lenses 35a, 35b, 35c, 35d, 35e and 35f are formed on the surface of micro lens array 34 so as to be aligned. These micro lenses 35a to 35f are lenses (hereinafter referred to as rectilinear lenses) where the direction of the optical axis of light (direction in which the light beam that passes through the center of the cross section of light flux progresses) after transmitting through the lens coincides with the direction of the optical axis of light before entering into the lens. Such rectilinear lenses are general lenses for emitting a light beam that has entered along the optical axis of the lens in a manner where the light beam passes along the optical axis of the lens, and include spherical lenses having a form that is rotationally symmetric around the optical axis, aspherical lenses and anamorphic lenses of which the design and manufacture are easy and cost is low in comparison with inclination lenses.

The alignment pitch of micro lenses 35a to 35f is equal to the alignment pitch of optical fibers 9a to 9f, and thus, micro lenses 35a to 35f are placed so that the optical axes thereof coincide with those of optical fibers 9a to 9f, respectively. In addition, the thickness of micro lens array 34 is set so that the end surfaces of respective optical fibers 9a to 9f are located approximately at focal points of respective micro lenses 35a to 35f.

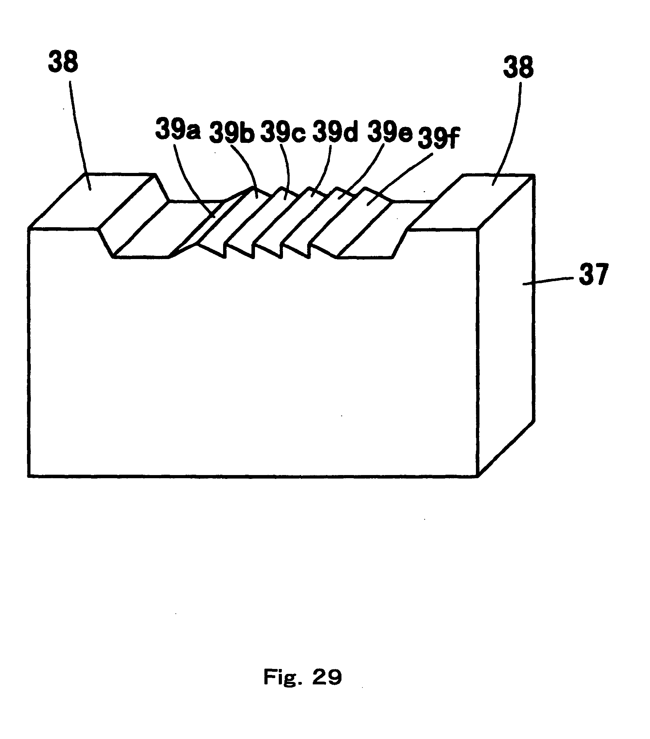

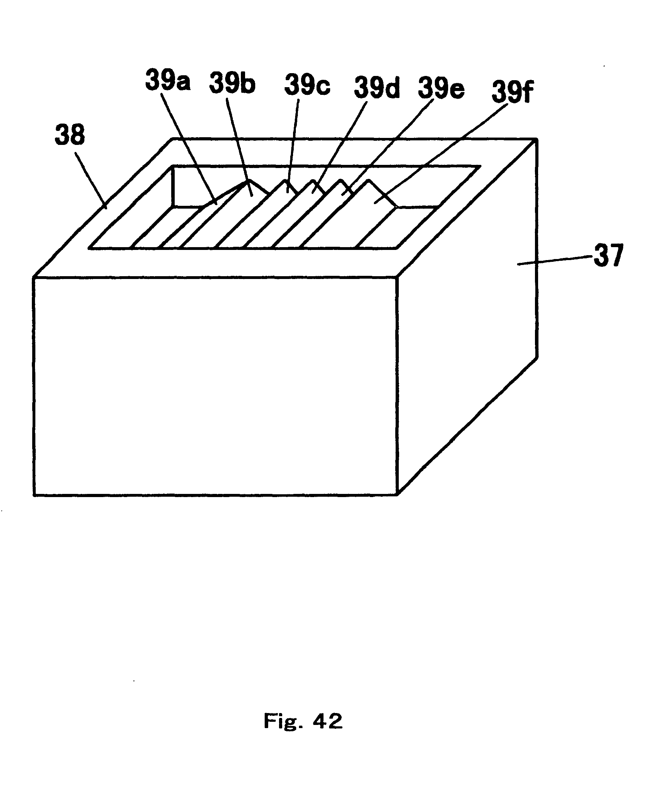

A block for multiplexing/demultiplexing 36 made of a prism block 37, a filter layer 17 and an optical guiding block 16 is placed directly beneath micro lens array 34 that is attached to optical fiber array 11. Prism block 37 is a block in approximately parallelepiped formmade of glass or a transparent plastic material, and as shown in FIG. 29, spacers 38 protrude from the two end portions on the upper surface of the block, and a number of prisms 39a, 39b, 39c, 39d, 39e and 39f of which the cross sections are in triangular form are provided so as to have a pitch that is equal to that of micro lenses 35a to 35f between the two spacers 38. The respective prisms 39a to 39f have an equal inclination angle, and prisms 39b to 39f from among these are inclined in the same direction, while only prism 39a inclines in the direction opposite that of the other prisms 39b to 39f. In addition, spacers 38 and prisms 39a to 39f extend in the direction from the front to the rear while maintaining the same cross sectional forms on the upper surface of prism block 37. Here, although spacers 38 are provided so as to protrude from the two end portions on the upper surface of prism block 37 shown in FIG. 29, a spacer 38 may be formed along the four sides on the upper surface of prism block 37, so that the number of prisms 39a to 39f is provided within a recess in the region surrounded by spacer 38, as shown in FIG. 42.

Filter layer 17 is formed between a pair of dummy films 18a and 18b by aligning a number of filters 17a, 17b, 17c and 17d of which the transmission wavelength regions are λ1, λ2, λ3 and λ4 (see FIG. 8). Filters 17a to 17d are formed so as to have a width that is equal to the pitch of micro lenses 35a to 35f, and the thickness of dummy films 18a and 18b is made to be equal to the thickness of filters 17a to 17d, in order to make uniform the thickness of filter layer 17. Here, filters 17a to 17d, as well as dummy films 18a and 18b, may be made to adhere in advance to a thin transparent resin film (not shown) so as to be integrated. In addition, a peeling layer made of a polyimide film or the like may exist beneath respective filters 17a to 17d, and an AR coating layer may be formed on the surface of prism block 37.

Light guiding block 16 is formed in parallelepiped form of glass, quartz or a transparent plastic material, and a mirror layer 19 made of a dielectricmultilayer film, a metal deposition film or the like having high reflectance is formed on the lower surface of the optical guiding block.

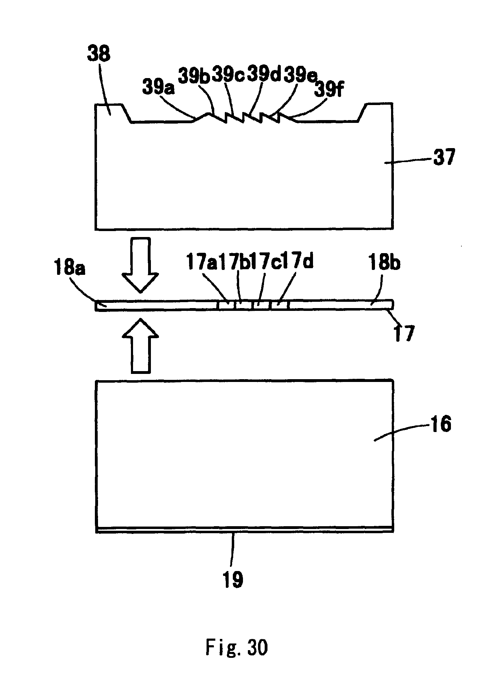

Block for multiplexing/demultiplexing 36 is formed, as shown in FIG. 30, by sandwiching this filter layer 17 between the lower surface of prism block 37 and the upper surface of optical guiding block 16 so as to join and integrate prism block 37 and optical guiding block 16. In this embodiment, dummy films 18a and 18b having the same thickness as filters 17a to 17d, and therefore, the surface of filter layer 17 becomes flat, and it becomes easy to join prism block 37. Block for multiplexing/demultiplexing 36 is placed in proximity of and below micro lens array 14, and prisms 39a to 39f are made to face micro lenses 35a to 35f, respectively. As a result of this, micro lenses 35a to 35f, filter layer 17 and mirror layer 19 are placed so as to be parallel to each other.

In optical multiplexer/demultiplexer 8h that has been assembled in this manner, light that has been emitted from optical fiber 9a is converted to parallel light by micro lens 35a and refracted by prism 39a so as to enter prism block 37, and then, is directed to mirror layer 19. Contrarily, parallel light that is directed to prism 39a after being reflected from mirror layer 19 is refractedbyprism39a so as to proceed parallel to the optical axis of optical fiber 9a, and is condensed by micro lens 35a so as to be coupled to optical fiber 9a. Here, dummy film 18a is located on the light path of this light.

In addition, light that has been emitted from optical fiber 9c is converted to parallel light by micro lens 35c and refracted by prism 39c so as to enter into prism block 37, and then, is directed to mirror layer 19. Contrarily, parallel light that is directed to prism 39c after being reflected from mirror layer 19 is refractedbyprism39c so as to proceed parallel to the optical axis of optical fiber 9c, and then, is condensed by micro lens 35c so as to be coupled to optical fiber 9c. Here, filter 17a is located on the light path of this light.

In the same manner, light that has been emitted from optical fibers 9d to 9f is converted to parallel light by micro lenses 35d to 35f, respectively, and refracted by prisms 39d to 39f so as to enter into prism block 37, and then, is directed to mirror layer 19. Contrarily, parallel light that is directed to prisms 39d to 39f after being reflected from mirror layer 19 is refracted by prisms 39d to 39f, respectively, so as to proceed parallel to the optical axis of optical fibers 9d to 9f, and then, is condensed by micro lenses 35d to 35f so as to be coupled to optical fibers 9d to 9f. Here, filters 17b, 17c and 17d are located on the light path or this light, respectively.

Here, the intervals between the positions where light that has transmitted through respective filters 17a to 17d returns to the plane on which the prisms are formed can be adjusted by adjusting the thickness of optical guiding block 16. In addition, the horizontal distance between the position where light transmits through prism 39a and the position where light that has been reflected from mirror layer 19 and transmitted through filter 17a returns to the plane on which the prisms are formed can be adjusted by adjusting the thickness of prism block 37. Accordingly, the thickness of prism block 37 and the thickness of optical guiding block 16 can be adjusted, and thereby, the positions where light returns to prisms 39c to 39f can be adjusted so as to coincide with the positions of prisms 39c to 39f.

Next, the operation of demultiplexing light in this optical multiplexer/demultiplexer 8h is described in reference to FIG. 28. When light having wavelengths λ1, λ2, λ3 and λ4 is emitted from optical fiber 9a, light from optical fiber 9a that has entered into micro lens 35a is converted to parallel light by micro lens 35a, and after that, the light enters into prism 39a. The direction of the optical axis of the light that has entered into prism 39a is bent at the time when the light transmits through prism 39a, and the light diagonally enters into prism block 37 and transmits through dummy film 18a and optical guiding block 16 so as to reach mirror layer 19. Light having wavelengths λ1, λ2, λ3 and λ4 that has been reflected from mirror layer 19 again transmits through optical guiding block 16 so as to reach filter 17a. Light having wavelength λ1 from among light that has entered into filter 17a transmits through filter 17a so as to enter into prism 39c, and the direction of the optical axis is bent at the time when the light transmits through prism 39c, and then, the light is coupled to optical fiber 9c by means of micro lens 35c. Accordingly, it is possible to take out only light having wavelength λ1 from the light emitting end of optical fiber 9c.

Meanwhile, light having wavelengths λ2, λ3 and λ4 that has been reflected from filter 17a is again reflected frommirror layer 19 so as to enter into filter 17b. Light having wavelength λ2 from among light that has entered into filter 17b transmits through filter 17b so as to enter into prism 39d, and the direction of the optical axis is bent at the time when the light transmits through prism 39d, and the light is coupled to optical fiber 9d by means of micro lens 35d. Accordingly, it is possible to take out only light having wavelength λ2 from the light emitting end of optical fiber 9d.

In the same manner, light having wavelengths λ3 and λ4 that has been reflected from filter 17b is further reflected from mirror layer 19 so as to enter into filter 17c. Light having wavelength λ3 from among the light that has entered into filter 17c transmits through filter 17c so as to enter into prism 39e, and the direction of the optical axis is bent at the time when the light transmits through prism 39e, and the light is coupled to optical fiber 9e by means of micro lens 35e. Accordingly, it is possible to take out only light having wavelength λ3 from the light emitting end of optical fiber 9e.

Furthermore, light having wavelength λ4 that has been reflected from filter 17c is further reflected from mirror layer 19 so as to enter into filter 17d. Light having wavelength λ4 that has transmitted through filter 17d enters into prism 39f, and the direction of the optical axis is bent at the time when the light transmits through prism 39f, and the light is coupled to optical fiber 9f by means of micro lens 35f. Accordingly, it is possible to take out light having wavelength λ4 from the light emitting end of optical fiber 9f.

In this manner, optical multiplexer/demultiplexer 8h can demultiplex light that has been multiplexed. Conversely, the optical multiplexer/demultiplexer can be utilized as a multiplexer, when light having wavelengths λ1 to λ4 that has propagated through optical fibers 9c to 9f is multiplexed so as to be taken out from optical fiber 9a (see FIG. 15).

Here, a joining method at the time when block for multiplexing/demultiplexing 36 is manufactured is described. In the case where block for multiplexing/demultiplexing 36 is assembled, as shown in FIG. 30, filter layer 17 may be sandwiched between prism block 37 and optical guiding block 16, and then, the two may be made to adhere to each other with a transparent adhesive so as to be integrated. Alternatively, dummy film 18a, filters 17a to 17d and dummy film 18b may be sequentially aligned on and made to adhere with an adhesive to the upper surface of optical guiding block 16, and then, the lower surface of prism block 37 may be made to adhere to the top of these with an adhesive. At this time, filters 17a to 17d can be positioned by the width of dummy film 18a or 18b, in the case where the end of dummy film 18a or dummy film 18b is aligned with the end of the lower surface of prism block 37.

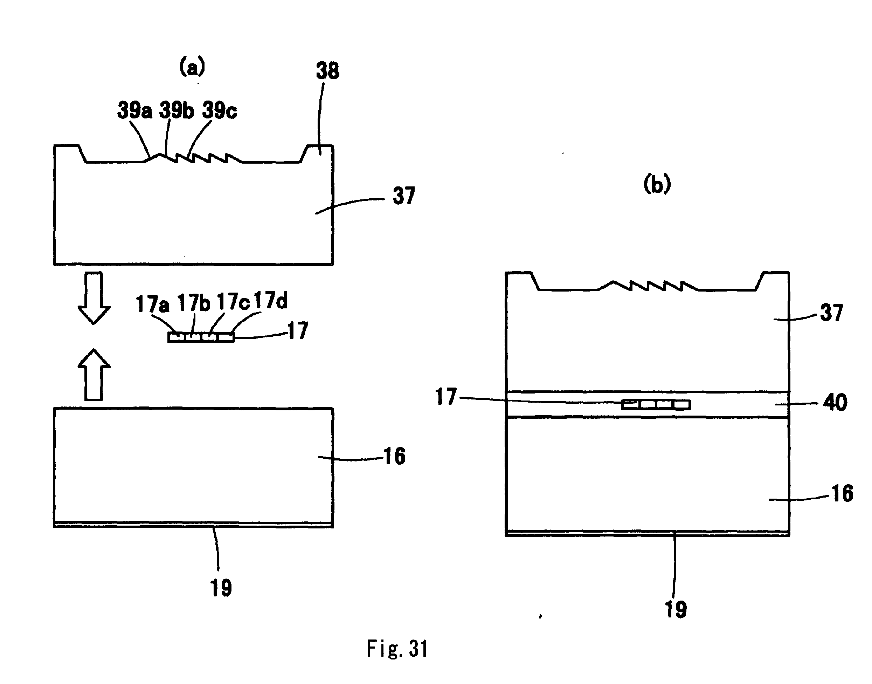

In addition, as shown in FIG. 31(a), filter layer 17 may be formed of only filters 17a to 17b without using dummy films 18a and 18b (filters 17a to 17d may have been pasted to the top of a thin transparent resin film), and this may be sandwiched between prism block 37 and optical guiding block 16, and these may be made to adhere to each other with adhesive 40. In such a case, the gap between prism block 37 and optical guiding block 16 on the outside of filter layer 17 is filled in with adhesive 40.

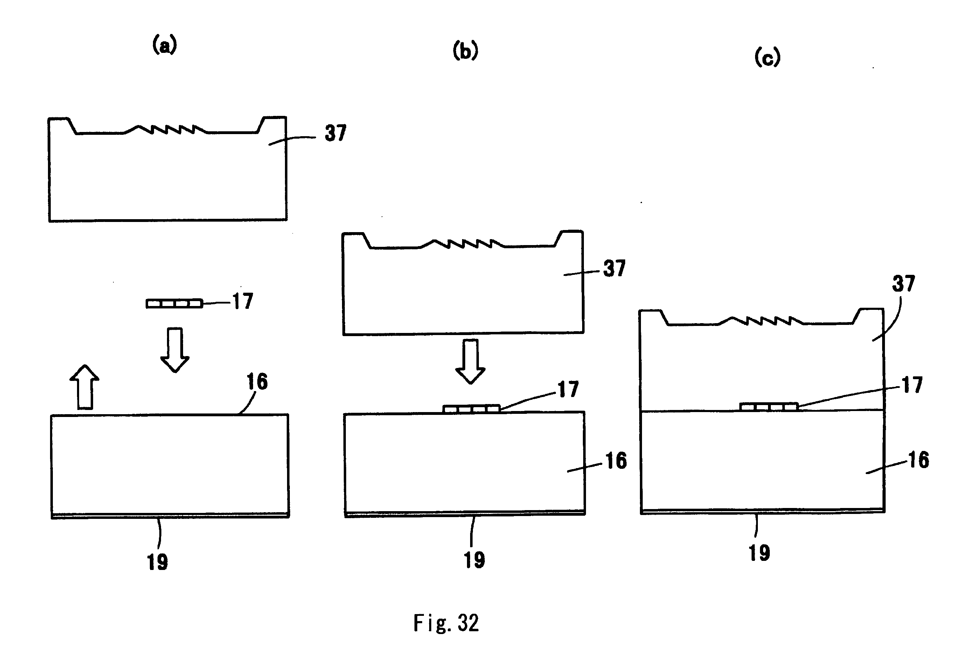

Alternatively, as shown in FIG. 32(a), the area of filter layer 17 may be set to be smaller than the area of the lower surface of prismblock 37 and the upper surface of optical guiding block 16, and this filter layer 17 may temporarily be made to adhere to the upper surface of optical guiding block 16 with an adhesive or the like, as shown in FIG. 32(b), and after that, as shown in FIG. 32(c), prism block 37 may be placed on top of optical guiding block 16 so that the lower surface of prism block 37 and the upper surface of optical guiding block 16 are joined to each other without using an adhesive, and at the same time filter layer 17 may be sandwiched between prism block 37 and optical guiding block 16. A contact bonding method for joining items by applying pressure, a low temperature fusing method for joining items by applying heat at a low temperature, an ultrasound wave joining method and the like can be used as the method for joining prism block 37 to optical guiding block 16 without using an adhesive.

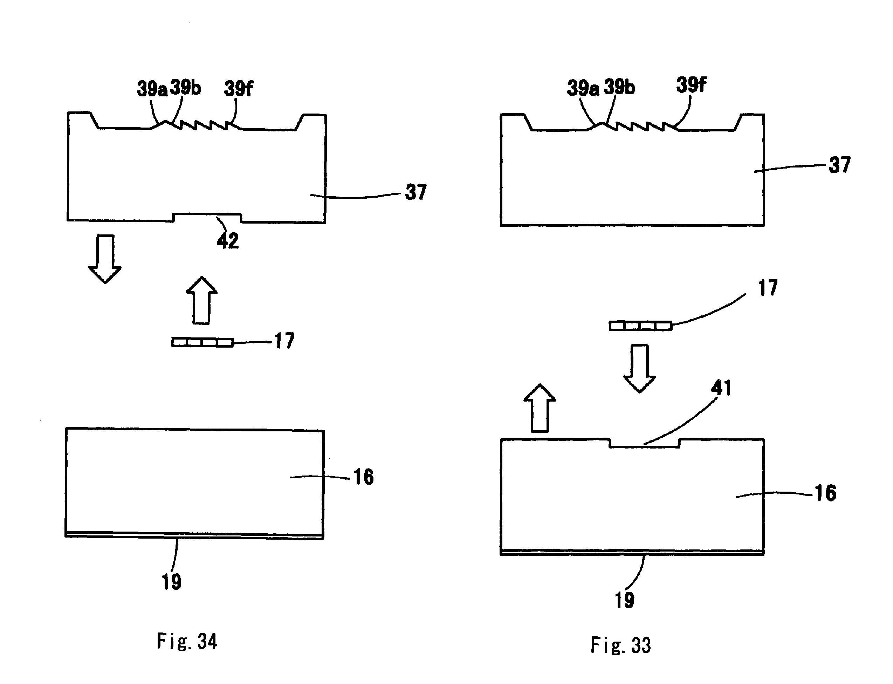

In addition, although filters 17a to 17d are positioned by using the width of dummy film 18a or dummy film 18b in the example shown in FIG. 30, a trench 41 for positioning filter layer 17 may be provided in the upper surface of optical guiding block 16, as shown in FIG. 33. That is, trench 41 that has been provided in the upper surface of optical guiding block 16 has a width that is approximately equal to the width of filter layer 17, and has a depth that is approximately equal to the thickness of filter layer 17, and therefore, filter layer 17 can be contained in this trench 41 so that prism block 37 can be joined to the upper surface of optical guiding block 16, and thereby, filter layer 17 can be easily positioned.

In the same manner, as shown in FIG. 34, a trench 42 is provided in the lower surface of prism block 37, and filter layer 17 is contained in this trench 42 so that optical guiding block 16 can be joined to the lower surface of prism block 37, and thereby, filter layer 17 can be easily positioned. It is preferable to provide trench 42 in prism block 37, in terms of positioning of prisms 39a to 39f and filter layer 17.

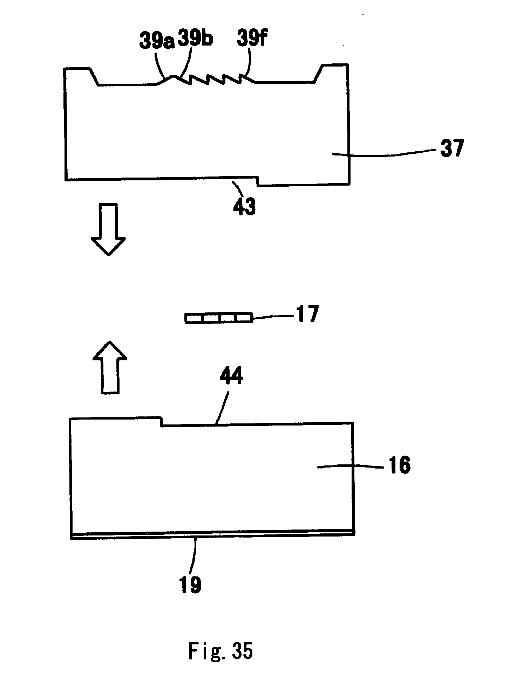

Alternatively, as shown in FIG. 35, a step portion 43 may be provided on the lower surface of prism block 37, and a step portion 44 may also be provided, on the upper surface of optical guiding block 16 so that filter layer 17 can be contained in a space that is created between step portions 43 and 44 when prism block 37 and optical guiding block 16 are joined together, and thereby, filter layer 17 can be positioned. In the case where prism block 37 and optical guiding block 16 are joined together after filter layer 17 has been made to adhere to one step portion 43 or 44 in such a structure, the work of positioning filter layer 17 can be made easy, in comparison with containment of filter layer 17 in trench 41 or 42 as shown in FIG. 33 and 34.

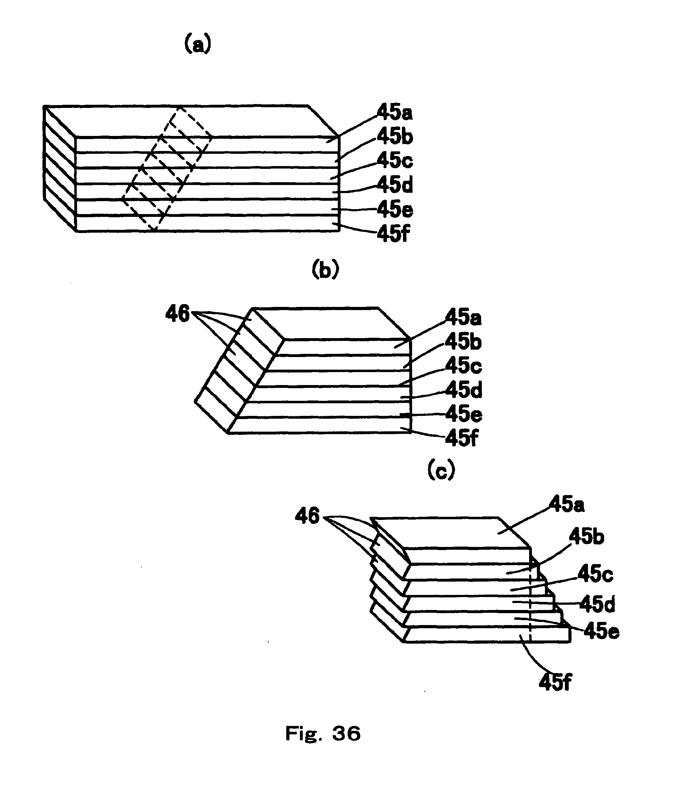

Next, a manufacturing method for block for multiplexing/demultiplexing 36 that is used in optical multiplexer/demultiplexer 8h according to this embodiment is described. First, a manufacturing method for a die for forming prism block 37 is described, in reference to FIG. 36 to FIG. 39. Plates 45a, 45b, 45c, 45d, 45e and 45f made of metal plates, such as stainless steel, aluminum, brass or the like, of which the number is equal to that of prisms 39a to 39f, are prepared. These plates 45a to 45f have a thickness that is equal to the pitch of prisms 39a to 39f, and have a width that is equal to the width of prism block 37, and the front surface of these plates are finished as mirror surfaces. As shown in FIG. 36(a), these plates 45a o 45f are overlapped and made to make contact with each other, and then, clamped using a jig or the like so as not to shift from each other and so as to be integrated. In this state, the end surfaces of these plates 45a to 45f are diagonally polished along the plane shown by broken lines in FIG. 36(a), so that the polished surfaces are finished as mirror surfaces. In this manner, as shown in FIG. 36(b), the end surfaces of respective plates 45a to 45f can be polished at the same time, and in addition, dispersion in the angle of polishing of the end surfaces of respective plates 45a to 45f can be reduced. In this manner, the inclination of inclining surface 46 that has been formed on the end surfaces of respective plates 45a to 45f becomes equal to the inclination of prisms 39a to 39f, of which the inclination angle is measured when inclining surface 46 is turned downward.

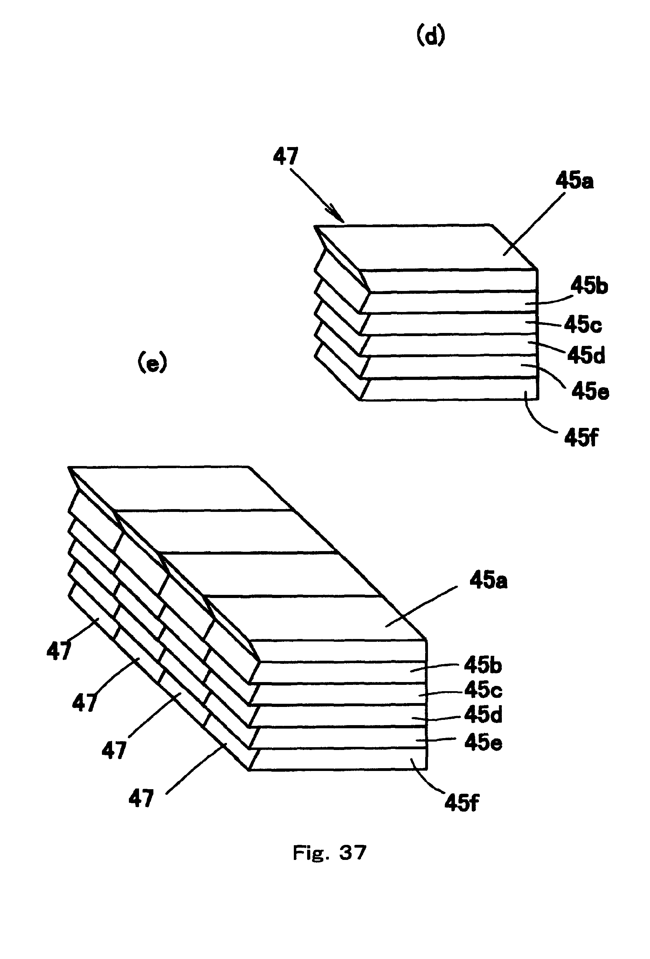

Next, as shown in FIG. 36(c), the top layer plate 45a is turned over, and respective plates 45a to 45f are rearranged so that the tops on the inclining surface 46 side are aligned. In this state, the entirety of inclining surface 46 of respective plates 45a to 45f form a reversed pattern of the pattern in the prism formation region on the surface of prism block 37. In this state, respective plates 45a to 45f are again clamped with a jig or the like, so as to be integrated, and after that, the end surfaces on the side opposite inclining surface 46 are vertically polished along the plane shown by a broken line in FIG. 36(c), so that these end surfaces form a plane. As a result of this, as shown in FIG. 37(d), a partial die for forming a prism pattern 47 of which the width is equal to that of one prism block 37 is gained. Partial dies for forming a prism pattern 47 that have been gained as described above are laterally aligned so as to be made to make contact with each other and be integrated, as shown in FIG. 37(e).

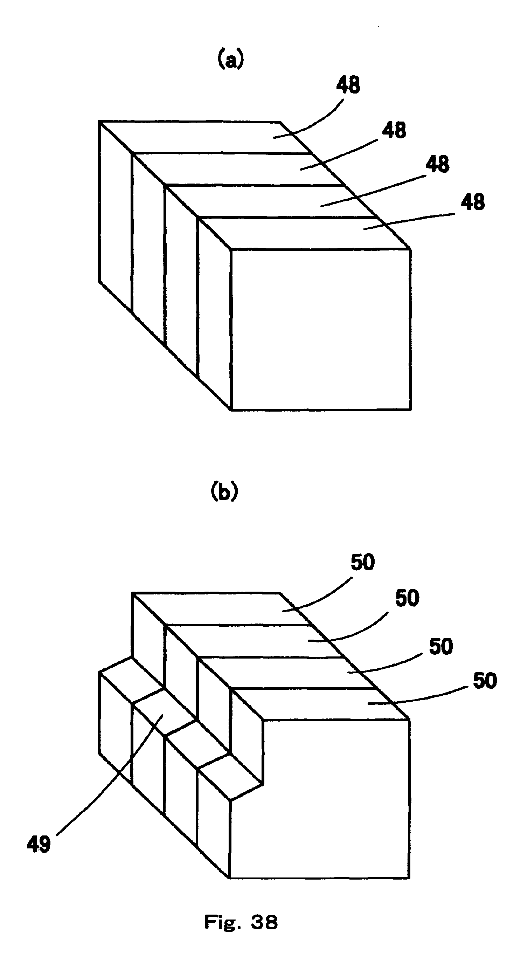

Next, as shown in FIG. 38(a), blocks 48 made of metal having a width that is equal to the width of prism block 37 are aligned so as to be made to make contact with each other, and the end surfaces thereof are processed as shown in FIG. 38(b), so as to gain forming blocks 50. The form of processed surfaces 49 of these forming blocks 50 becomes an inverted form of the form of the upper surface of prism block 37 in the region outside of the prism forming region (spacer 38 and its adjoining recess). These forming blocks 50 of which the number is equal to that of partial dies for forming a prism pattern 47 which are aligned are aligned so as to be made to make contact with each other and be integrated.

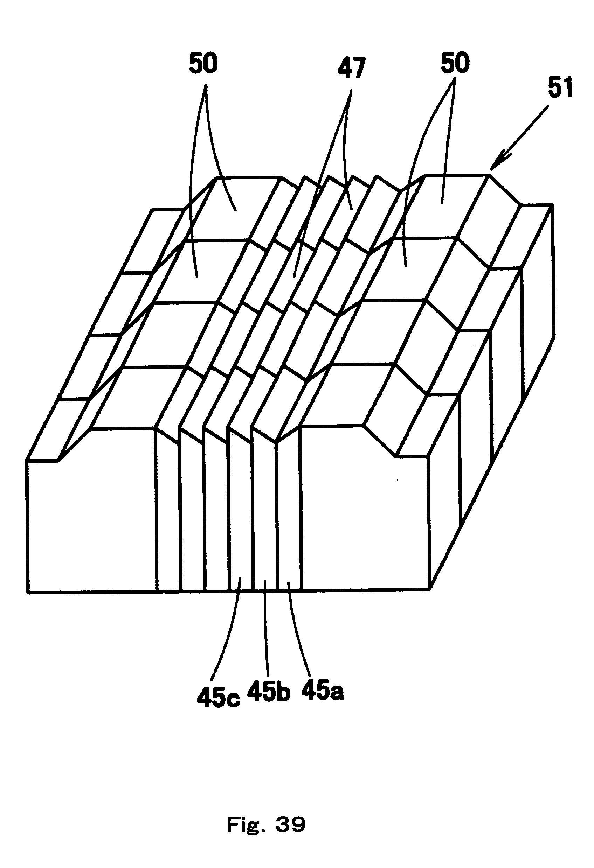

Furthermore, respective partial dies for forming a prism pattern 47 are sandwiched by forming blocks 50 so as to be integrated, and a partial die 51 shown in FIG. 39 is gained. According to a method for integrating respective parts (plates and forming blocks) that formpartial die 51, these may be clamped together using an appropriate jig (such as a clamper or a bolt and nut) so as to be physically integrated, or made to adhere to each other using a heat resistant adhesive. In addition, in the case where the surfaces of the respective parts are finished with high precision, plates 45a and forming blocks 50 are joined together and integrated simply by being made to make contact with each other.

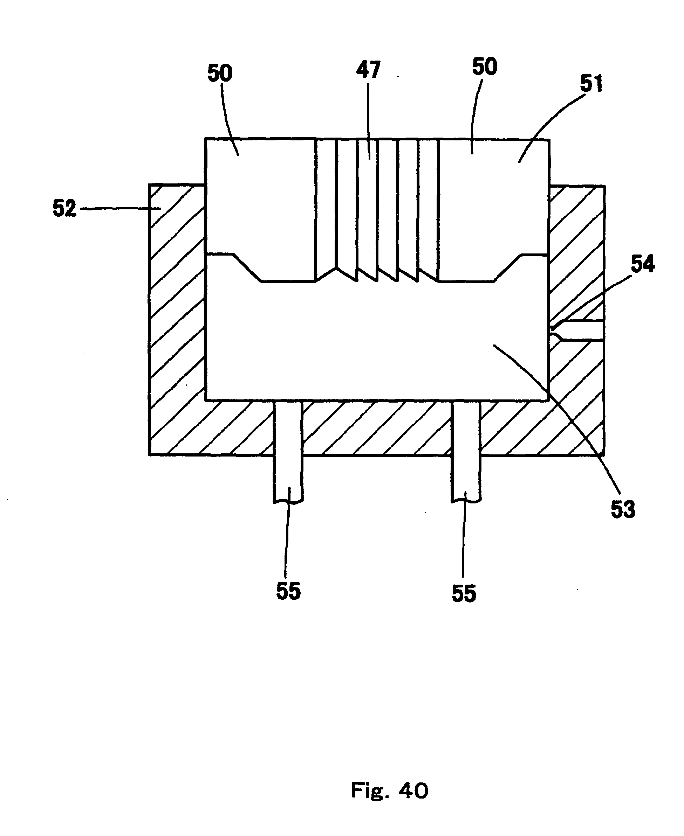

Partial die 51 shown in FIG. 39 is inserted into a die body 52, as shown in FIG. 40, in a manner where a cavity 53 for forming prism block 37 is created between partial die 51 and die body 52. Die body 52 is fixed to the stationary board of a press, and partial die 51 is attached to the moveable board of the press. Accordingly, partial die 51 is lowered so as to be inserted into die body 52 and a resin is injected into cavity 53 from a gate opening 54, and thereby, prism block 37 is formed. Prism block 37 that has been formed is taken out from die body 52 by pushing up the prism block with ejector pins 55 after partial die 51 has been lifted so as to be removed from die body 52.

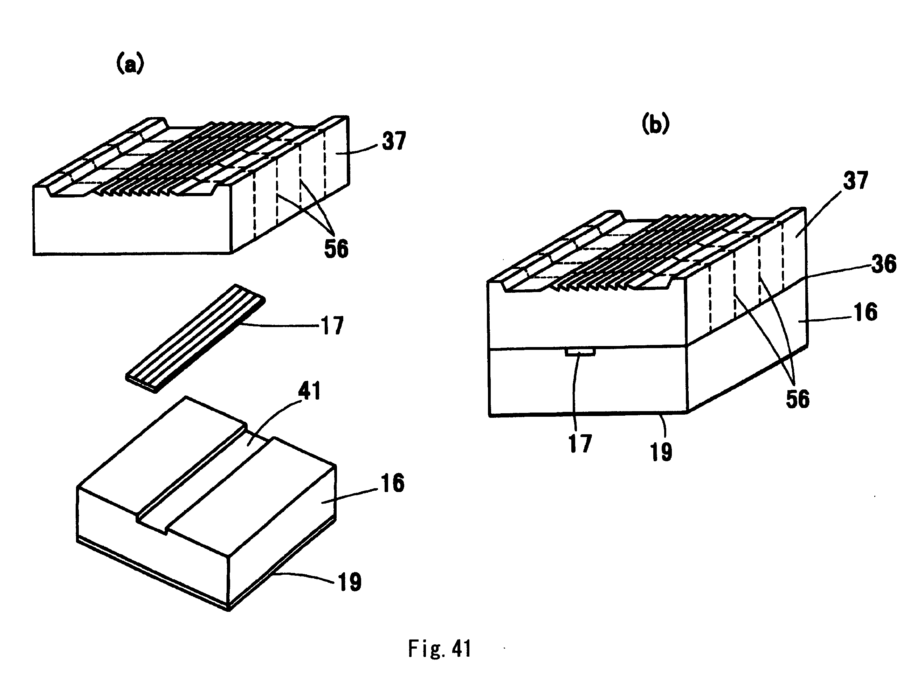

FIG. 41(a) is a perspective diagram showing a number of prism blocks 37 that have been formed as described above. In addition, FIG. 41(a) also shows optical guiding block 16 in which trench 41 for containing filter layer 17 has been created (in the case where a trench is provided as optical guiding block 16 of FIG. 33). Although the description of the process for forming optical guiding block 16 is omitted, a number of blocks are formed and integrated with this optical guiding block 16 in the same manner as prism blocks 37, and mirror layer 19 is formed on the lower surface. Filter layer 17 having a length of a number of blocks is contained within trench 41 in optical guiding block 16 made of a number of blocks, and optical guiding blocks 16 and prism blocks 37 are joined and integrated so that block for multiplexing/demultiplexing 36 made of a number of blocks, as shown in FIG. 41(b), is gained.

In block for multiplexing/demultiplexing 36 made of a number of blocks that has been formed using partial die 51 as shown in FIG. 39, traces 56 are left, which correspond to the surfaces where partial dies for forming a prism pattern 47 are connected to each other, as shown by broken lines in block for multiplexing/demultiplexing 36 of FIG. 41(b), and therefore, individual blocks for multiplexing/demultiplexing 36 can be gained, by cutting block for multiplexing/demultiplexing 36 along these traces 56 with a dicing saw or the like.

Here, although productivity can be increased by simultaneously forming a number of blocks for multiplexing/demultiplexing 36, blocks for multiplexing/demultiplexing can, of course, be formed one by one. In addition, mirror layer 19 may be finally formed on the rear surface of a block for multiplexing/demultiplexing 36 after it has been assembled.

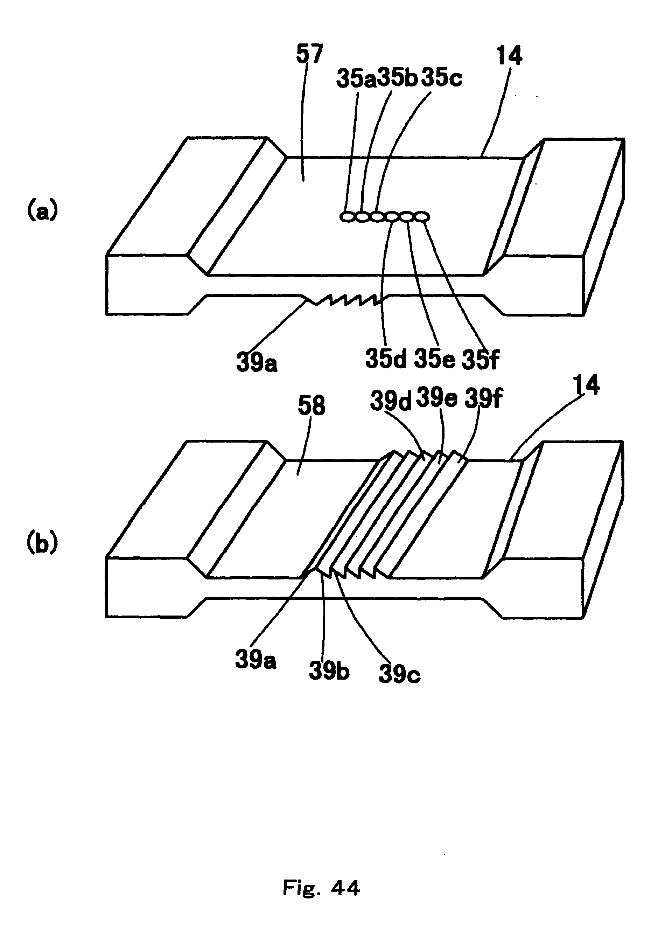

Here, in a modification of this embodiment, although not shown, filters 17a, 17b, 17c and 17d may be pasted to the front surfaces of prisms 39c, 39d, 39e and 39f, respectively, and mirror layer 19 may be formed on the lower surface of prism block 37. This modification provides an optical multiplexer/demultiplexer of a type that is similar to that of optical multiplexer/demultiplexer 8b shown in FIG. 17 (or see FIG. 44).

In addition, in the case of optical multiplexer/demultiplexer 8h having a structure as that shown in FIG. 27, second prism 39b is not needed. In this embodiment, however, prism 39b is provided, taking into consideration the fact that it is used in the same prismblock in the above-described modification.

### (Ninth Embodiment)

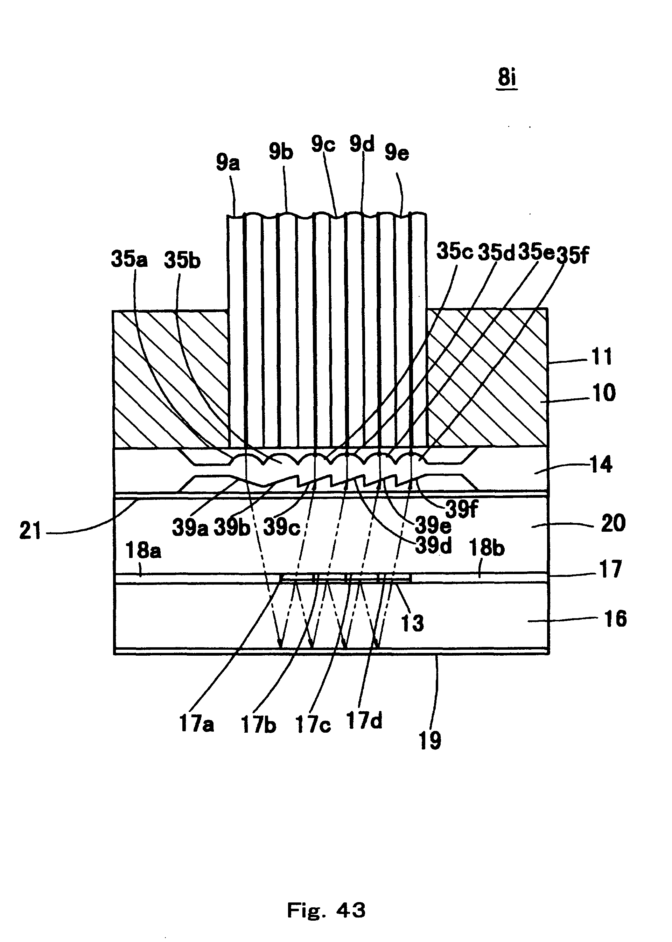

An optical multiplexer/demultiplexer according to the ninth embodiment of the present invention is characterized in that micro lenses 35a to 35f and prisms 39a to 39f are collected in micro lens array 14 that is attached to optical fiber array 11, so that the form of block for multiplexing/demultiplexing 36 is simplified. FIG. 43 is a cross sectional diagram showing an optical multiplexer/demultiplexer 8i according to the ninth embodiment which has the same structure as that of the first embodiment shown in FIG. 2 and the like, except for the structure of micro lens array 14.

In micro lens array 14 that is used in this embodiment, as shown in FIG. 44(a), a recess 57 is created in the rear surface of micro lens array 14, and a number of micro lenses 35a to 35f which are rectilinear lenses are formed so as to be aligned within this recess 57. In addition, as shown in FIG. 44(b), a recess 58 is also created in the front surface of micro lens array 14, and prisms 39a to 39f are formed so as to be aligned within this recess 58. Prisms 39a to 39f and micro lenses 35a to 35f which are formed on the front and the rear of micro lens array 14 correspond to each other in a one-on-one manner, and therefore, the time and labor for positioning prisms 39a to 39f and micro lenses 35a to 35f can be avoided.

Thus, prisms 39a to 39f are provided on micro lens array 14, and therefore, block for multiplexing/demultiplexing 36 is formed of a block in simple parallelepiped form (cover member 20) where no prisms 39a to 39f are provided, filter layer 17 and optical guiding block 16.

Optical multiplexer/demultiplexer 8i having such a structure can function as a demultiplexer and as a multiplexer, in the same manner as in the eighth embodiment.

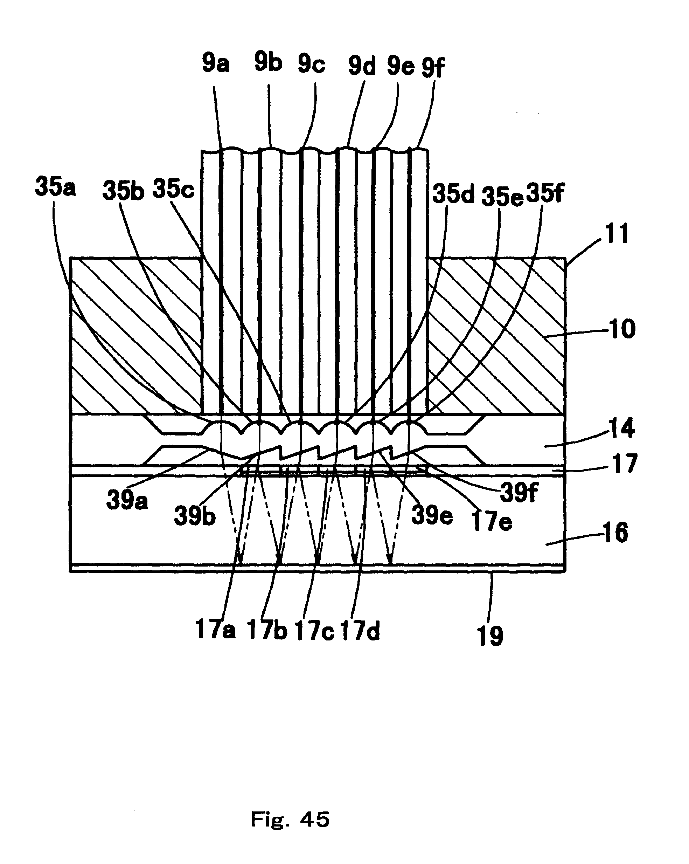

In addition, in the case where such a micro lens array 14 as in FIG. 44(a) and FIG. 44(b) is used, a space is created between micro lens array 14 and block for multiplexing/demultiplexing 36, and therefore, it becomes possible to place filter layer 17 in this space. Accordingly, as shown in FIG. 45, an optical multiplexer/demultiplexer can be provided, where filter layer 17 is placed on the front surface of optical guiding block 16, and mirror layer 19 is provided on the rear surface of optical guiding block 16. This is an optical multiplexer/demultiplexer where light diagonally enters into optical guiding block 16 and the light is reflected between filters 17a to 17e and mirror layer 19 while light having wavelengths λ1, λ2, λ3, λ4 and λ5 can be sequentially taken out from filters 17a to 17e, and which has a structure that is similar to that of optical multiplexer/demultiplexer 8b and the like, as shown in FIG. 17, except for the structure of micro lens array 14.

### (Tenth Embodiment)

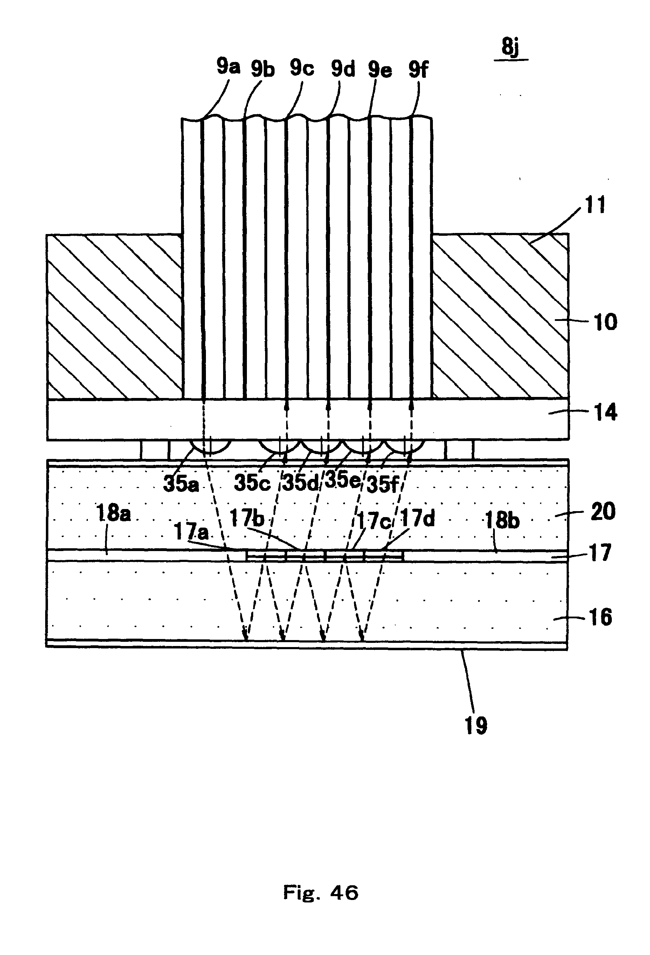

FIG. 46 is a cross sectional diagram showing the structure of optical multiplexer/demultiplexer 8j according to the tenth embodiment of the present invention. This optical multiplexer/demultiplexer 8j has a structure that is similar to that of optical multiplexer/demultiplexer 8b according to the first embodiment shown in FIG. 2 and the like, except for micro lens array 14.

In this embodiment, micro lenses 35a and 35c to 35f, which are aspherical or spherical rectilinear lenses, are formed so as to be aligned on the front surface of micro lens array 14. A gap is provided between micro lens 35 and micro lenses 35c to 35f. Respective micro lenses 35a and 35c to 35f are placed in a manner where the respective optical axes are shifted from the directions of the optical axes of respective optical fibers 9a and 9c to 9f, where micro lens 35a is decentered toward the micro lens 35c side, and micro lenses 35c to 35f as a whole are decentered toward the micro lens 35a side.

Thus, the optical axes of micro lenses 35a and 35c to 35f which are rectilinear lenses are shifted from the optical axes of optical fibers 9a and 9c to 9f without using an inclination lens in this micro lens array 14, and therefore, light that has been emitted from the respective optical fibers, optical fibers 9a and 9c to 9f, transmits through micro lenses 35a and 35c to 35f, and thereby, the light is converted to parallel light and the direction of emission of light is bent to a diagonal direction. In addition, when parallel light that has been emitted from block for multiplexing/demultiplexing 36 diagonally enters into respective micro lenses 35a and 35c to 35f, light transmits through micro lenses 35a and 35c to 35f, and thereby, the direction in which light progresses is bent to the direction parallel to the optical axes of optical fibers 9a and 9c to 9f, and at the same time, the light is condensed on the end surfaces of optical fibers 9a and 9c to 9f.

Accordingly, this optical multiplexer/demultiplexer 8j can also carry out the operation of demultiplexing and the operation of multiplexing in the same manner as optical multiplexer/demultiplexer 8a according to the first embodiment and the like.

### (Eleventh Embodiment)

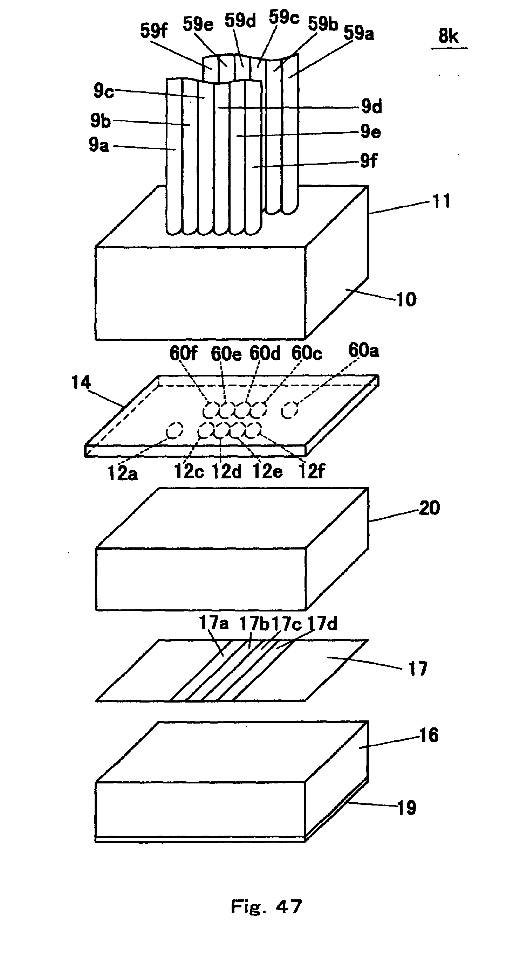

FIG. 47 is an exploded perspective diagram showing an optical multiplexer/demultiplexer 8k according to the eleventh embodiment of the present invention. In this optical multiplexer/demultiplexer 8k, an optical fiber array 11 is formed of two sets of parallel optical fiber bundles of optical fibers 9a to 9f and optical fibers 59a to 59f, of which the end portions are held by a connector 10. Here, in the case where optical fibers 9a to 9f and optical fibers 59a to 59f are respectively aligned in opposite sequence, as shown in FIG. 47, optical fiber 9c and optical 59e face each other in the direction from the front to the rear, optical fiber 9d and optical fiber 59d face each other in the direction from the front to the rear, and optical fiber 9e and optical fiber 59c face each other in the direction from the front to the rear. In micro lens array 14, micro lenses 12a and 12c to 12f are provided so as to correspond to the respective end surfaces of optical fibers 9a and 9c to 9f, and micro lenses 60a and 60c to 60f are provided so as to correspond to the respective end surfaces of optical fibers 59a and 59c to 59f. In a block for multiplexing/demultiplexing 36, a filter layer 17 made of filters 17a to 17d is sandwiched between an optical guiding block 16 where a mirror layer 19 is formed on the rear surface and a cover member 20.

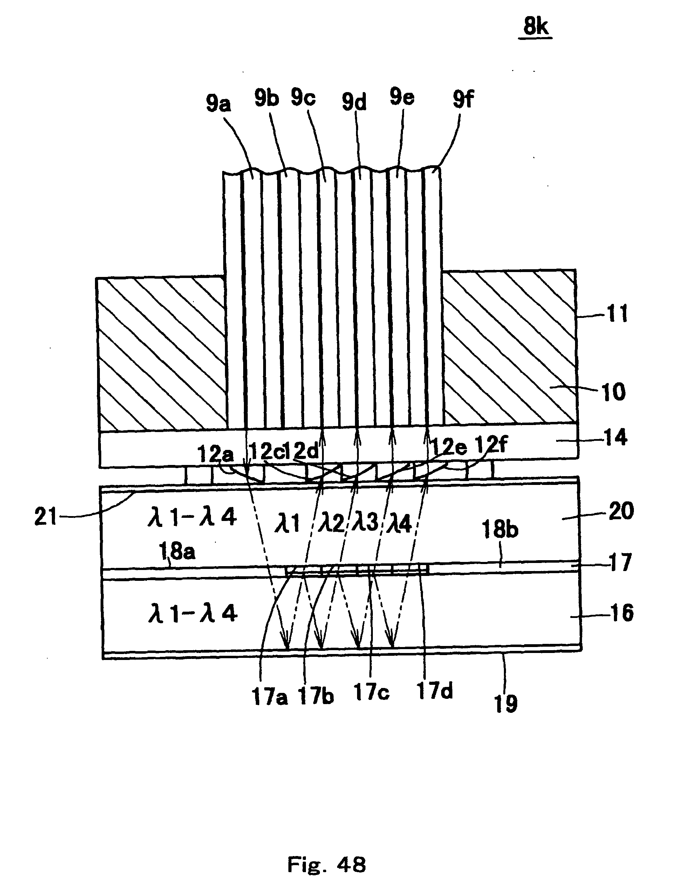

FIG. 48 is a cross sectional diagram of the optical multiplexer/demultiplexer along the plane that includes optical fibers 9a to 9f. This cross section shows that optical multiplexer/demultiplexer 8k functions as a demultiplexer where a multiplexed optical signal having wavelengths λ1, λ2, λ3 and λ4 that has entered into optical fiber 9a is demultiplexed by optical multiplexer/demultiplexer 8k in a manner where an optical signal having wavelength λ1 enters into optical fiber 9c, an optical signal having wavelength λ2 enters into optical fiber 9d, an optical signal having wavelength λ3 enters into optical fiber 9e, and an optical signal having wavelength λ4 enters into an optical fiber 9f. The operation of demultiplexing at this time is the same as that described in the first embodiment (see the description of FIG. 14).

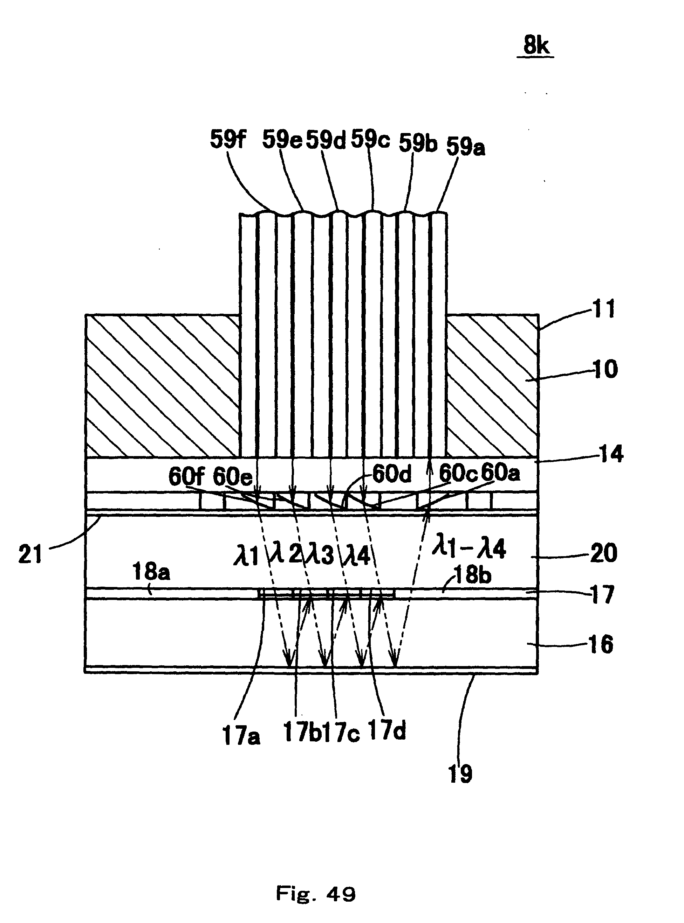

In addition, FIG. 49 is a cross sectional diagram of the optical multiplexer/demultiplexer along the plane that includes optical fibers 59a to 59f. This cross sectional diagram shows that optical multiplexer/demultiplexer 8k functions as a multiplexer where an optical signal having wavelength λ1 that has entered into optical fiber 59f, an optical signal having wavelength λ2 that has entered into optical fiber 59e, an optical signal having wavelength λ3 that has entered into optical fiber 59d, and an optical signal having wavelength λ4 that has entered into optical fiber 59c are multiplexed by optical multiplexer/demultiplexer 8k, and the multiplexed optical signal having wavelengths λ1, λ2, λ3 and λ4 enters into optical fiber 59a. The operation of multiplexing at this time is the same as that described in the first embodiment (see the description of FIG. 15).

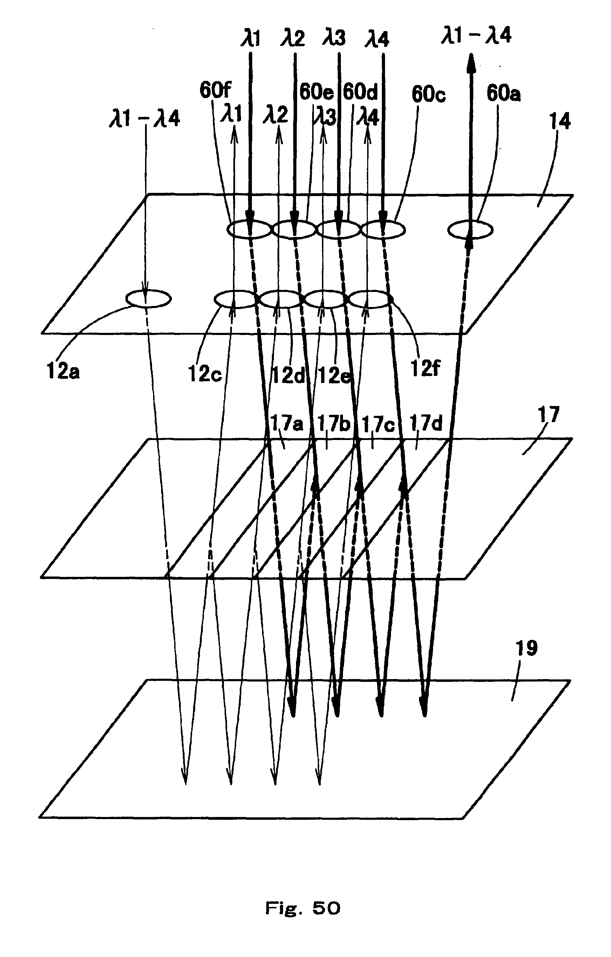

Accordingly, in this optical multiplexer/demultiplexer 8k, as shown in FIG. 50, a demultiplexer part is formed of optical fibers 9a to 9f, micro lenses 12a and 12c to 12f, and a portion of filter layer 17, and a multiplexer part is formed of optical fibers 59a to 59f, micro lenses 60a and 60c to 60f, and a portion of filter layer 17, where the demultiplexer part and the multiplexer part share filters 17a to 17d.

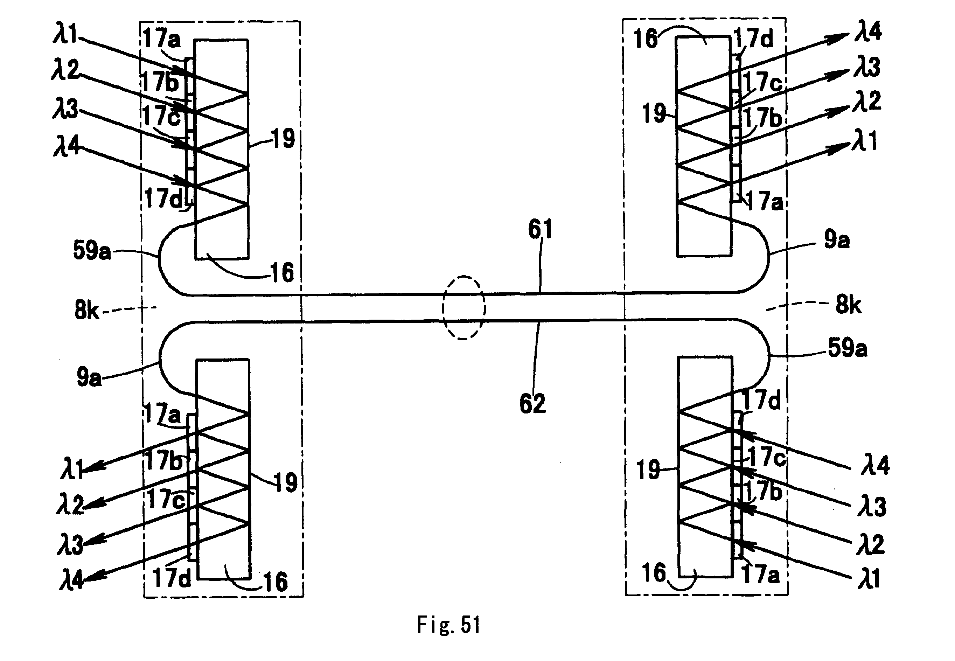

FIG. 51 is a schematic diagram for illustrating the state in which the above-described opticalmultiplexer/demultiplexer 8k is utilized. Optical multiplexer/demultiplexer 8k that is installed in one station and optical multiplexer/demultiplexer 8k that is installed in the other station are connected to each other with optical fiber cables 61 and 62, forming two cores. That is, optical fiber 59a of the multiplexer part of optical multiplexer/demultiplexer 8k that is installed in one station and optical fiber 9a of the demultiplexer part of optical multiplexer/demultiplexer 8k that is installed in the other station are connected to each other with optical fiber cable 61, and optical fiber 59a of the multiplexer part of optical multiplexer/demultiplexer 8k that is installed in the other station and optical fiber 9a of the demultiplexer part of optical multiplexer/demultiplexer 8k that is installed in one station are connected to each other with optical fiber cable 62.

Thus, in one station, a multiplexed optical signal having wavelengths λ1 to λ4 that is gained by multiplexing optical signals having wavelengths λ1, λ2, λ3 and λ4 by means of optical multiplexer/demultiplexer 8k is transmitted to the other station through one optical fiber cable 61. In optical multiplexer/demultiplexer 8k in the other station that has received this multiplexed optical signal, the multiplexed optical signal is demultiplexed by optical multiplexer/demultiplexer 8k so that optical signals having respective wavelengths λ1, λ2, λ3 and λ4 can individually be taken out. At the same time, in the other station, a multiplexed optical signal having wavelengths λ1 to λ4 that is gained by multiplexing optical signals having wavelengths λ1, λ2, λ3 and λ4 by means of optical multiplexer/demultiplexer 8k is transmitted to one station through one optical fiber cable 62. In optical multiplexer/demultiplexer 8k in the one station that has received this multiplexed optical signal, the multiplexed optical signal is demultiplexed by optical multiplexer/demultiplexer 8k so that optical signals having respective wavelengths λ1, λ2, λ3 and λ4 can individually be taken out.

In the embodiment of FIG. 47, optical fibers 59a to 59f and micro lenses 60a and 60c to 60f in the multiplexer part are placed in the order opposite the arrangements of optical fibers 9a to 9f and micro lenses 12a and 12c to 12f in the demultiplexer part, and light having wavelength λ2, light having wavelength λ3 and light having wavelength λ4 are multiplexed into light having wavelength λ1 sequentially in this order. In contrast to this, it is also possible to form the system by placing optical fibers 59a to 59f and micro lenses 60a and 60c to 60f in the multiplexer part sequentially in the same order as the arrangement of optical fibers 9a to 9f and micro lenses 12a and 12c to 12f in the demultiplexer part, so that light having wavelength λ3, light having λ2 and light having wavelength λ1 can be sequentially multiplexed into light having wavelength λ4, in this order.

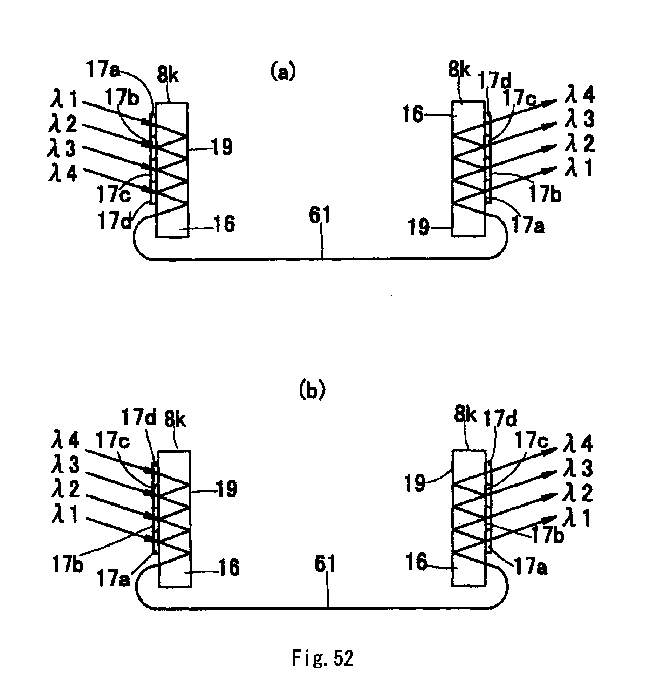

FIG. 52(a) shows the state where optical multiplexers/demultiplexers 8k which are formed in the same manner as the former in the preceding paragraph are used, and optical fiber 59a in the multiplexer part of optical multiplexer/demultiplexer 8k in one station and optical fiber 9a in the demultiplexer part of optical multiplexer/demultiplexer 8k in the other station are connected to each other through optical fiber cable 61. In addition, FIG. 52(b) shows the state where optical multiplexers/demultiplexers 8k which are formed in the same manner as the latter in the preceding paragraph are used, and optical fiber 59a in the multiplexer part of optical multiplexer/demultiplexer 8k in one station and optical fiber 9a in the demultiplexer part of optical multiplexer/demultiplexer 8k in the other station are connected to each other through optical fiber cable 61. The case of FIG. 52(a) and the case of FIG. 52(b) are compared as follows. In the case of FIG. 52(b), first, light having wavelength λ4 is introduced and light having λ3 is multiplexed into this, and then, light having wavelength λ2 is multiplexed, and then, light having wavelength λ1 is multiplexed, so that the resulting light is transmitted to the other station through optical fiber cable 61, light having wavelength λ1 is taken out by demultiplexing the optical signal that has been received by the other station, and then, light having wavelength λ2 is taken out through demultiplexing, and then, light having wavelength λ3 is taken out through demultiplexing, and finally, light having wavelength λ4 is taken out. Accordingly, in such a configuration, light having wavelength λ4 that has entered first into one station is taken out last in the other station, and light having wavelength λ1 that has been multiplexed last in one station is taken out first in the other station (FILO), where the length of the light path between the points where light enters into optical multiplexer/demultiplexer 8k in one station and where light is emitted from optical multiplexer/demultiplexer 8k in the other station varies, depending on the wavelength of the light. Therefore, the degree of attenuation varies, depending on the wavelength of the light, or the phases vary, causing a risk that the characteristics of the system may vary depending on the wavelength.

In contrast to this, in the case of FIG. 52(a) that corresponds to the embodiment shown in FIG. 47, light having wavelength λ1 is first introduced, and light having wavelength λ2 is multiplexed into this, and then, light having wavelength λ3 is multiplexed into this, and then, light having wavelength λ4 is multiplexed into this, and the resulting light is sent to the other station through optical fiber cable 61, while light having wavelength λ1 is taken out from the optical signal that has been received by the other station through demultiplexing, and then, light having wavelength λ2 is taken out through demultiplexing, and then, light having wavelength λ3 is taken out through demultiplexing, and finally, light having wavelength λ4 is taken out. Accordingly, in a configuration as that of FIG. 47 and FIG. 52(a), light having wavelength λ1 that enters first in one station is taken out first in the other station, and light having wavelength λ4 that is multiplexed last in the one station is taken out last in the other station (FIFO), where the length of the light path between the points where light enters into optical multiplexer/demultiplexer 8k in one station, and where light is emitted from optical multiplexer/demultiplexer 8k in the other station becomes approximately constant, irrespective of the wavelength. Therefore, the degree of attenuation of an optical signal is not dependent on the wavelength and the phase is not dependent on the wavelength, and the transmission characteristics can be made uniform, irrelevant of the wavelength.

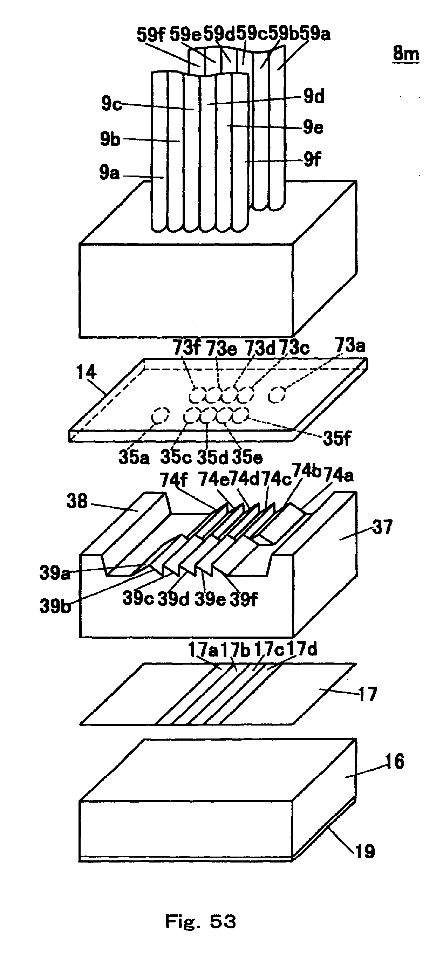

FIG. 53 is an exploded perspective diagram showing the structure of an optical multiplexer/demultiplexer 8m according to a modification of the eleventh embodiment of the present invention. In this optical multiplexer/demultiplexer 8m, micro lenses 35a and 35c to 35f that have been formed of rectilinear lenses and micro lenses 73a and 73c to 73f that have been formed of rectilinear lenses are aligned in two rows on the surface of micro lens array 14. In addition, a block for multiplexing/demultiplexing 36 is formed by sandwiching filter layer 17 between an optical guiding block 16 where a mirror layer 19 is formed on the lower surface and a prism block 37. Prisms 39a to 39f and prisms 74a to 74f are aligned in two rows on the top surface of prism block 37. Thus, micro lenses 35a and 35c to 35f and prisms 39a and 39c to 39f have the same function as micro lenses 12a and 12c to 12f in optical multiplexer/demultiplexer 8k of FIG. 47, and micro lenses 73a and 73c to 73f and prisms 74a and 74c to 74f have the same function as micro lenses 60a and 60c to 60f.

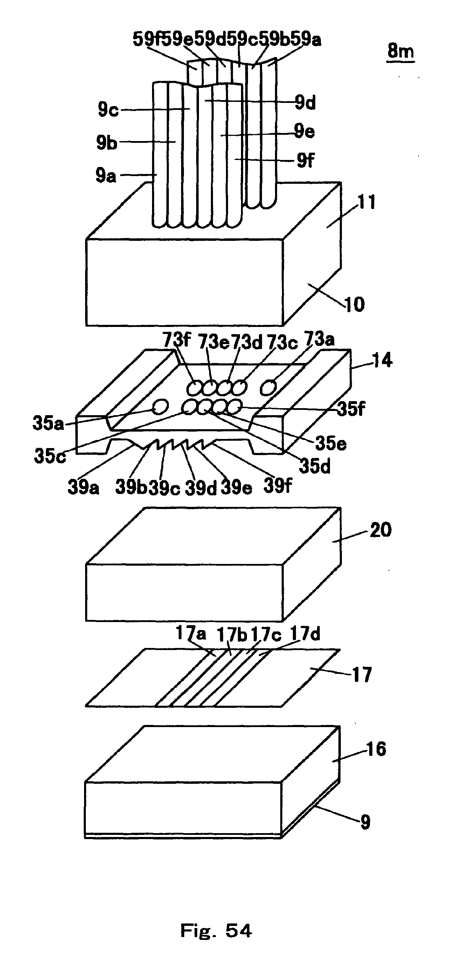

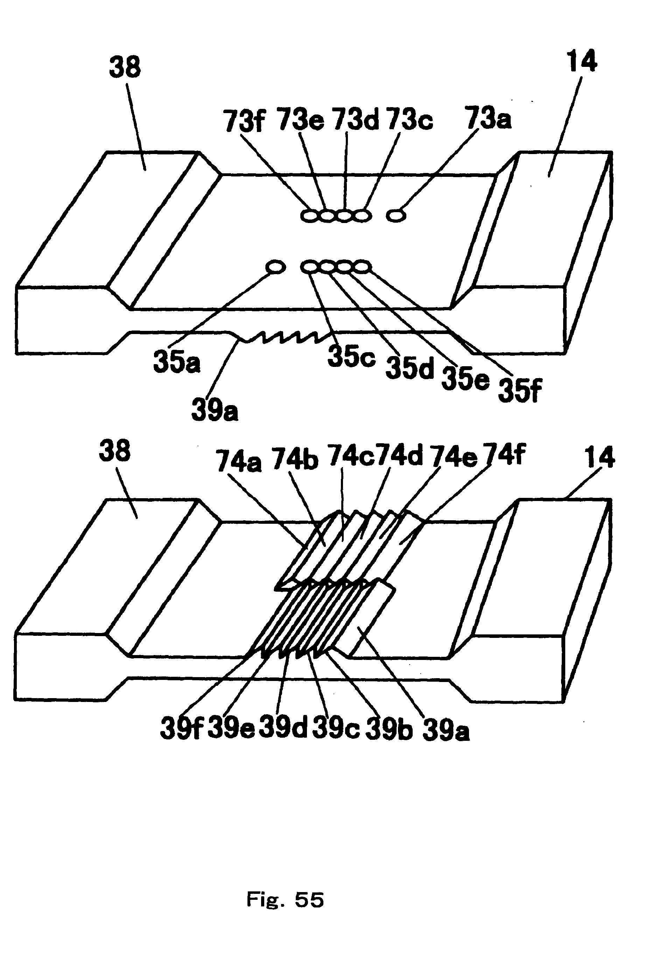

FIG. 54 is an exploded perspective diagram showing the structure of optical multiplexer/demultiplexer 8n according to another modification of the eleventh embodiment of the present invention. In this optical multiplexer/demultiplexer 8n, as shown in FIG. 55, micro lenses 35a and 35c to 35f, which are formed of rectilinear lenses, and micro lenses 73a and 73c to 73f, which are formed of rectilinear lenses, are aligned in two rows on the rear surface of micro lens array 14. In addition, prisms 39a to 39f and prisms 74a to 74f are aligned in two rows on the front surface of micro lens array 14. In addition, a block for multiplexing/demultiplexing 36 is formed by sandwiching filter layer 17 between an optical guiding block 16 where a mirror layer 19 is formed on the lower surface and a cover member 20. Thus, micro lenses 35a and 35c to 35f and prisms 39a and 39c to 39f have the same function as micro lenses 12a and 12c to 12f in optical multiplexer/demultiplexer 8k of FIG. 47, and micro lenses 73a and 73c to 73f and prisms 74a and 74c to 74f have the same function as micro lenses 60a and 60c to 60f.

### (Twelfth Embodiment)

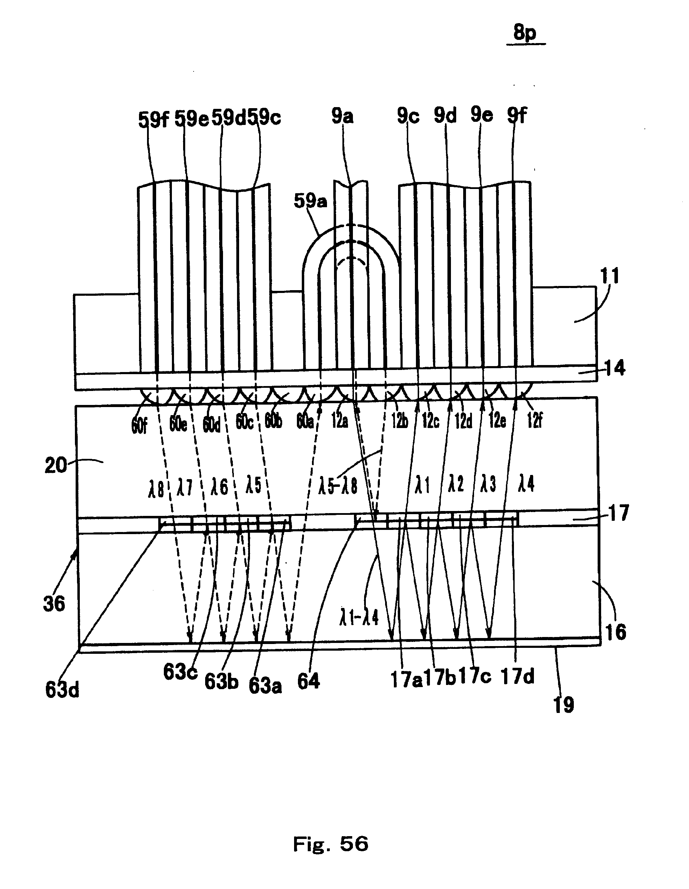

FIG. 56 is a cross sectional diagram showing an optical multiplexer/demultiplexer 8p according to the twelfth embodiment of the present invention. Although two optical fiber cables 61 and 62 are required to connect optical multiplexers/demultiplexers 8k according to the eleventh embodiment, a single optical fiber 61 can connect optical multiplexers/demultiplexers 8p according to the twelfth embodiment.

In this optical multiplexer/demultiplexer 8p, the demultiplexer part and the multiplexer part are integrally formed. The demultiplexer part is formed of optical fibers 9a, 9c, 9d, 9e and 9f which are held by an optical fiber array 11, micro lenses 12a, 12c, 12d, 12e and 12f, and filters 17a, 17b, 17c and 17d. Here, filter 17a has characteristics such that it transmits light having wavelength λ1 and reflects light having other wavelength bands, filter 17b has characteristics such that it transmits light having wavelength λ2 and reflects light having other wavelength bands, filter 17c has characteristics such that it transmits light having wavelength λ3 and reflects light having other wavelength bands, and filter 17d has characteristics such that it transmits light having wavelength λ4 and reflects light having other wavelength bands.

The multiplexer part of optical multiplexer/demultiplexer 8p is formed of optical fibers 59a, 59c, 59d, 59e and 59f which are held by optical fiber array 11, micro lenses 60a, 60c, 60d, 60e and 60f, and filters 63a, 63b, 63c and 63d. Here, filter 63a has characteristics such that it transmits light having wavelength λ5 and reflects light having other wavelength bands, filter 63b has characteristics such that it transmits light having wavelength λ6 and reflects light having other wavelength bands, filter 63c has characteristics such that it transmits light having wavelength λ7 and reflects light having other wavelength bands, and filter 63d has characteristics such that it transmits light having wavelength λ8 and reflects light having other wavelength bands.

Optical fiber 59a of the multiplexer part is connected to the demultiplexer part in a manner where the end surface faces micro lens 12b that is placed between micro lenses 12a and 12c of the demultiplexer part. In addition, a filter 64 that has characteristics such that it transmits light having wavelengths λ1, λ2, λ3 and λ4, and reflects light having wavelengths λ5, λ6, λ7 and λ8 in a place within filter layer 17 adjoined to filter 17a.

In the demultiplexer part of this optical multiplexer/demultiplexer 8p, when a multiplexed optical signal having wavelengths λ1, λ2, λ3 and λ4 is emitted from optical fiber 9a, this optical signal is converted to parallel light in micro lens 12a, and at the same time, the direction of the optical axis is bent so that the light enters into filter 64. Light having wavelengths λ1, λ2, λ3 and λ4 transmits through filter 64 and reflects from mirror layer 19, and after that, only light having wavelength λ1 transmits through filter 17a so as to be coupled to optical fiber 9c by means of micro lens 12c. In addition, light having wavelengths λ2, λ3 and λ4 that has been reflected from filter 17a is reflected again frommirror layer 19, and after that, only light having wavelength λ2 transmits through filter 17b so as to be coupled to optical fiber 9d by means of micro lens 12d. In addition, light having wavelengths λ3 and λ4 that has been reflected from filter 17b is reflected again from mirror layer 19, and after that, only light having wavelength λ3 transmits through filter 17c so as to be coupled to optical fiber 9e by means of micro lens 12e. In addition, light having wavelength λ4 that has been reflected from filter 17c is reflected again from mirror layer 19, and after that, only light having wavelength λ4 transmits through filter 17d so as to be coupled to optical fiber 9f by means of micro lens 12f.

In addition, in the multiplexer part of this optical multiplexer/demultiplexer 8p, when light having wavelengths λ5, λ6, λ7 and λ8 is emitted from optical fibers 59c, 59d, 59e and 59f, respectively, light having wavelength λ8 that has been emitted from optical fiber 59f transmits through filter 63d after the direction of the optical axis is bent by micro lens 60f, and then, is reflected from mirror layer 19 so as to enter into filter 63c. Meanwhile, light having wavelength λ7 that has been emitted from optical fiber 59e transmits through filter 63c after the direction of the optical axis is bent by micro lens 60e. Then, light having wavelength λ7 that has transmitted through filter 63c and light having wavelength λ8 that has been reflected from filter 63c are reflected from mirror layer 19, and after that, enter into filter 63b. Meanwhile, light having wavelength λ6 that has been emitted from optical fiber 59d transmits through filter 63b after the direction of the optical axis is bent by micro lens 60d. Then, light having wavelength λ6 that has transmitted through filter 63b and light having wavelength λ8 and λ7 that has been reflected from filter 63b are reflected from mirror layer 19, and after that, enter into filter 63a. Meanwhile, light having wavelength λ5 that has been emitted from optical fiber 59c transmits through filter 63a after the direction of the optical axis is bent by micro lens 60c. Then, light having wavelength λ5 that has transmitted through filter 63a and light having wavelength λ8, λ7 and λ6 that has been reflected from filter 63a are reflected frommirror layer 19, and after that, enter into micro lens 60a so as to be coupled to optical fiber 59a.

Thus, light having wavelengths λ5, λ6, λ7 and λ8 that has entered into optical fiber 59a propagates through optical fiber 59a so as to be emitted from the other end of optical fiber 59a. Light having wavelengths λ5, λ6, λ7 and λ8 that has been emitted from the other end of optical fiber 59a enters into filter 64 after being bent by micro lens 12b, is reflected from filter 64, and enters into micro lens 12a so as to be coupled to optical fiber 9a.

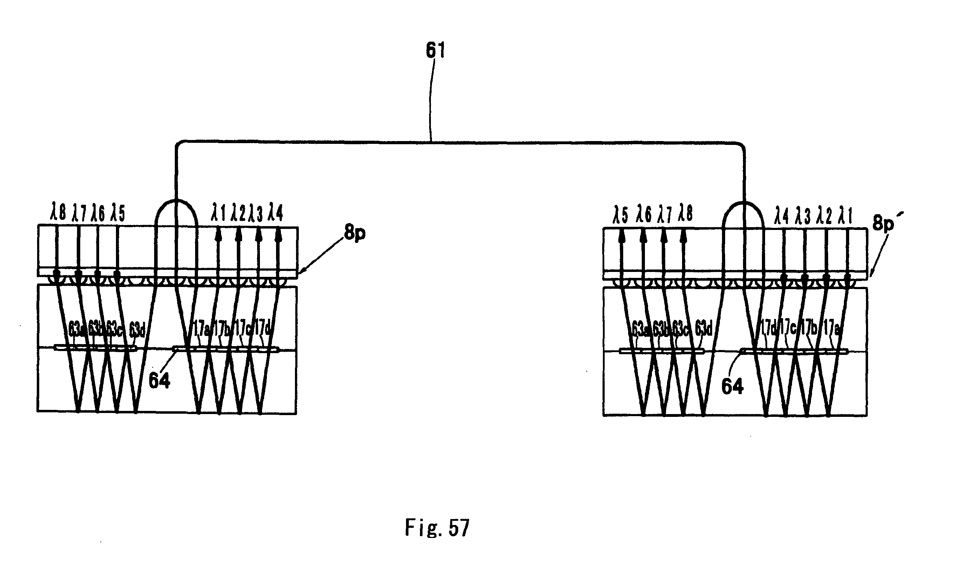

Such an optical multiplexer/demultiplexer 8p provides a system, as shown in FIG. 57, where optical multiplexer/demultiplexer 8p that is installed in one station and optical multiplexer/demultiplexer 8p' that is installed in the other station are connected to each other with one optical fiber cable 61 for communications in a manner where optical fiber cable 61 is connected to optical fiber 9a in either optical multiplexer/demultiplexer 8p or 8p'.

Here, in optical multiplexer/demultiplexer 8p' that is connected to the above-described optical multiplexer/demultiplexer 8p, the arrangement of filters 17a to 17d and 63a to 63d is different from that of optical multiplexer/demultiplexer 8p, and the positions of the multiplexer part and the demultiplexer part are switched. That is, in optical multiplexer/demultiplexer 8p', optical fibers 9a, 9c, 9d, 9e and 9f, and micro lenses 12a, 12c, 12d, 12e and 12f, as well as filters 17a, 17b, 17c and 17d form the multiplexer part where the alignment of filters 17a to 17d is opposite that of optical multiplexer/demultiplexer 8p.

In optical multiplexer/demultiplexer 8p' , optical fibers 59a, 59c, 59d, 59e and 59f, and micro lenses 60a, 60c, 60d, 60e and 60f as well as filters 63a, 63b, 63c and 63d form the demultiplexer part where the alignment of filters 63a to 63d is opposite that of optical multiplexer/demultiplexer 8p.

Thus, after an optical signal having wavelengths λ5 to λ8 has been multiplexed in optical multiplexer/demultiplexer 8p, this multiplexed optical signal is sent to optical multiplexer/demultiplexer 8p' through optical fiber cable 61 and demultiplexed into respective wavelengths λ5 to λ8 in optical multiplexer/demultiplexer 8p', and then, optical signals having respective wavelengths λ5 to λ8 are taken out. Here, light having wavelength λ8, for example, is multiplexed first in optical multiplexer/demultiplexer 8p and demultiplexed first in optical multiplexer/demultiplexer 8p' , and in addition, light having wavelength λ5 is multiplexed last in optical multiplexer/demultiplexer 8p and demultiplexed last in optical multiplexer/demultiplexer 8p', where the transmission distances (lengths of light paths) of optical signals having respective wavelengths λ5 to λ8 are equal to each other.

In the same manner, after an optical signal having wavelengths λ1 to λ4 has been multiplexed in optical multiplexer/demultiplexer 8p', this multiplexed optical signal is sent to optical multiplexer/demultiplexer 8p through optical fiber cable 61 and demultiplexed into respective wavelengths λ1 to λ4 in optical multiplexer/demultiplexer 8p, and then, optical signals having respective wavelengths λ1 to λ4 are taken out. Here, light having wavelength λ1, for example, is multiplexed first in optical multiplexer/demultiplexer 8p' and demultiplexed first in optical multiplexer/demultiplexer 8p, and in addition, light having wavelength λ4 is multiplexed last in optical multiplexer/demultiplexer 8p' and demultiplexed last in optical multiplexer/demultiplexer 8p, where the transmission distances (lengths of light paths) of optical signals having respective wavelengths λ1 to λ4 are equal to each other.

Here, although the multiplexer parts and the demultiplexer parts of optical multiplexers/demultiplexers 8p and 8p' are placed in series in FIG. 56, they may be placed in parallel by being aligned laterally.

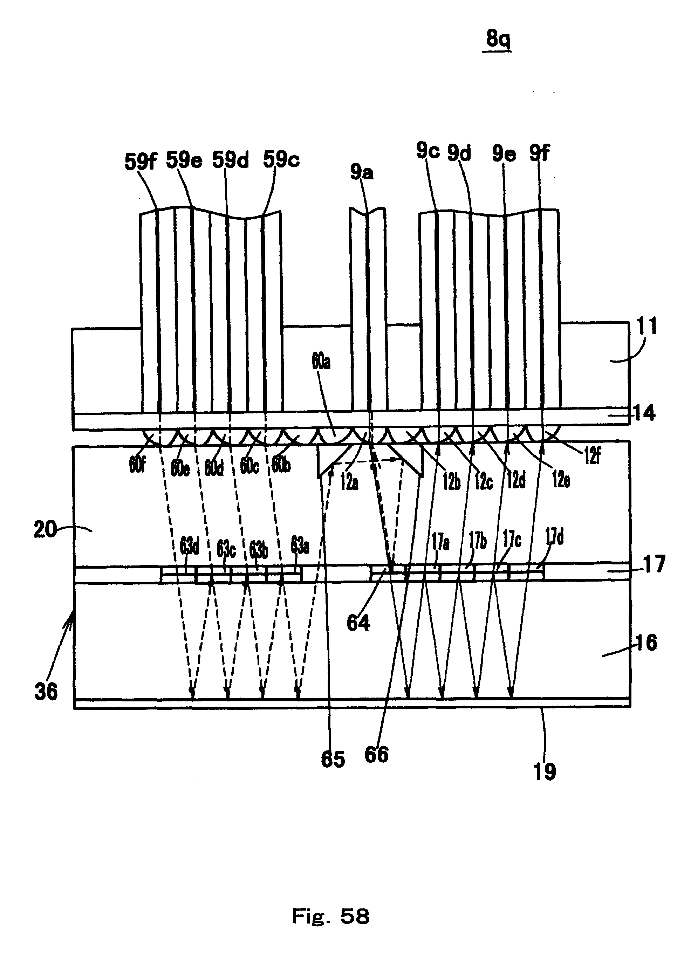

FIG. 58 shows an optical multiplexer/demultiplexer 8q according to a modification of the twelfth embodiment. Although the multiplexer part and the demultiplexer part are connected to each other through optical fiber 59a in the above-described optical multiplexer/demultiplexer 8p, the multiplexer part and the demultiplexer part are connected to each other using two recesses in right triangular form 65 and 66 in optical multiplexer/demultiplexer 8q of FIG. 58. That is, in this modification, recesses 65 and 66 of which the cross sections are in right triangular form are provided in the upper surface of cover member 20, and light having wavelengths λ5, λ6, λ7 and λ8 that has been multiplexed in the multiplexer part is totally reflected from recesses 65 and 66, and thereby, enters into filter 64, and then, is connected to optical fiber 9a after being reflected from filter 64.

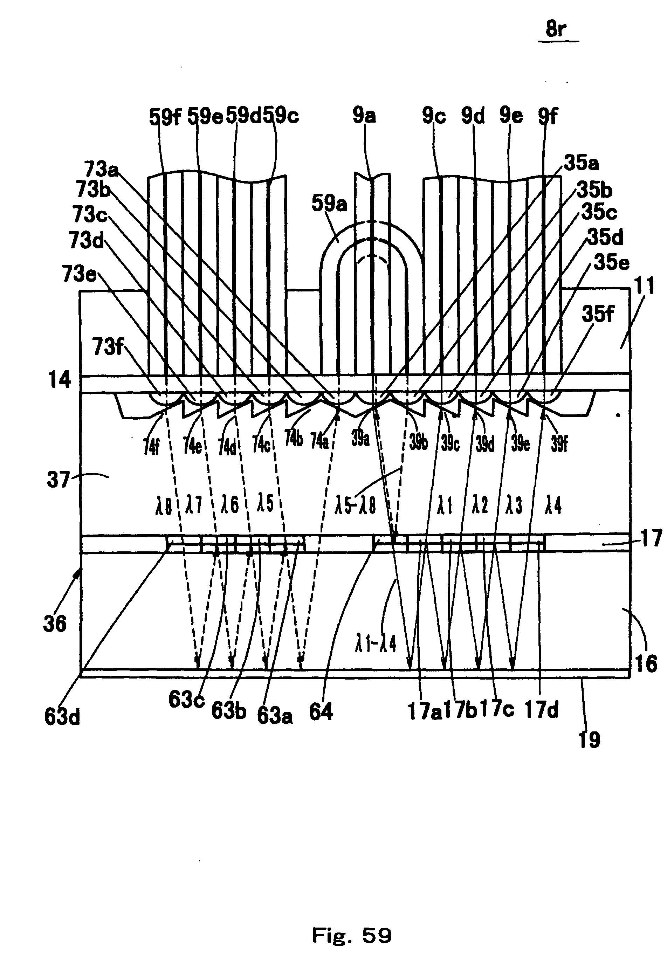

FIG. 59 is a schematic cross sectional diagram showing the structure of an optical multiplexer/demultiplexer 8r according to another modification of the twelfth embodiment. This optical multiplexer/demultiplexer 8r has the following configuration, so that an optical multiplexer/demultiplexer that is similar to optical multiplexer/demultiplexer 8p of FIG. 56 can be fabricated. Micro lenses 35a and 35c to 35f made of rectilinear lenses that face the end surfaces of optical fibers 9a and 9c to 9f, micro lenses 73c to 73f made of rectilinear lenses that face the end surfaces of optical fibers 59c to 59f, and micro lenses 73a and 35b that face the two end surfaces of optical fiber 59a that is bent in upside-down U form are provided on the lower surface of micro lens array 14. In addition, a block for multiplexing/demultiplexing 36 is formed by sandwiching filter layer 17 between an optical guiding block 16 where a mirror layer 19 is formed on the lower surface and a prism block 37. Prisms 39a to 39f that face micro lenses 35a to 35f, and prisms 74a and 74c to 74f that face micro lenses 73a and 73c to 73f are formed on the upper surface of prism block 37. Here, micro lens 73b and prism 74b are not needed.

### (Thirteenth Embodiment)

In the above-described respective embodiments, light having respective wavelengths is inputted into an optical multiplexer/demultiplexer using an optical fiber, and light having respective wavelengths is taken out from an optical multiplexer/demultiplexer using an optical fiber. Instead of using optical fibers, however, a light emitting element, such as a semiconductor laser element (LD), may be mounted on a portion of an optical multiplexer/demultiplexer into which light enters, or a light receiving element, such as a photo diode (PD) or a photo transistor, may be mounted on a portion of an optical multiplexer/demultiplexer from which light is emitted.

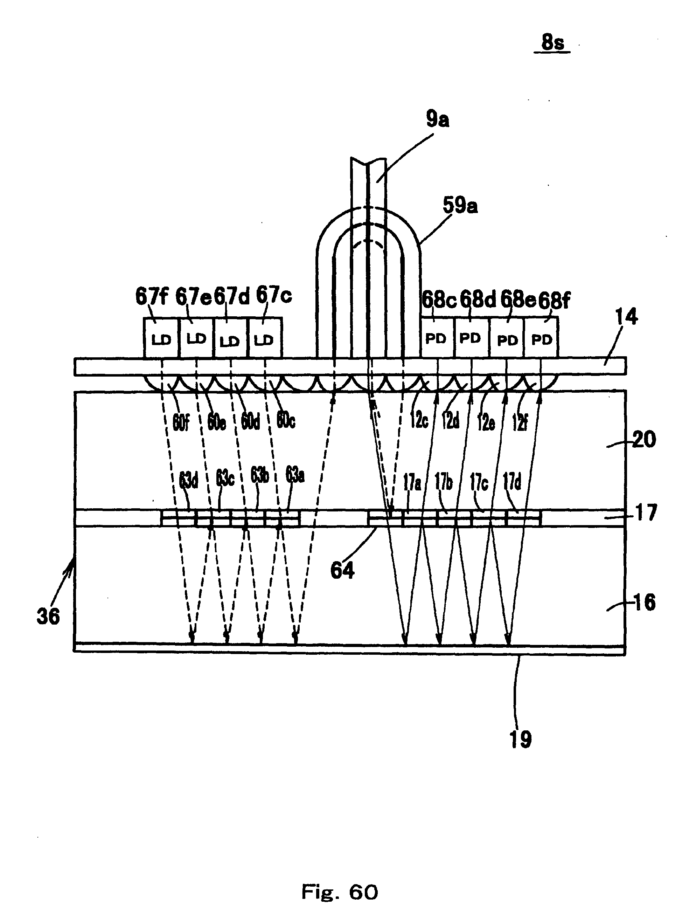

An optical multiplexer/demultiplexer (transponder) 8s shown in FIG. 60, for example, is provided using a base optical multiplexer/demultiplexer 8p shown in FIG. 56. In this case, only optical fiber 9a for connection to an optical fiber cable and optical fiber 59a for connecting the multiplexer part and the demultiplexer part remain the same, and respective light receiving elements 68c, 68d, 68e and 68f (for example, a light receiving element array where light receiving elements are integrated) that face micro lenses 12c to 12f may be mounted on micro lens array 14, and light emitting elements 67c, 67d, 67e and 67f for emitting light having wavelengths λ1, λ2, λ3 and λ4, respectively (for example, a light emitting element array where light emitting elements are integrated) that face micro lenses 60c to 60f may be mounted on micro lens array 14. Light receiving elements 68c to 68f are placed so that the directions of their optical axes (directions in which the light receiving elements have the maximum sensitivity or the directions that are perpendicular to the light receiving surfaces of the light receiving elements) are directed in the direction perpendicular to filter layer 17, while light emitting elements 67c to 67f are placed so that the directions of their optical axes (directions in which the intensity of the emitted light becomes maximum or the directions that are perpendicular to the light emitting surfaces of the light emitting elements) are directed in the direction perpendicular to filter layer 17.

Light multiplexer/demultiplexer 8s that has been formed as described above can directly multiply and transmit optical signals by driving light emitting elements 67c to 67f, and in addition, can directly receive optical signals with light receiving elements 68c to 68f. Here, in the case where a light receiving element array is used instead of light receiving elements 68c to 68f, cost can be lowered, in comparison with a case where individual elements are used, and in such a case, the light receiving element array can be mounted without being inclined like in the present invention, so that an increase in the insertion loss in an element of which the length of the light path becomes great or an increase in the size of the optical multiplexer/demultiplexer can be prevented. The same holds for light emitting elements 67c to 67f.

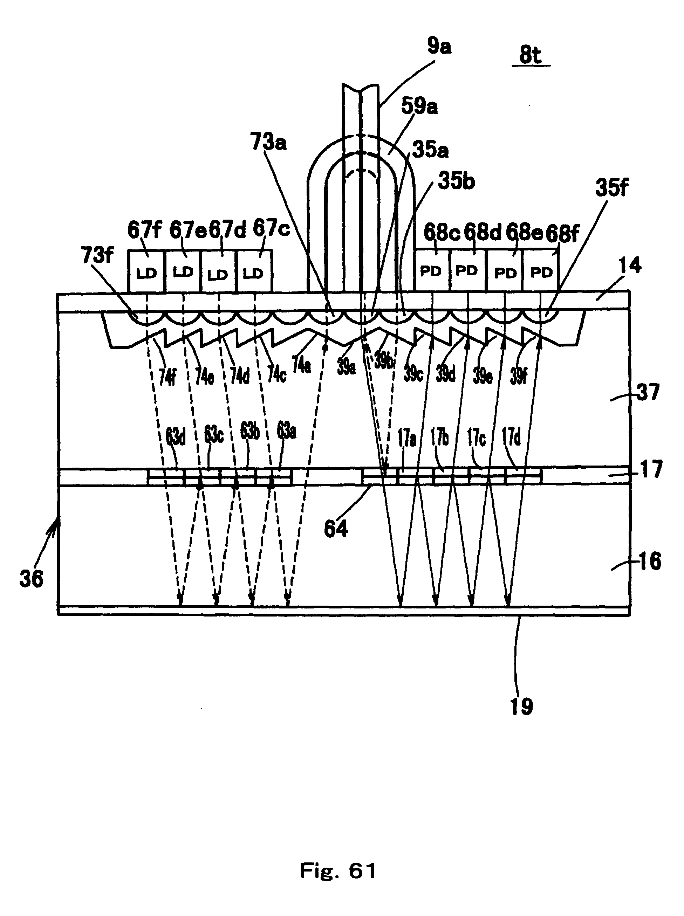

FIG. 61 is a schematic cross sectional diagram showing the structure of an optical multiplexer/demultiplexer 8t according to a modification of the thirteenth embodiment. This optical multiplexer/demultiplexer 8t has the following configuration, so that a transponder that is similar to optical multiplexer/demultiplexer 8s of FIG. 60 can be fabricated. Micro lenses 35a and 35c to 35f made of rectilinear lenses that face optical fiber 9a and light receiving elements 68c to 68f, micro lenses 73c to 73f made of rectilinear lenses that face light emitting elements 67c to 67f, and micro lenses 73a and 35b that face the two end surfaces of optical fiber 59a that is bent in an upside-down U form are provided on the lower surface of micro lens array 14. In addition, a block for multiplexing/demultiplexing 36 is formed by sandwiching filter layer 17 between an optical guiding block 16 where a mirror layer 19 is formed on the lower surface and a prism block 37. Prisms 39a to 39f that face micro lenses 35a to 35f, and prisms 74a and 74c to 74f that face micro lenses 73a and 73c to 73f are formed on the upper surface of prism block 37.

### (Fourteenth Embodiment)

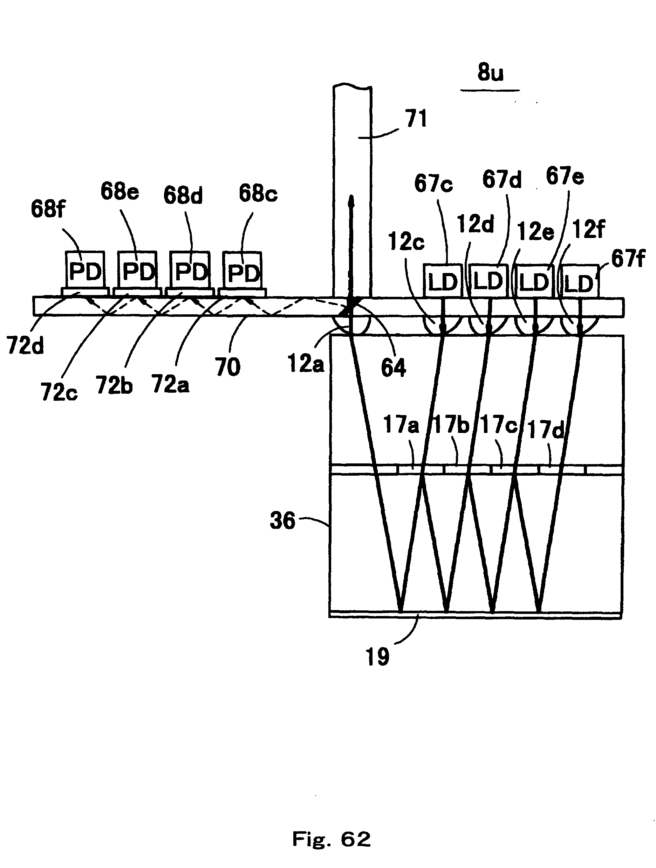

FIG. 62 is a cross sectional diagram showing an optical multiplexer/demultiplexer (transponder) 8u according to the fourteenth embodiment of the present invention. In this embodiment, micro lenses 12a, 12c, 12d, 12e and 12f are provided on the lower surface of optical guiding plate 70, an optical fiber 71 is connected to the upper surface of optical guiding plate 70 so as to face micro lens 12a, light emitting elements 67c, 67d, 67e and 67f (for example, a light emitting element arraywhere light emitting elements are integrated) for emitting light having wavelengths λ1, λ2, λ3 and λ4 are mounted on top of optical guiding plate 70 so as to face micro lenses 12c to 12d, and a block for multiplexing/demultiplexing 36 that is formed for multiplexing is placed beneath micro lenses 12c to 12f. In addition, a filter 64 is buried within optical guiding plate 70 at an angle of 45° between the end surface of optical fiber 71 and micro lens 12a. Optical guiding plate 70 is longer than the width of block for multiplexing/demultiplexing 36, a diffraction element 72a for transmitting only light having wavelength λ5, a diffraction element 72b for transmitting only light having wavelength λ6, a diffraction element 72c for transmitting only light having wavelength λ7 and a diffraction element 72d for transmitting only light having wavelength λ8 are formed on the upper surface of optical guiding plate 70 in the region of optical guiding plate 70 that sticks out from block for multiplexing/demultiplexing 36, and light receiving elements 68c to 68f (for example, a light receiving element array where light receiving elements are integrated) are mounted on respective diffraction elements 72a to 72d. Light emitting elements 67c to 67f are placed so that the directions of their optical axes are directed in the direction perpendicular to filters 17a to 17d or optical guiding plate 70, and light receiving elements 68c to 68f are also placed so that the directions of their optical axes are directed in the direction perpendicular to filters 17a to 17d.

Thus, light having wavelengths λ1, λ2, λ3 and λ4 that has been emitted from light emitting elements 67c to 67f, respectively, is multiplexed in block for multiplexing/demultiplexing 36 and emitted from block for multiplexing/demultiplexing 36, transmits through filter 64 after the direction of the optical axis has been bent by micro lens 12a so as to be coupled to optical fiber 71, and is transmitted through optical fiber 71. In addition, multiplexed transmission signals having wavelengths λ5, λ6, λ7 and λ8 that has been received from optical fiber 71 is reflected from filter 64 toward the side on which optical guiding plate 70 protrudes and propagates through optical guiding plate 70 while repeating the total reflections between the upper surface and the lower surface of optical guiding plate 70. When the light that propagates through optical guiding plate 70 enters into diffraction element 72a, only light having wavelength λ5 transmits through diffraction element 72a so as to be received by light receiving element 68c. In addition, when light that has propagated through optical guiding plate 70 enters into diffraction element 72b, 72c or 72d, only light having wavelength λ6, λ7 or λ8, respectively, transmits through diffraction element 72b, 72c or 72d so as to be received by light receiving element 68d, 68e or 68f, respectively. Here, diffraction gratings, in addition to CGH elements or the like, can be used as the above-described diffraction elements.

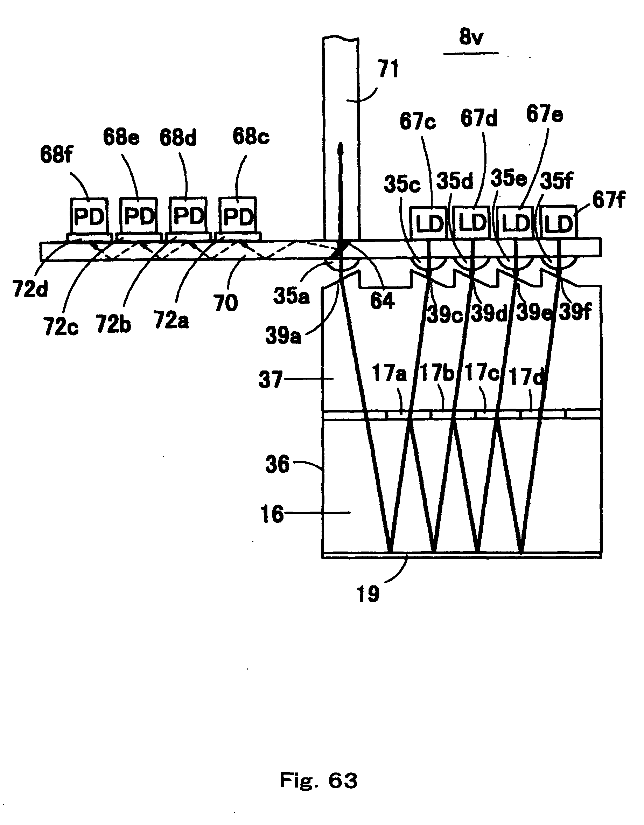

FIG. 63 is a schematic cross sectional diagram showing the structure of an optical multiplexer/demultiplexer 8v according to a modification of the fourteenth embodiment. This optical multiplexer/demultiplexer 8v has the following configuration, so that a transponder that is similar to optical multiplexer/demultiplexer 8u of FIG. 62 can be fabricated. Micro lenses 35a and 35c to 35f made of rectilinear lenses that face optical fiber 71 and light emitting elements 67c to 67f are provided on the lower surface of micro lens array 14. In addition, a block for multiplexing/demultiplexing 36 is formed by sandwiching filter layer 17 between an optical guiding block 16 where a mirror layer 19 is formed on the lower surface and a prism block 37. Prisms 39a and 39c to 39f that face micro lenses 35a and 35c to 35f are formed on the upper surface of prism block 37.

### Industrial Applicability

An optical multiplexer/demultiplexer according to the present invention can be used for applications where optical signals are multiplexed or demultiplexed in an optical communications system, an optical signal transmission system or the like.

## Claims

1. An optical multiplexer/demultiplexer, wherein
plurality of wavelength selecting elements of which the transmission wavelength bands are different from each other and a light reflecting surface are made to face each other, and thereby, an optical guiding means for guiding light by making light being reflected between the light reflecting surface and the respective wavelength selecting elements and for multiplexing or demultiplexing light having different wavelengths is formed,
a transmission means for transmitting light having plurality of wavelengths is coupled to light having plurality of wavelengths or wavelength bands that is guided within the optical guiding means,
plurality of light inputting/outputting means are placed on the same side as the transmission means relative to the optical guiding means in a manner where the direction of the optical axis becomes approximately perpendicular to the direction in which the wavelength selecting elements are aligned, and
a deflection element for converting the direction of the optical axis of light that has transmitted through each of the wavelength selecting elements into one that is parallel to the direction of the optical axis of the respective light inputting/outputting means, or for converting light that is parallel to the direction of the optical axis of each of the light inputting/outputting means into the direction of the optical axis of light that transmits through each of the wavelength selecting elements is provided between each of the light inputting/outputting means and each of the wavelength selecting elements.

2. The optical multiplexer/demultiplexer according to Claim 1, wherein an antireflection film is provided in the middle of the light path between the transmission means and the optical guiding means.

3. An optical multiplexer/demultiplexer, comprising:
an optical guiding means which is made of a light reflecting surface and plurality of wavelength selecting elements which are aligned in a plane that is parallel to the light reflecting surface, and of which the transmission wavelength bands are different from each other, which guides light by making light be reflected between the light reflecting surface and the respective wavelength selecting elements, and which multiplexes or demultiplexes light having different wavelengths;
an optical fiber array where a first optical fiber for transmitting light having plurality of wavelengths or wavelength bands and plurality of second optical fibers for transmitting light having particular wavelengths or wavelength bands are aligned in a manner where the optical axis of each optical fiber becomes approximately perpendicular to the plane in which the wavelength selecting elements are aligned; and
one or more deflection element for bending the direction of the optical axis of transmitting light, which are placed so as to face the first and second optical fibers, wherein
the first optical fiber is coupled to light having plurality of wavelengths that diagonally enters into or is emitted from the optical guiding means via the deflection element, and the second optical fibers are respectively coupled to light having respective wavelengths that diagonally enters into or is emitted from the optical guiding means via the deflection elements.

4. The optical multiplexer/demultiplexer according to Claim 3, wherein the deflection element is joined to and integrated with an end surface of the optical fiber array.

5. The optical multiplexer/demultiplexer according to Claim 3, wherein the optical guiding means, the deflection element and the optical fiber array are contained within a case so as to be sealed.

6. An optical multiplexer/demultiplexer, comprising:
an optical guiding means which is made of a light reflecting surface and plurality of wavelength selecting elements which are aligned in a plane that is parallel to the light reflecting surface, and of which the transmission wavelength bands are different from each other, which guides light by making light be reflected between the light reflecting surface and the respective wavelength selecting elements, and which multiplexes or demultiplexes light having different wavelengths;
a transmission means for transmitting light having plurality of wavelengths of which the optical axis is placed so as to be approximately perpendicular to the plane in which the wavelength selecting elements are aligned;
plurality of light emitting elements for respectively outputting light having particular wavelengths of which the optical axes are placed so as to be approximately perpendicular to the plane in which the wavelength selecting elements are aligned; and
one or more deflection element for bending the direction of the optical axis of transmitting light which is placed so as to face the transmission means and the light emitting elements, wherein
the transmission means is coupled to light having plurality of wavelengths that is diagonally emitted from the optical guiding means via the deflection element, and the light emitting elements emit light having respective wavelengths via the deflection element so that light diagonally enters into the optical guiding means.

7. An optical multiplexer/demultiplexer, comprising:
an optical guiding means which is made of a light reflecting surface and plurality of wavelength selecting elements which are aligned in a plane that is parallel to the light reflecting surface, and of which the transmission wavelengths are different from each other, which guides light by making light be reflected between the light reflecting surface and the respective wavelength selecting elements, and which multiplexes or demultiplexes light having different wavelengths;
a transmission means for transmitting light having plurality of wavelengths of which the optical axis is placed so as to be approximately perpendicular to the plane in which the wavelength selecting elements are aligned;
plurality of light receiving elements of which the optical axes are placed so as to be approximately perpendicular to the plane in which the wavelength selecting elements are aligned; and
one or more deflection element for bending the direction of the optical axis of transmitting light which is placed so as to face the transmission means and the light receiving element, wherein
the transmission means is coupled to light having plurality of wavelengths that diagonally enters into the optical guiding means via the deflection element and the light receiving elements respectively receive light having respective wavelengths that is diagonally emitted from the optical guiding means via the deflection element.

8. An optical multiplexer/demultiplexer, comprising:
an optical guiding means which is made of a light reflecting surface and plurality of wavelength selecting elements which are aligned in a plane that is parallel to the light reflecting surface, and of which the transmission wavelengths are different from each other, which guides light by making light be reflected between the light reflecting surface and the respective wavelength selecting elements and which multiplexes or demultiplexes light having different wavelengths;
plurality of light inputting means of which the optical axes are placed so as to be approximately perpendicular to the plane in which the wavelength selecting elements are aligned;
a first transmission means for transmitting light having plurality of wavelengths which is placed in the direction in which the wavelength selecting elements are aligned together with the light inputting means in a manner where the optical axis becomes approximately perpendicular to the plane in which the wavelength selecting elements are aligned;
plurality of light outputting means of which the optical axes are placed so as to be approximately perpendicular to the plane in which the wavelength selecting elements are aligned;
a second transmission means for transmitting light having plurality of wavelengths which is placed in the direction in which the wavelength selecting elements are aligned together with the light outputting means in a manner where the optical axis becomes approximately perpendicular to the plane in which the wavelength selecting elements are aligned and becomes approximately parallel to the direction in which the light inputting means and the first transmission means are aligned;
one or more first deflection element for bending the direction of the optical axis of transmitting light which is placed so as to face the light inputting means and the first transmission means; and
one or more second deflection element for bending the direction of the optical axis of transmitting light which is placed so as to face the light outputting means and the second transmission means, wherein
the light inputting means emits light having each wavelength from among light having plurality of wavelengths via the deflection element so that the light diagonally enters into the optical guiding means and the first transmission means is coupled to the light having plurality of wavelengths that is diagonally emitted from the optical guiding means via the deflection element, and
the second transmission means is coupled to another light having plurality of wavelengths that diagonally enters into the optical guiding means via the second deflection element and the light outputting means receives light having each wavelength from among the other light having plurality of wavelengths that is diagonally emitted from the optical guiding means via the second deflection element.

9. The optical multiplexer/demultiplexer according to Claim 8, wherein
the light having plurality of wavelengths and the other light having plurality of wavelengths are light having plurality of same wavelengths, and
the lengths of the light paths of the light having plurality of wavelengths between the second transmission means and the light outputting means becomes shorter sequentially in order from longest to shortest of the lengths of light paths between the first transmission means and the light inputting means.

10. An optical multiplexer/demultiplexer, comprising:
an optical guiding means which is made of a light reflecting surface, plurality of first wavelength selecting elements which are aligned in a plane that is parallel to the light reflecting surface, and of which the transmission wavelengths are different from each other and plurality of second wavelength selecting elements which are aligned in a plane that is parallel to the light reflecting surface, and of which the transmission wavelengths are different from each other, which guides light by making the light be reflected between the light reflecting surface and the respective first wavelength selecting elements and multiplexes light having different wavelengths and which guides light by making the light be reflected between the light reflecting surface and the respective second wavelength selecting elements and demultiplexes light having different wavelengths;
a transmission means for transmitting light having plurality of wavelengths;
plurality of light inputting means which are placed in the direction in which the first wavelength selecting elements are aligned in a manner wherein the optical axes become approximately perpendicular to the plane where the first wavelength selecting elements are aligned;
plurality of light outputting means which are placed in the direction in which the second wavelength selecting elements are aligned in a manner wherein the optical axes become approximately perpendicular to the plane where the second wavelength selecting elements are aligned;
one or more first deflection element for bending the direction of the optical axis of transmitting light which is placed so as to face the light inputting means;
one or more second deflection element for bending the direction of the optical axis of transmitting light which is placed so as to face the light outputting means; and
a light branching means which guides light having plurality of wavelengths that has been multiplexed between the light reflecting surface of the optical guiding means and the first wavelength selecting elements to the transmission means so that the light is coupled to the transmission means and which guides another light having plurality of wavelengths that has been transmitted through the transmission means in between the light reflecting surface of the optical guiding means and the second wavelength selecting elements, wherein
the light inputting means respectively emit light having each wavelength from among light having plurality of wavelengths via the first deflection element so that the light diagonally enters into the first wavelength selecting elements of the optical guiding means, and
the light outputting means respectively receive light having each wavelength from among another light having plurality of wavelengths that has been diagonally emitted from the second wavelength selecting elements of the optical guiding means via the second deflection element.

11. The optical multiplexer/demultiplexer according to Claim 10, wherein the light branching means comprises:
a filter for multiplexing and demultiplexing the light having plurality of wavelengths that is sent from the transmission means and the other light having plurality of wavelengths that is sent from the transmission means; and
at least one light transferring means of a light transferring means such as an optical fiber, a core, a prism or a mirror for guiding light having plurality of wavelengths that has been multiplexed between the light reflecting surface of the optical guiding means and the first wavelength selecting elements to the transmission means, and a light transferring means such as an optical fiber, a core, a prism or a mirror for guiding the other light having plurality of wavelengths that has been separated by the filter to the second wavelength selecting elements of the optical guiding means.

12. The optical multiplexer/demultiplexer according to Claim 10, wherein the transmission means is formed of an optical fiber, the light inputting means are formed of light emitting elements and the light outputting means are formed of light receiving elements.

13. An optical multiplexer/demultiplexer, comprising:
an optical guiding means which is made of a light reflecting surface and plurality of first wavelength selecting elements which are aligned in a plane that is parallel to the light reflecting surface, and of which the transmission wavelengths are different from each other, which guides light by making light be reflected between the light reflecting surface and the respective first wavelength selecting elements and which multiplexes light having different wavelengths;
an optical guiding plate which is placed so as to face the surface of the optical guiding means on the side opposite the light reflecting surface and so as to become approximately parallel to the first wavelength selecting elements;
a transmission means for transmitting light having plurality of wavelengths;
plurality of light emitting elements which are placed on the optical guiding plate in the direction in which the first wavelength selecting elements are aligned in a manner where the optical axes of the light emitting elements are directed in the direction approximately perpendicular to the optical guiding plate;
a light receiving element which is placed on the optical guiding plate in a manner where the optical axis of the light receiving element is directed in the direction approximately perpendicular to the optical guiding plate;
one or more deflection element for bending the direction of the optical axis of transmitting light which is placed so as to face the light emitting elements;
plurality of second wavelength selecting elements which are provided between the light receiving element and the optical guiding plate and of which the transmission wavelengths are different from each other; and
a light branching means which guides light having plurality of wavelengths that has been multiplexed between the light reflecting surface of the optical guiding means and the wavelength selecting elements to the transmission means so that the light is coupled to the transmission means and which guides another light having plurality of wavelengths that has been transmitted through the transmission means to the optical guiding plate, wherein
the light emitting elements respectively emit light of each wavelength from among light having plurality of wavelengths via the first deflection element so that the light diagonally enters into the first wavelength selecting elements of the optical guiding means, and
the light outputting means respectively receive light having each wavelength from among another light having plurality of wavelengths that has been guided within the optical guiding plate via the second deflection element.

14. The optical multiplexer/demultiplexer according to Claim 1, 3, 6, 7, 8, 10 or 13, wherein the optical guiding means has the respective wavelength selecting elements formed on the front surface of a transparent substrate and the light reflecting surface formed on the rear surface of the transparent substrate.

15. The optical multiplexer/demultiplexer according to Claim 1, 3, 6, 7, 8, 10 or 13, wherein the optical guiding means has a transparent second substrate where plurality of the wavelength selecting elements are aligned on the front surface joined to a transparent first substrate where the light reflecting surface is formed on the rear surface.

16. The optical multiplexer/demultiplexer according to Claim 1, 3, 6, 7, 8, 10 or 13, wherein the optical guiding means has plurality of transparent second substrates where the wavelength selecting elements are individually formed on the respective front surfaces aligned on and joined to a transparent first substrate where the light reflecting surface is formed on the rear surface.

17. The optical multiplexer/demultiplexer according to Claim 1, 3, 6, 7, 8, 10 or 13, wherein the optical guiding means has the respective wavelength selecting elements formed between a pair of transparent substrates that overlap and has the light reflecting surface formed on the rear surface of the substrate that is located on the rear surface side of the substrates.

18. The optical multiplexer/demultiplexer according to Claim 1, 3, 6, 7, 8, 10 or 13, wherein the surface of the optical guiding means, on which the wavelength selecting elements are formed, and the deflection element are made to face each other with a spacer intervening between the optical guiding means and the deflection element.

19. The optical multiplexer/demultiplexer according to Claim 18, wherein the spacer is formed so as to be integrated with the deflection element.

20. The optical multiplexer/demultiplexer according to Claim 1, 3, 6, 7, 8, 10 or 13, wherein the surfaces of the respective wavelength selecting elements are coated with a protective layer.

21. An optical multiplexer/demultiplexer, comprising:
an optical guiding means which is made of a light reflecting surface that is formed between a pair of transparent substrates and plurality of wavelength selecting elements which are aligned on the outer surfaces of the two transparent substrates and of which the transmission wavelengths are different from each other, and which guides light within the respective transparent substrates by making light be reflected between the light reflecting surface and the respective wavelength selecting elements;
a transmission means for transmitting light having plurality of wavelengths or wavelength bands which are placed in a manner where the optical axis becomes approximately perpendicular to the plane in which the wavelength selecting elements on one transparent substrate of the pair of transparent substrates are aligned;
plurality of first light inputting/outputting means which are placed on the same side as the transmission means relative to the optical guiding means in a manner where the optical axis becomes approximately perpendicular to the plane in which the wavelength selecting elements on the one transparent substrate are aligned;
plurality of second light inputting/outputting means which are placed on the side opposite the transmission means relative to the optical guiding means in a manner where the optical axis becomes approximately perpendicular to the plane in which the wavelength selecting elements on the other transparent substrate are aligned;
one or more first deflection element for bending the direction of the optical axis of transmitting light which is placed so as to face the transmission means and the first light inputting/outputting means; and
one or more second deflection element for bending the direction of the optical axis of transmitting light which is placed so as to face the second light inputting/outputtingmeans, wherein
the transmission means is coupled to light having plurality of wavelengths within the two transparent substrates of the optical guiding means via the first deflection element, the first light inputting/outputting means is coupled to light that transmits the respective wavelength selecting elements which are aligned on one surface of the optical guiding means via the first deflection element, and the second light inputting/outputting means is coupled to light that transmits the respective wavelength selecting elements which are aligned on the other surface of the optical guiding means via the second deflection element.

22. An optical multiplexer/demultiplexer, comprising:
an optical guiding means which is made of a light reflecting surface that is formed between a pair of transparent substrates and plurality of wavelength selecting elements which are aligned on the outer surfaces of the two transparent substrates and of which the transmission wavelengths are different from each other, and which guides light within the respective transparent substrates by making light be reflected between the light reflecting surface and the respective wavelength selecting elements;
a first optical fiber array where a first optical fiber for transmitting light having plurality of wavelengths or wavelength bands and plurality of second optical fibers for transmitting light having particular wavelengths or wavelength bands are aligned and which is placed in a manner where the optical axis of each optical fiber becomes approximately perpendicular to the plane in which the wavelength selecting elements on one transparent substrate of the pair of transparent substrates are aligned;
a second optical fiber array where plurality of third optical fibers for transmitting light having particular wavelengths or wavelength bands are aligned and which is placed in a manner where the optical axis of each optical fiber becomes approximately perpendicular to the plane in which the wavelength selecting elements on the other transparent substrate are aligned;
one or more first deflection element for bending the direction of the optical axis of transmitting light which is placed so as to face the first optical fiber and the second optical fibers; and
one or more second deflection element for bending the direction of the optical axis of transmitting light which is placed so as to face the third optical fibers, wherein
the first optical fiber is coupled to light having plurality of wavelengths within the two transparent substrates of the optical guiding means via the first deflection element, the second optical fibers are coupled to light that transmits the respective wavelength selecting elements which are aligned on one surface of the optical guiding means via the first deflection element, and the third optical fibers are coupled to light that transmits the respective wavelength selecting elements which are aligned on the other surface of the optical guiding means via the second deflection element.

23. The optical multiplexer/demultiplexer according to Claim 1, 3, 6, 7, 8, 10, 13, 21 or 22, wherein the deflection elements are formed of lenses which are not rotationally symmetrical around their center axes.

24. The optical multiplexer/demultiplexer according to Claim 1, 3, 6, 7, 8, 10, 13, 21 or 22, wherein the deflection elements are formed of spherical lenses, aspherical lenses or anamorphic lenses where the centers in the cross sections of transmitting light fluxes are shifted from their optical axes.

25. The optical multiplexer/demultiplexer according to Claim 1, 3, 6, 7, 8, 10, 13, 21 or 22, wherein the deflection elements are formed of prisms and lenses.

26. The optical multiplexer/demultiplexer according to Claim 25, wherein the prisms are formed on one surface of a transparent substrate and the lenses are provided on the other surface of the transparent substrate so as to face the prisms.

27. The optical multiplexer/demultiplexer according to Claim 25, wherein the prisms are formed on and integrated with a surface of the optical guiding means and the lenses are placed so as to face the prisms.

28. The optical multiplexer/demultiplexer according to Claim 1, 3, 6, 7, 8, 10, 13, 21 or 22, wherein the wavelength selecting elements are formed of filters or diffraction elements.

29. A manufacturing method for an optical multiplexer/demultiplexer that comprises an optical guiding means which is made of a light reflecting surface and plurality of wavelength selecting elements which are aligned in a plane that is parallel to the light reflecting surface, and of which the transmission wavelengths are different from each other, which guides light by making the light be reflected between the light reflecting surface and the respective wavelength selecting elements, and which multiplexes or demultiplexes light having plurality of wavelengths, wherein
the optical guiding means is fabricated according to:
the step of forming a wavelength selecting element layer by aligning plurality of the wavelength selecting elements in thin film form of which the transmission wavelength bands are different from each other on a transparent substrate where the light reflecting surface is formed on the rear surface; and
the step of joining another transparent substrate to the surface of the wavelength selecting element layer so as to place the wavelength selecting element layer in between the substrates that make up a pair.

30. A manufacturing method for an optical multiplexer/demultiplexer that comprises an optical guiding means which is made of a light reflecting surface and plurality of wavelength selecting elements which are aligned in a plane that is parallel to the light reflecting surface, and of which the transmission wavelengths are different from each other, which guides light by making the light be reflected between the light reflecting surface and the respective wavelength selecting elements, and which multiplexes or demultiplexes light having plurality of wavelengths, wherein
plurality of optical guiding means are fabricated by cutting a pair of parent substrates that have been layered after placing a wavelength selecting element layer that has been formed by aligning plurality of the wavelength selecting elements in thin film form of which the transmission wavelength bands are different from each other in between the parent substrates in an integrating manner.

31. A manufacturing method for an optical multiplexer/demultiplexer that comprises an optical guiding means which is made of a light reflecting surface and plurality of wavelength selecting elements which are aligned in a plane that is parallel to the light reflecting surface, and of which the transmission wavelengths are different from each other, which guides light by making the light be reflected between the light reflecting surface and the respective wavelength selecting elements, and which multiplexes or demultiplexes light having plurality of wavelengths, wherein
the optical guiding means is fabricated according to the step of forming a wavelength selecting element layer by aligning plurality of the wavelength selecting elements in thin film form of which the transmission wavelength bands are different from each other on a transparent substrate where the light reflecting surface is formed on the rear surface.

32. A manufacturing method for an optical multiplexer/demultiplexer that comprises an optical guiding means which is made of a light reflecting surface and plurality of wavelength selecting elements which are aligned in a plane that is parallel to the light reflecting surface, and of which the transmission wavelengths are different from each other, which guides light by making the light be reflected between the light reflecting surface and the respective wavelength selecting elements, and which multiplexes or demultiplexes light having plurality of wavelengths, wherein
the optical guiding means is fabricated according to:
the step of forming a wavelength selecting element layer by aligning plurality of the wavelength selecting elements in thin film form of which the transmission wavelength bands are different from each other on a transparent second substrate; and
the step of joining the second substrate to a transparent first substrate where the light reflecting surface is formed on the rear surface.

33. A manufacturing method for an optical multiplexer/demultiplexer that comprises an optical guiding means which is made of a light reflecting surface and plurality of wavelength selecting elements which are aligned in a plane that is parallel to the light reflecting surface, and of which the transmission wavelengths are different from each other, which guides light by making the light be reflected between the light reflecting surface and the respective wavelength selecting elements, and which multiplexes or demultiplexes light having plurality of wavelengths, wherein
the optical guiding means is fabricated according to:
the step of forming plurality of the wavelength selecting elements in thin film form of which the transmission wavelength bands are different from each other on plurality of transparent second substrates, respectively; and
the step of aligning and joining plurality of the second substrates having the wavelength selecting elements of which the transmission wavelength bands are different from each other on and to a transparent first substrate where the light reflecting surface is formed on the rear surface.

34. The manufacturing method for an optical multiplexer/demultiplexer according to Claim 33, wherein the wavelength selecting elements of which the transmission wavelength bands are different from each other are formed on plurality of parent substrates, and the second substrates, on which the wavelength selecting elements are formed, are formed by cutting the respective parent substrates in the step of forming the wavelength selecting elements on the second substrates.

35. The manufacturing method for an optical multiplexer/demultiplexer according to Claim 33, wherein the wavelength selecting elements of which the transmission wavelength bands are different from each other are formed on plurality of parent substrates, and these parent substrates are aligned so as to be cut in a collective manner, and thereby, pairs of second substrates, where the wavelength selecting elements of which the transmission wavelength bands are different from each other are formed, are formed in the step of forming the wavelength selecting elements on the second substrates.

36. A manufacturing method for an optical multiplexer/demultiplexer that comprises an optical guiding means for guiding light by making the light be reflected between a light reflecting surface and plurality of wavelength selecting elements of which the transmission wavelengths are different from each other and for multiplexing/demultiplexing light having plurality of wavelengths, wherein the respective wavelength selecting elements are placed between a first substrate where the light reflecting surface is formed on the rear surface and a second substrate where plurality of prisms that become deflection elements are formed on the front surface, comprising:
the step of layering plurality of plates and of processing the end surfaces of the layered plates so that the end surfaces become of plane form that incline relative to the direction in which the plates are layered;
the step of realigning the plates and thereby of forming an inverted pattern of plurality of the prisms from an array of the inclining end surfaces; and
the step of forming the prisms on the front surface of the second substrate by using the realigned plates as at least a portion of a die.
